# EUROPEAN PATENT APPLICATION

(11) **EP 4 818 795 A2**
(43) Date of publication of application: **07.10.2026**
(21) Application number: 26182984.0
(22) Date of filing: 26.06.2020
(51) Int. Cl.: G02C 7/06

(54) **OPHTHALMIC LENSES AND METHODS FOR CORRECTING, SLOWING, REDUCING, AND/OR CONTROLLING THE PROGRESSION OF MYOPIA**

(30) Priority: 28.06.2019 US 201962868348 P; 06.09.2019 US 201962896920 P
(62) Document number(s) of the earlier application(s) in accordance with Art. 76 EPC: 20833233.8 / 3 990 977
(71) Applicant: Brien Holden Vision Institute Limited, Sydney, New South Wales 2052 (AU)
(72) Inventor: SANKARIDURG, Padmaja, Maroubra, New South Wales, 2035 (AU); BACK, Arthur, Danville, California, 94526 (US); HO, Arthur, Matraville, New South Wales, 2036 (AU); ESFANDIARIJAHROMI, Hassan, Campsie, New South Wales, 2194 (AU); FEDTKE, Cathleen, Casula, New South Wales, 2170 (AU)
(74) Representative: Holzwarth-Rochford, Andreas

(57) **Abstract**

An ophthalmic lens comprising a base lens configured to direct light to a first image plane; and a plurality of light modulating cells. One or more of the plurality of light modulating cells refract light to a second image plane different from the first image plane and/or one or more of a plurality of light modulating cells refract light to a third image plane different from the first and second image planes. In some embodiments, at least one of the plurality of light modulating cells is configured to refract light to at least two (e.g., 2, 3, or 4) image planes, different from the first image plane.

## Description

### CROSS-REFERENCE TO RELATED APPLICATIONS

This disclosure claims priority to U.S. Provisional Application No. 62/868,348, filed on June 28, 2019 and U.S. Provisional Application No. 62/896,920, filed September 6, 2019. This application is also related to International Application No. PCT/AU2017/051173, filed October 25, 2017, which claims priority to U.S. Provisional Application No. 62/412,507, filed on October 25, 2016. Each of these priority applications and related applications are herein incorporated by reference in their entirety.

### TECHNICAL FIELD

This disclosure relates to ophthalmic lenses and more particularly, to ophthalmic lenses and methods for correcting, slowing, reducing, and/or controlling the progression of myopia.

### BACKGROUND

The discussion of the background in this disclosure is included to explain the context of the disclosed embodiments. This is not to be taken as an admission that the material referred to was published, known or part of the common general knowledge at the priority date of the embodiments and claims presented in this disclosure.

Myopia, commonly referred to as shortsightedness, is a disorder of the eye that results in distant objects focused in front of the retina. Accordingly, the image on the retina is not in focus and therefore, the image of the object is blurred. Optical correction strategies for myopia have employed using ophthalmic lenses to shift the image plane to the retina and provide clear vision. However, these strategies do not slow eye growth and therefore myopia continues to progress. There now exist a number of optical correction strategies that are designed to slow or arrest or control the progression of myopia and these commonly employ myopic defocus, whilst attempting to simultaneously provide clear vision at the retina. These strategies have been found to slow progression to a certain extent.

Considering a natural scene imaged by the eye, the scene comprises elements that are in-focus as well as elements that are in myopic as well as hyperopic defocus. The extent and magnitude of such in-focus and out-of-focus elements vary from scene-to-scene. Therefore, in the eye, regions of the retina are exposed to competing optical signals arising from the in-focus and out-of-focus images. The out-of-focus images are likely to be both in hyperopic as well as myopic defocus. Such competing focus/defocus signals may be influential to guide the eye to emmetropisation - as in animal models, introduction of just myopic or hyperopic defocus disrupts emmetropisation. Similarly, correcting a myopic eye with a device with an uniform power does not slow eye growth. Therefore, incorporation of elements that direct or shift light to multiple planes may result in competing signals at the retina and may provide cues to slow and/or arrest the growth of the eye.

Accordingly, there is a need to provide competing defocus signals at the retina by directing light to be shifted to multiple planes and therefore provide a slow and/or stop signal for eye growth. The present disclosure is directed to solving these and other problems disclosed herein. The present disclosure is also directed to pointing out one or more advantages to using exemplary ophthalmic lenses and methods described herein.

### SUMMARY

The present disclosure is directed to overcoming and/or ameliorating one or more of the problems described herein.

The present disclosure is directed, at least in part, to ophthalmic lenses and/or methods for correcting, slowing, reducing, and/or controlling the progression of myopia.

The present disclosure is directed, at least in part, to ophthalmic lenses and/or methods for utilizing a plurality of light modulating cells for correcting, slowing, reducing, and/or controlling the progression of eye growth by directing or shifting light to multiple planes.

The present disclosure is directed, at least in part, to ophthalmic lenses and/or methods that direct incident light to be directed to more than one image plane (e.g., 2 or more image planes or 3 or more image planes).

The present disclosure is directed, at least in part, to ophthalmic lenses and/or methods that utilize a plurality of light modulating cells and the base lens to direct incident light at more than one image plane (e.g., 2 or more image planes or 3 or more image planes).

The present disclosure is directed, at least in part, to an ophthalmic lens comprising a base lens; and a plurality of light modulating cells wherein, the base lens directs light to a first image plane and at least one or more of the plurality of light modulating cells direct light to a second image plane (e.g., one or more second image planes).

The present disclosure is directed, at least in part, to an ophthalmic lens comprising a base lens; and a plurality of light modulating cells wherein, the base lens directs light to a first image plane and at least one or more of the plurality of light modulating cells direct light to a second image plane (e.g., one or more second image planes) that is anterior relative to first image plane.

The present disclosure is directed, at least in part, to an ophthalmic lens comprising a base lens; and a plurality of light modulating cells wherein, the base lens directs light to a first image plane and at least one or more of the plurality of light modulating cells direct light to a second image plane (e.g., one or more second image planes) that is posterior relative to first image plane.

The present disclosure is directed, at least in part, to an ophthalmic lens with a base lens; and a plurality of light modulating cells wherein, the base lens directs light to a first image plane and at least one or more of the plurality of light modulating cells direct light to a second image plane (e.g., one or more second image planes) and at least one or more of the plurality of light modulating cells direct light to a third image plane (e.g., one or more third image planes).

The present disclosure is directed, at least in part, to an ophthalmic lens with a base lens; and a plurality of light modulating cells wherein, the base lens directs light to a first image plane and at least one or more of the plurality of light modulating cells direct light to a second image plane (e.g., one or more second image planes) that is anterior relative to first image plane and at least one or more of the plurality of light modulating cells direct light to a third image plane (e.g., one or more third image planes) that is more anterior relative to the first and second image planes.

The present disclosure is directed, at least in part, to an ophthalmic lens with a base lens; and a plurality of light modulating cells wherein, the base lens directs light to a first image plane and at least one or more of the plurality of light modulating cells direct light to a second image plane (e.g., one or more second image planes) that is anterior relative to first image plane and at least one or more of the plurality of light modulating cells direct light to a third image plane (e.g., one or more third image planes) that is posterior relative to first image plane.

The present disclosure is directed, at least in part, to an ophthalmic lens with a base lens; and a plurality of light modulating cells wherein, the base lens directs light to two or more image planes and the plurality of light modulating cells direct light to one or more image planes (e.g., one or more image planes different from the two or more image planes associated with the base lens).

The present disclosure is directed, at least in part, to an ophthalmic lens comprising a base lens with a first power; and a plurality of light modulating cells wherein, one or more of the light modulating cells are myopic relative to the first power and one or more of the light modulating cells are hyperopic relative to the first power.

The present disclosure is directed, at least in part, to an ophthalmic lens comprising a base lens with a first power and a second power; and a plurality of light modulating cells located on the base lens with the second power wherein, the one or more of the light modulating cells are myopic relative to the first and second power and one or more of the light modulating cells are hyperopic relative to the first and second power.

The present disclosure is directed, at least in part, to an ophthalmic lens comprising a base lens with a first power; a plurality of light modulating cells located on the base lens with a second power, and an envelope zone surrounding the plurality of light modulating cells with a third power wherein, the one or more of the light modulating cells are myopic relative to the first and third power and one or more of the light modulating cells are hyperopic relative to the first and third power.

The present disclosure is directed, at least in part, to an ophthalmic lens comprising a base lens with a first power; and a plurality of light modulating cells wherein one or more of the plurality of light modulating cells has a second power and at least one or more of the plurality of light modulating cells has a third power, wherein the portion of the ophthalmic lens with the first power directs incident light to a first image plane and the light modulating cells with the second power direct light to a second image plane that is myopically defocused relative to the first image plane and the light modulating cells with the third power direct light a third image plane that is hyperopically defocused relative to the first image plane.

The present disclosure is directed, at least in part, to an ophthalmic lens comprising a base lens with a first power; and a plurality of light modulating cells wherein one or more of the plurality of light modulating cells have a second power, third power and a fourth power, wherein the portion of the ophthalmic lens with the first power directs incident light to a first image plane and the light modulating cells with the second power and third power direct light a second and third image plane that is myopically defocused relative to the first image plane and the light modulating cells with the fourth power direct light to a fourth image plane that is hyperopically defocused relative to the first image plane.

The present disclosure is directed, at least in part, to an ophthalmic lens comprising a base lens with a first power; and a plurality of light modulating cells wherein one or more of the plurality of light modulating cells have a second power, third power and a fourth power, wherein the portion of the ophthalmic lens with the first power directs incident light to a first image plane and the light modulating cells with the second power direct light to a second image plane that is myopically defocused relative to the first image plane and the light modulating cells with the third and fourth power direct light to a third and fourth image plane that is hyperopically defocused relative to the first image plane.

The present disclosure is directed, at least in part, to an ophthalmic lens for an eye with a refractive error comprising a base lens with a first power; and a plurality of light modulating cells wherein one or more of the plurality of light modulating cells has a second power and at least one or more of the plurality of light modulating cells has a third power, wherein the portion of the ophthalmic lens with the first power directs incident light to a first image plane to correct for the refractive error of the eye and the light modulating cells with the second power direct light to a second image plane that is myopically defocused relative to the first image plane and the light modulating cells with the third power direct light to a third image plane that is hyperopically defocused relative to the first image plane.

The present disclosure is directed, at least in part, to an ophthalmic lens for an eye with a refractive error comprising a base lens and a plurality of light modulating cells; the base lens comprises a central and peripheral optical zone with the power of the peripheral optical zone being more positive than the central optical zone; wherein one or more of the light modulating cells located on the peripheral optical zone have a power that is more positive than the peripheral optical zone power and one or more of the light modulating cells located on the peripheral optical zone have a power that is more negative than the peripheral optical zone power.

The present disclosure is directed, at least in part, to ophthalmic lenses/and/or methods that utilize one or more multifocal light modulating cells to direct incident light at more than one image plane.

The present disclosure is directed, at least in part, to an ophthalmic lens comprising a base lens; and one or more multifocal light modulating cells wherein, the base lens directs light to a first image plane and the one or more of the multifocal light modulating cells direct light to at least a second and a third image plane.

The present disclosure is directed, at least in part, to an ophthalmic lens comprising a base lens; and one or more multifocal light modulating cells wherein, the base lens comprises a first power and a portion of the one or more multifocal light modulating cells comprise at least a second power and a portion of the one or more multifocal light modulating cells comprise at least a third power.

The present disclosure is directed, at least in part, to an ophthalmic lens comprising a base lens with one or more powers; and a plurality of light modulating cells wherein, one or more of the light modulating cells are multifocal light modulating cells (i.e., they have more than one focal length).

The present disclosure is directed, at least in part, to an ophthalmic lens comprising a base lens with a first focal length; and a plurality of multifocal light modulating cells wherein a first portion of the one or more multifocal light modulating cells have a second focal length and a second portion of the one or more multifocal light modulating cells have a third focal length.

The present disclosure is directed, at least in part, to an ophthalmic lens comprising a base lens with a first focal power; and a plurality of multifocal light modulating cells wherein a portion of the multifocal light modulating cells directs light that is anterior relative to the first power and another portion of the multifocal light modulating cells directs light that is posterior relative to the first power.

The present disclosure is directed, at least in part, to an ophthalmic lens comprising a base lens with one or more powers; and a plurality of light modulating cells wherein one or more of the light modulating cells are substantially uniform in power and one or more of the multifocal light modulating cells have variable power.

The present disclosure is directed, at least in part, to an ophthalmic lens comprising a base lens with a first power; and a plurality of light modulating cells wherein, one or more of the light modulating cells (e.g., multifocal light modulating cells) has a variable power that is a graduated power, or a progressive power (e.g., the light modulating cells have more than one focal length wherein the multiple focal lengths gradually transitions or varies from a focal length to another focal length; or the focal length varies across one of more regions of a light modulating cell).

The present disclosure is directed, at least in part, to an ophthalmic lens comprising a base lens with a first power; and a plurality of light modulating cells wherein the power of one or more of the light modulating cells (e.g., multifocal light modulating cells) comprises astigmatic power (for example, may have one or more cylindrical or toric surfaces to provide different powers along different axes or meridians).

The present disclosure is directed, at least in part, to an ophthalmic lens comprising a base lens with a first power; and a plurality of light modulating cells wherein the power of one or more of the light modulating cells (e.g., multifocal light modulating cells) comprises one or more astigmatic powers, whereby the axes (or meridians) of the one or more astigmatic powers may be aligned radially, and/or circumferentially, and/or vertically, and/or horizontally, and/or obliquely, and/or in a random or quazi-random, and/or pseudo-random arrangement.

The present disclosure is directed, at least in part, to an ophthalmic lens comprising a base lens with a first power; and a plurality of light modulating cells wherein the power of one or more of the light modulating cells(e.g., multifocal light modulating cells) comprises one or more combinations of a higher-order aberration (e.g. spherical aberration, coma, trefoil, quadrifoil, higher-order astigmatism, etc.).

The present disclosure is directed, at least in part, to an ophthalmic lens comprising a base lens with a first power; and a plurality of light modulating cells wherein the power of one or more of the light modulating cells (e.g., multifocal light modulating cells) comprises one or more combinations of a higher-order aberration, whereby the axes or meridians of one or more non-rotationally symmetrical higher-order aberrations (e.g. coma, trefoil) may be aligned radially, and/or circumferentially, and/or vertically, and/or horizontally, and/or obliquely, and/or in a random or quazi-random, and/or pseudo-random arrangement.

The present disclosure is directed, at least in part, to an ophthalmic lens comprising a base lens with a first focal power, and a plurality of light modulating cells wherein one or more of the light modulating cells have a focal power that is myopic relative to the first power and one or more light modulating cells have a focal power that is hyperopic relative to the first power.

The present disclosure is directed, at least in part, to an ophthalmic lens comprising a base lens with a first focal power, and a plurality of light modulating cells wherein one or more of the light modulating cells have a focal power that is either myopic or hyperopic relative to the first power and one or more of the light modulating cells are multifocal light modulating cells that have a variable power relative to the first power.

The present disclosure is directed, at least in part, to an ophthalmic lens comprising a base lens with a first power, one or more light modulating cells with power that is myopic relative to first power; and one or more light modulating cells with power that is hyperopic relative to first power, wherein the base lens with first power directs incident light to focus at a first image plane, the one or more light modulating cells with power that is more myopic relative to first power direct light to one or more image planes that are hyperopically defocused relative to first image plane and one or more light modulating cells with power that is more hyperopic relative to first power that direct light to one or more image planes that are myopically defocused relative to first image plane.

The present disclosure is directed, at least in part, to an ophthalmic lens comprising a base lens with a first power, one or more light modulating cells with power that is myopic relative to the first power; one or more light modulating cells with power that is hyperopic relative to the first power, and one or more multifocal light modulating cells with a variable power, wherein the base lens with first power directs incident light to a first image plane, the one or more light modulating cells with power that is more myopic relative to first power direct light to one or more image planes that are hyperopically defocused relative to first image plane, the one or more light modulating cells with power that is more hyperopic relative to first power that direct light to one or more image planes that are myopically defocused relative to first image plane, and the one or more multifocal light modulating cells direct light to one or more image planes.

The present disclosure is directed, at least in part, to an ophthalmic lens to correct the refractive error of an eye comprising a base lens with a first power, one or more light modulating cells with power that is myopic relative to the first power; one or more light modulating cells with power that is hyperopic relative to the first power, and one or more multifocal light modulating cells with a variable power, wherein the base lens with first power directs incident light to a first image plane to correct for the refractive error of the eye, the one or more light modulating cells with power that is more myopic relative to first power direct light to one or more image planes that are hyperopically defocused relative to first image plane, the one or more light modulating cells with power that is more hyperopic relative to first power that direct light to one or more image planes that are myopically defocused relative to first image plane, and the one or more multifocal light modulating cells direct light to one or more image planes.

The present disclosure is directed, at least in part, to an ophthalmic lens comprising a base lens with two or more meridians comprising two or more meridional powers, one or more light modulating cells with power that is myopic relative to the one meridional power; one or more light modulating cells with power that is hyperopic relative to the one meridional power, wherein the base lens with two or more meridional powers directs incident light to the two or more meridional planes, the one or more light modulating cells with power that is more myopic relative to first power direct light to focus at an image plane that is hyperopically defocused relative to the one meridional plane, the one or more light modulating cells with power that is more hyperopic relative to first power that directs light to an image plane that is myopically defocused relative to the one meridional plane.

The present disclosure is directed, at least in part, to ophthalmic lenses and/or methods that utilize a base lens and one or more light modulating cells that (individually and/or collectively) result in a through focus light distribution that is spread across more than one image plane (e.g., 2 or more image planes or 3 or more image planes, 2 or more image planes or 3 or more image planes, 4 or more image planes or 5 or more image planes, 6 or more image planes or 7 or more image planes, 8 or more image planes or 9 or more image planes, 10 or more image planes).

The present disclosure is directed, at least in part, to ophthalmic lenses and/or methods that utilize a base lens and one or more light modulating cells that (individually and/or collectively) result in a through focus light distribution that results in an extended depth of focus.

The present disclosure is directed, at least in part, to ophthalmic lenses and/or methods that utilize a base lens and a plurality of light modulating cells in one or more zones on the base lens, wherein the size, cell-to-cell spacing, sagittal height, curvature, power and geometrical fill factor of the one or more light modulating cells on the base lens results for light transmitted through the one or more light modulating cell zone, a through focus light distribution of incident light wherein a proportion of the light is directed to the image plane, a proportion of light is in myopic defocus relative to the image plane and a proportion of light is in hyperopic defocus relative to the image plane.

The present disclosure is directed, at least in part, to ophthalmic lenses and/or methods that utilize a base lens and a plurality of light modulating cells that (individually and/or collectively) in one or more zones on the base lens, to result for light transmitted through the one or more light modulating cell zone, a through focus light distribution that is directed to the image plane, anterior to the image plane and/or posterior to the image plane.

The present disclosure is directed, at least in part, to ophthalmic lenses and/or methods that utilize a base lens and a plurality of light modulating cells in one or more zones on the base lens that are relatively more positive than the base lens to result for light transmitted through the one or more light modulating cell zone, a through focus light distribution that is directed to the image plane, anterior to the image plane and/or posterior to the image plane.

The present disclosure is directed, at least in part, to ophthalmic lenses and/or methods that utilize a base lens and a plurality of light modulating cells that are relatively more positive than the base lens in one or more zones on the base lens to result for light transmitted through the one or more light modulating cell zone, a through focus light distribution that is directed to the image plane and one or more planes anterior to the image plane.

The present disclosure is directed, at least in part, to ophthalmic lenses and/or methods that utilize a base lens and a plurality of light modulating cells that are relatively more negative than the base lens to result in a through focus light distribution that is directed to the image plane, anterior to the image plane and posterior to the image plane.

The present disclosure is directed, at least in part, to ophthalmic lenses and/or methods that utilize a base lens and a plurality of light modulating cells that are relatively more negative than the base lens that (individually and/or collectively)result in a through focus light distribution that is directed to the image plane and one or more planes posterior to the image plane.

Other features and advantages of the subject matter described herein will be apparent from the description and drawings, and from the claims.

### BRIEF DESCRIPTION OF THE DRAWINGS

Aspects of the embodiments described herein may be understood from the following detailed description when read with the accompanying figures.
FIG. 1 is a schematic of a single vision ophthalmic lens and an eye corrected with the spectacle lens.
FIG. 2 is a schematic of an exemplary ophthalmic lens with a base lens and light modulating cells incorporated on the lens and an eye corrected with the ophthalmic lens in accordance with some embodiments described herein.
FIG 3 is a schematic of examples of power profiles of a light modulating cell.
FIG 4 is a schematic of examples of surface profiles of a light modulating cell.
FIG 5 is a schematic of examples of a light modulated cell that phase modulates light
FIG 6 is a schematic of possible distribution of light modulating cells across the various zones of the ophthalmic lens.
FIG 7 is a table illustrating the geometrical fill factors for examples of light modulated cells on the ophthalmic lens and the resultant through focus light distribution that is in myopic defocus and in hyperopic defocus.
FIG 8 is the through focus light distribution for light incident on an ophthalmic lens comprising a plurality of light modulating cells and demonstrates the proportion of light in focus at the image plane, in front of or anterior to the image plane and behind or posterior to the image plane.
FIG 9 illustrates a power map of an ophthalmic lens with plano powered base lens and +3.50D light modulating cells.
FIG 10 is a resultant through focus light distribution for light incident on an ophthalmic lens comprising a plurality of light modulating cells with a geometrical fill factor where 75% of light is directed to the image plane and about 25% of the light is directed to the plane anterior to the image plane (myopic defocus).
FIG 11 is an embodiment of a through focus light distribution of an ophthalmic lens comprising a plurality of light modulating cells light wherein the geometric fill factor is designed to provide an asymmetric amplitude of light focus across planes anterior to and posterior to the image plane.
FIG 12 illustrates a through focus light distribution of an ophthalmic lens comprising a plurality of light modulating cells wherein the band of light distribution across planes anterior to and posterior to the image plane is considered in dioptric steps.
FIG 13 illustrates a through focus light distribution of an ophthalmic lens comprising a plurality of light modulating cells wherein the band of light distribution across planes anterior to and posterior to the image plane is considered in discrete or discontinuous dioptric steps.
FIG 14 illustrates a dependent relationship of a light modulating cell with an adjacent cell.
FIG 15. is a table listing the specifications of light modulating cells for examples 1-13
FIG. 16 is a power map of an exemplary ophthalmic lens for a myopic eye in accordance with some embodiments described herein (Example 1).
FIG. 17 is a power map of an exemplary ophthalmic lens for a myopic eye in accordance with some embodiments described herein (Example 2).
FIG. 18 is a power map of an exemplary ophthalmic lens for a myopic eye in accordance with some embodiments described herein (Example 3).
FIG. 19 is a power map of an exemplary ophthalmic lens for a myopic eye in accordance with some embodiments described herein (Example 4).
FIG. 20 shows a power map of a -2.00 D myopic lens with positive light modulating cells (light modulating cell power of +0.50D) and the geometrical blur circles.
FIG. 21 shows a power map of a -2.00 D myopic lens with negative light modulating cells (light modulating cell power of +2.00D) and the geometrical blur circles.
FIG. 22 is a power map of an exemplary ophthalmic lens for a myopic eye in accordance with some embodiments described herein (Example 5).
FIG. 23 is a power map of an exemplary ophthalmic lens for a myopic eye in accordance with some embodiments described herein (Example 6).
FIG. 24 is a power map of an exemplary ophthalmic lens for a myopic eye in accordance with some embodiments described herein (Example 7).
FIG. 25 is a power map of an exemplary ophthalmic lens for a myopic eye in accordance with some embodiments described herein (Example 8).
FIG. 26 is a power map of an exemplary ophthalmic lens for a myopic eye in accordance with some embodiments described herein (Example 9).
FIG. 27 is a power map of an exemplary ophthalmic lens for a myopic eye in accordance with some embodiments described herein (Example 10).
FIG. 28 is a power map of an exemplary ophthalmic lens for a myopic eye in accordance with some embodiments described herein (Example 11).
FIG. 29 is a power map of an exemplary ophthalmic lens for a myopic eye in accordance with some embodiments described herein (Example 12).
FIG. 30 is a schematic of an exemplary ophthalmic lens with both concave and convex light modulating cells on the front surface of the ophthalmic lens in accordance with some embodiments described herein (Example 13).
FIG. 31 is a schematic of an exemplary ophthalmic lens with multifocal light modulating cells on the front surface of the ophthalmic lens in accordance with some embodiments described herein (Example 14).
FIG. 32 is a schematic of an exemplary ophthalmic lens with multifocal light modulating cells on the front surface of the ophthalmic lens in accordance with some embodiments described herein (Example 15).
FIG. 33 is a schematic of an exemplary ophthalmic lens with multifocal light modulating cells on the front surface of the ophthalmic lens in accordance with some embodiments described herein (Example 16).
FIG. 34 is a schematic of an exemplary ophthalmic lens with both positive and negative and multifocal light modulating cells on both the front and rear surface of the ophthalmic lens in accordance with some embodiments described herein (Example 17).
FIG. 35 is a schematic of an exemplary ophthalmic lens with concave, convex and multifocal light modulating cells embedded on the lens surface of the ophthalmic lens in accordance with some embodiments described herein.
FIG. 36 is a schematic of an exemplary ophthalmic lens with concave, convex and multifocal light modulating cells embedded in the lens matrix of the ophthalmic lens in accordance with some embodiments described herein.
FIG. 37 is a magnified schematic of an exemplary ophthalmic lens with a spectacle lens concave, and convex light modulating cells on the front surface of the ophthalmic lens to illustrate light directed through the spectacle lens to multiple planes at the retina in accordance with some embodiments described herein.
FIG. 38 is a magnified schematic of an exemplary ophthalmic lens, a contact lens with concave, and convex light modulating cells on the front surface of the ophthalmic lens to illustrate light directed through the spectacle lens focused at multiple planes at the retina in accordance with some embodiments described herein.
FIG. 39 is a power map of an exemplary lens for a myopic eye in accordance with some embodiments described herein.
FIG. 40 is a power map of an exemplary lens for a myopic eye in accordance with some embodiments described herein.
FIG. 41 is a power map of an exemplary lens for a myopic eye in accordance with some embodiments described herein.
FIG. 42 is an illustration of an ophthalmic lens comprising light modulating cells wherein the focal powers of the light modulating cell is selected to place the corresponding focal plane in the vicinity of an entrance pupil of an eye.
FIG. 43 is a schematic of an exemplary lens for a myopic eye in accordance with some embodiments described herein.
FIG. 44 is a schematic of an exemplary lens for a myopic eye in accordance with some embodiments described herein.
FIG. 45 is a schematic of an exemplary lens for a myopic eye in accordance with some embodiments described herein.

### DETAILED DESCRIPTION

The following disclosure provides many different embodiments, or examples, for implementing different features of the provided subject matter. Specific examples of components and arrangements are described below to simplify the present disclosure. These are, of course, merely examples and are not intended to be limiting. In addition, the present disclosure may repeat reference numerals and/or letters in the various examples. This repetition is for the purpose of simplicity and clarity and does not in itself dictate a relationship between the various embodiments and/or configurations discussed.

The subject headings used in the detailed description are included for the ease of reference of the reader and should not be used to limit the subject matter found throughout the disclosure or the claims. The subject headings should not be used in construing the scope of the claims or the claim limitations.

The terms "about" as used in this disclosure is to be understood to be interchangeable with the term approximate or approximately.

The term "comprise" and its derivatives (e.g., comprises, comprising) as used in this disclosure is to be taken to be inclusive of features to which it refers, and is not meant to exclude the presence of additional features unless otherwise stated or implied.

The term "myopia" or "myopic" as used in this disclosure is intended to refer to an eye that is already myopic, is pre myopic, or has a refractive condition that is progressing towards myopia.

The term "stop signal" as used in this disclosure refers to an optical signal that may facilitate slowing, arresting, retarding, inhibiting, or controlling the growth of an eye and/or refractive condition of the eye.

The term "ophthalmic lens" as used in this disclosure is intended to comprise one or more of a spectacle lens or a contact lens. In some embodiments, the ophthalmic lens may comprise a base lens. It may also comprise one or more of a film or a sheet or a coating designed to be attached to or adhered to or to be used in conjunction with the base lens.

The term "spectacle lens" as used in this disclosure is intended to include a lens blank, a semi-finished, a finished or substantially finished spectacle lens.

The term "light modulating cell" as used in this disclosure refers to a refractive or diffractive or a combination of refractive and diffractive optical element (e.g., a lenslet, a refractive lens, or Fresnel-type lens, or diffractive echelettes, diffraction grating, diffractive annuli, or a phase-modifying mask such as an amplitude mask, binary amplitude mask, phase-mask, or kinoform, or binary phase-mask, or phase-modifying surfaces such as meta-surface or nanostructures) that may be (or may be shaped as): a circle, oval, semi-circular, hexagonal, square, cylindrical or other suitable shape. The light modulating cell may be spherical, aspherical, multifocal or prismatic and the light modulating cell may range in diameter from about 20 microns to about 3 mm (e.g., about 20 microns, 50 microns, 75 microns, 100 microns, 200 microns, 250 microns, 300 microns, 400 microns, 500 microns, 600 microns, 700 microns, 750 microns, 800 microns, 900 microns, 1 mm, 1.5mm, 2mm, 2.5mm, and/or 3mm). The light modulating cell may have zero or no power, may be positive in power or negative in power and/or may have a plurality of powers. The light modulating cell may have a focal length or may have one or more focal lengths. The shape (or surface profile) of the light modulating cell may be convex, plano (e.g., flat or substantially flat), concave or maybe a combination of suitable shapes. The light modulating cell may have lower-order aberration (astigmatism). The light modulating cell may have axes of astigmatism aligned vertically, horizontally, obliquely, radially, circumferentially, and/or in random, quazi-random and/or pseudo-random arrangements. The light modulating cell may have one or combinations of more than one higher-order aberrations such as spherical aberrations, coma, trefoil, tetrafoil, etc. The light modulating cell may have axes or meridians of non-rotational higher-order aberrations (e.g. coma, trefoil, tetrafoil) aligned vertically, horizontally, obliquely, radially, circumferentially, and/or in random, quazi-random and/or pseudo-random arrangements. A light modulating cell may be composed of the same material (e.g., has the same refractive index) as the substrate of the ophthalmic lens, e.g., the base lens or may vary in material and/or refractive index relative to the substrate of the ophthalmic lens. A light modulating cell may be generated by a laser, for example, a femtosecond laser in a subtractive or localized lens material change process. A plurality of light modulating cells may be formed in conjunction with a mask to increase the efficiency of producing the light modulating cells. A light modulating cell may be formed or attached on either or both of the front or the rear surface of the base lens or embedded or interlayered in the base lens or could comprise a combination thereof (for example, one or more light modulating cells embedded in the base lens and one or more formed on one or more surfaces). A light modulating cell may be formed as part of a coating of a lens surface or transferred to the surface as part of a lens manufacturing process, for example, a molding process. A light modulating cell may be aberrated; for example, aspheric surfaces may be used in portions or entirety of a light modulating cell to introduce power variation, for example, spherical aberration or other suitable optical aberrations across the light modulating cell. The power of the light modulating cell may be determined using established techniques and/or procedures used to measure refractive power or may be calculated based on either refractive index, thickness, curvatures of the materials used or a combination thereof or calculated using other suitable material properties.

The term "multifocal" light modulating cell as used in this disclosure refers to a light modulating cell that has a plurality of focal lengths and/or powers. It may also refer to a light modulating cell that is cylindrical or astigmatic or toric. In some embodiments, a multifocal light modulating cell may be referred to as a light modulating cell with variable power.

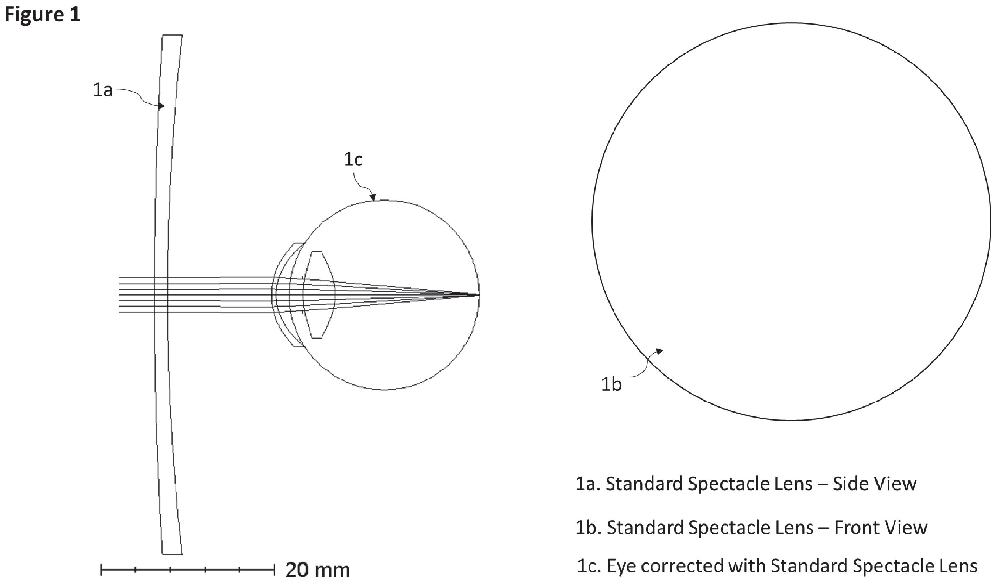

FIG. 1 is a schematic of a single vision ophthalmic lens and a myopic eye corrected with the spectacle lens. As illustrated, the ophthalmic lens (e.g., a spectacle lens) is placed in front an eye to affect the vision of the eye. In FIG. 1, the ophthalmic lens 1 (1a is a side view and 1b is a front view) has an approximately uniform power and, as can be observed by the side view of the lens 1, light passing through the ophthalmic lens 1 (e.g., a spectacle lens) comes to focus in a single image plane at or near the fovea of the eye.

Considering the image of a natural scene at the eye, the scene typically comprises elements that are in-focus as well as elements that are in myopic and hyperopic defocus. The extent and magnitude of such in-focus and out-of-focus elements vary from scene-to-scene. Therefore, in the eye, regions or portions of the retina may be exposed to competing optical signals arising from the in-focus and out-of-focus images. The out-of-focus images are likely to be both in hyperopic as well as myopic defocus. Such competing focus/defocus signals may be influential to guide the eye to emmetropisation - as in animal models, introduction of either myopic or hyperopic defocus may disrupt emmetropisation. Similarly, correcting a myopic eye with a device with an ophthalmic lens of uniform power may not slow eye growth. Therefore, incorporation of elements that direct light to multiple planes may result in competing signals at the retina and may provide cues to slow and/or arrest the growth of the eye.

Accordingly, there is a need to provide competing defocus signals at the retina by directing light to multiple planes and therefore provide a slow and/or stop signal for eye growth. In some embodiments, it may be desirable to achieve these results by attenuating the intensity of the image in focus compared to the surround. In such a situation, incident light directed to multiple planes at the retina for some of the gaze directions of an eye when the ophthalmic lens is in use may be desirable.

Therefore, in some embodiments, the ophthalmic lenses and/or method described herein may be capable of directing light to multiple planes for all or substantial percentage of gaze directions of an eye when the ophthalmic lens is used by the eye of a person. In some embodiments, a substantial percentage of gaze directions of any eye may include at least 55%, 60%, 65%, 70%, 75%, 80%, 85%, 90%, 95% or 99% of gaze positions of an eye when the ophthalmic lens is used by the eye of a person.

### Base Lens of the Ophthalmic Lens

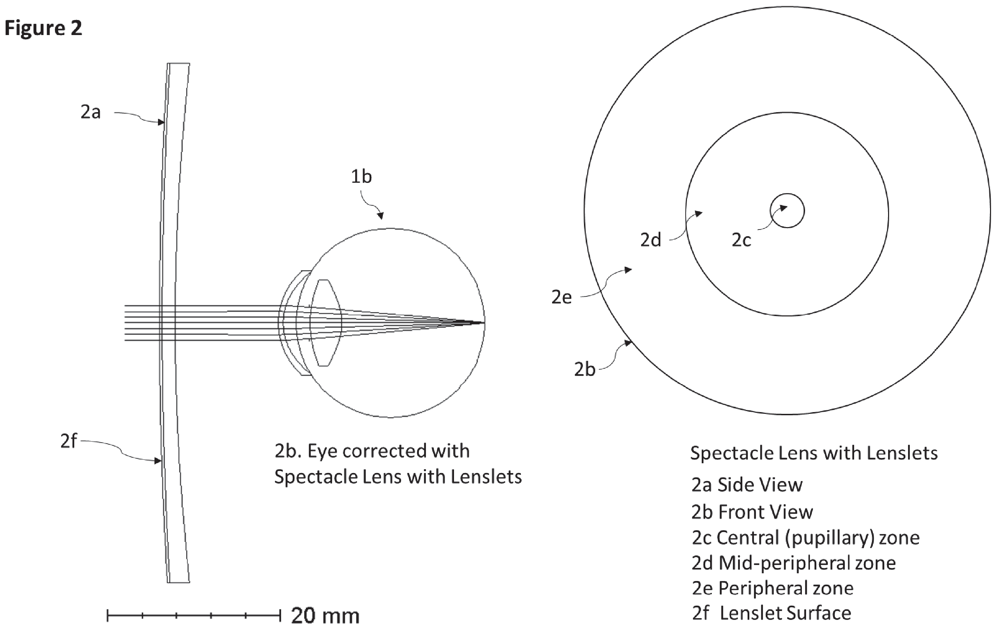

FIG. 2 is a schematic of an exemplary ophthalmic lens with a base lens and light modulating cells incorporated on the base lens and an eye corrected with the ophthalmic lens in accordance with some embodiments described herein. In FIG. 2, an ophthalmic lens 2 (e.g., a spectacle lens) (2a is a side view and 2b is a front view) comprises a plurality of light modulating cells 2f formed on the surface of the lens or embedded in the lens. The ophthalmic lens (e.g., a spectacle lens) has three optical zones - a central optical zone 2c; a mid-peripheral optical zone 2d and a peripheral optical zone 2e.

In some embodiments, the base lens of the ophthalmic lens (e.g., a spectacle lens) may comprise one or more of these three zones. In some embodiments, the ophthalmic lens may incorporate a sheet or a film or a coating that can be attached to or applied to one or more surfaces of a spectacle lens, or fitted to the front and/or rear surfaces of the base lens and/or embedded in the base lens. In some embodiments, the central optical zone of the ophthalmic lens may be circular in shape and have a radius ranging from about 1.5 mm to 5 mm. In some embodiments , the central optical zone may be non-circular in shape. In some embodiments, the optical zone may be oval or square shaped or any other suitable shape. In some embodiments, the central optical zone may be offset from the central or optical axis of the ophthalmic lens. In some embodiments, the mid-peripheral optical zone may be annular in shape or may have other suitable shape and have an inner radius of about 15 mm and an outer radius of about 15 mm. In some embodiments, the peripheral optical zone may be annular in shape or have other suitable shape and have an inner radius of about 10 mm and an outer radius of about 30 mm. In some embodiments, the substrate of the base lens may be composed of a material that is transparent or at least substantially transparent. In some embodiments, the base lens may be uniform in power across the lens or may vary in power across the lens. In some embodiments, the peripheral optical zone of the base lens may be more positive in power compared to the central and/or mid-peripheral optical zone. In some embodiments, the peripheral and mid-peripheral optical zone of the base lens may be more positive in power compared to the central optical zone. In some embodiments, the peripheral optical zone of the base lens may be more negative in power compared to the central and/or mid-peripheral optical zone. In some embodiments, the increase in positive power from central to mid-peripheral and/or peripheral zone may be stepped or may gradually increase in a monotonic or a non-monotonic manner. In some embodiments, the increase in negative power from central to mid-peripheral and/or peripheral zone may be stepped or may gradually increase in a monotonic or a non-monotonic manner. In some embodiments, the change in power from central to peripheral zone may be across the entire (or substantially the entire) base lens or may be applied to certain regions or quadrants or sections of the lens. In some embodiments, the base lens of the ophthalmic lens may incorporate a filter or may incorporate a phase- modifying mask such as an amplitude mask. In some embodiments, the filter may be applied across the entire base lens or may be applied to select regions or quadrants or sections of the lens. In some embodiments, the phase-modifying mask may be applied across the entire base lens or may be applied to select regions or quadrants or sections of the lens.

### Light Modulating Cells

In some embodiments, the ophthalmic lenses and/or methods described herein may be capable of directing light to multiple planes for all or a substantial percentage of gaze directions of an eye when the ophthalmic lens is used by the eye of a person by utilizing a combination of a base lens and a plurality of light modulating cells. The light modulating cells may be present across the entire lens or in one or more zones (regions or areas ) of the lens (referred to as light modulating zones or treatment zones). In some embodiments, the central zone of the ophthalmic lens may be devoid of light modulating cells to enable clear vision for e.g., distance vision. In some embodiments, the ophthalmic lens may comprise a base lens with one or more powers and a plurality of light modulating cells either across the entire lens or in one or more light modulating zones. In some embodiments, the ophthalmic lens may comprise a base lens with one or more powers, a plurality of light modulating cells and an envelope zone surrounding the light modulating cells. In some other embodiments, the ophthalmic lens may comprise a base lens with one or more powers, one or more concentric rings or annular zones or at least a portion of a ring or annular zone or zones with one or more powers and a plurality of light modulating cells. In some embodiments, the ophthalmic lens may comprise a base lens with a phase-modifying mask and a plurality of light modulating cells in one or more light modulating zones.

In some embodiments, the plurality of light modulating cells may be regularly or irregularly placed on the base lens and may be separated from one another or abut or overlap or overlay one another. The one or more of the light modulating cells may be positioned or packed on the base lens of the ophthalmic lens either individually or may be packed in arrays or arrangements, or in aggregates, stacks, clusters or other suitable packing arrangement (also referred to as geometrical arrangement). The individual light modulating cells or arrangements, aggregates, arrays, stacks of clusters (including e.g., conjoined, contiguous cells and/or cells that interact with or are otherwise dependent upon one another) may be positioned on the base lens in a square, hexagonal, circular, diamond, concentric, non-concentric, spiral, incomplete loop, rotationally symmetrical, rotationally asymmetrical or any other suitable arrangement (e.g., a repeating pattern corresponding to a square, hexagonal or any other suitable arrangement or any non-repeating or random arrangement) and may be centered around the geometric or optical center of the base lens or may not be centered around the geometric or optical center of the base lens. In some embodiments, the geometric center of the individual light modulating cells may be aligned with the geometric center of the array of the light modulating cells. In some embodiments, the geometric center of the individual light modulating cells may not be aligned with the geometric center of the array of the light modulating cells. In some embodiments, the geometric center of the individual light modulating cells or the geometric center of the array of the light modulating cells are off set from the center of the base lens. In some embodiments , the geometric center of an array of the light modulating cells may be aligned with the optical or geometrical center of the base lens but the individual light modulating cells may be offset from the geometric center of the array.

In some embodiments, the diameter of one or more light modulating cells in the central optical zone may be between about 20 microns and about 400 microns (e.g., between about 20-60 microns, 40-80 microns, 60-100 microns, 80-120 microns, 100-140 microns, 120-160 microns, 140-180 microns, 160-200 microns, 180-220 microns, 200-240 microns, 220-260 microns, 240-280 microns, 260-300 microns, 280-320 microns, 300-340 microns, 320-360 microns, 340-380 microns, 360-400 microns, 20-100 microns, 100-200 microns, 200-300 microns, 300-400 microns). In some embodiments, the diameter of one or more light modulating cells in the mid-peripheral optical zone may be between about 20 microns and about 1.5 mm (e.g., between about 20-100 microns, 100-200 microns, 200-300 microns, 300-400 microns, 400-500 microns, 500-600 microns, 600-700 microns, 700-800 microns, 800-900 microns, 900 microns - 1 mm, 1-1.1 mm, 1.1-1.2 mm, 1.2-1.3 mm, 1.3-1.4 mm, 1.4-1.5 mm, 1-1.5 mm, 500 microns -1 mm, 100-500 microns). In some embodiments, the diameter of the light modulating cells in the peripheral optical zone may be between about 20 microns and about 3 mms (e.g., between about 20-100 microns, 100-200 microns, 200-300 microns, 300-400 microns, 400-500 microns, 500-600 microns, 600-700 microns, 700-800 microns, 800-900 microns, 900 microns - 1 mm, 1-1.1 mm, 1.1-1.2 mm, 1.2-1.3 mm, 1.3-1.4 mm, 1.4-1.5 mm, 1.5-1.6 mm, 1.6-1.7 mm, 1.7-1.8 mm, 1.8-1.9 mm, 1.9-2 mm, 2-2.1 mm, 2.1-2.2 mm, 2.2-2.3 mm, 2.3-2.4 mm, 2.4-2.5 mm, 2.5-2.6 mm, 2.6-2.7 mm, 2.7-2.8 mm, 2.8-2.9 mm, 2.9-3 mm). In some embodiments, the ratio of the length of the longest (x) meridian or axis to the shortest meridian or axis (y) of the light modulating cell may be about 1.1, about 1.2, about 1.3, about 1.4, about 1.5, about 1.6, about 1.7, about 1.8, about 1.9 and about 2.0. In some embodiments, the diameter of the plurality of light modulating cells in a particular optical zone may be the same or substantially the same. In some embodiments, the diameter of the plurality of light modulating cells in a particular optical zone may vary between the ranges described above. In some embodiments, the sagittal depth of the light modulating lens may vary from about 20nm to about 1mm, from about 20nm to about 500µm, from about 20nm to about 400µm, from about 20nm to about 300µm, from about 20nm to about 200µm, from about 20nm to about 100µm, from about 20nm to about 50µm, from about 20nm to about 40µm, from about 20nm to about 30µm, from about 20nm to about 20µm, from about 20nm to about 10µm. In some embodiments, the sagittal difference of the light modulating cell relative to the base lens, i.e., the difference in height from either an extension or depression on the base lens may be about + 20nm to about +50µm, +20 nm to about +40µm, + 20nm to about +30µm, + 20nm to about +20µm, + 20nm to about +10µm, + 20nm to about +5µm, - 20nm to about -50µm, -20 nm to about -40µm, - 20nm to about -30µm, - 20nm to about -20µm, - 20nm to about -10µm, - 20nm to about -5µm.

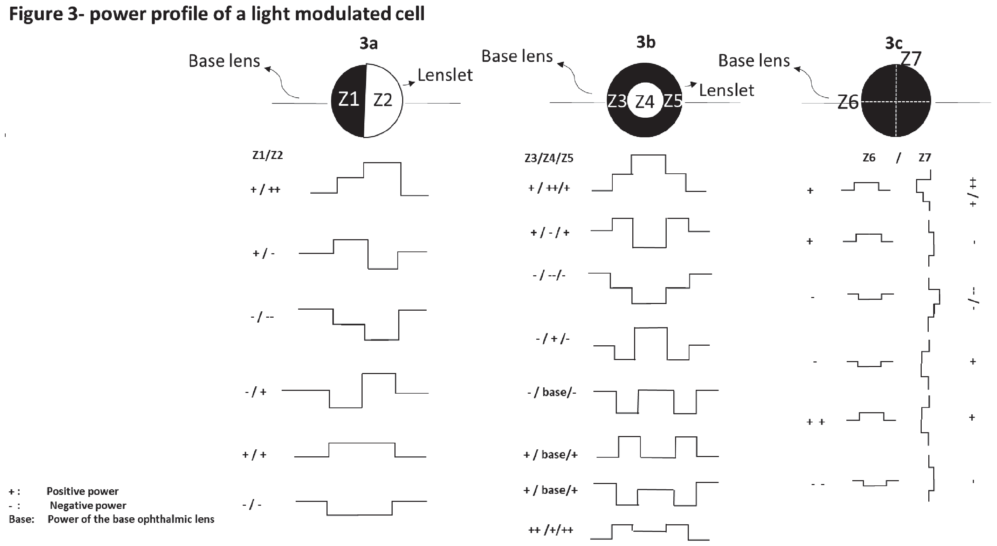

FIG 3 illustrates examples of some of the possible power profiles for exemplary light modulating cells (including, e.g., multifocal light modulating cells) that are refractive. As illustrated in example 3a, the light modulating cell may comprise two zones (e.g., Z1 and Z2) or as illustrated in 3b may comprise annular zones (e.g., a central zone Z4 surrounded by an annular zone Z3 and Z5) or may be a toric or astigmatic light modulating cell as illustrated in example 3c (e.g., Z6 referring to a horizontal meridian and Z7 referring to a vertical meridian). Other suitable arrangements may also be possible (e.g., a light modulating cell with a single zone or more than three zones). As illustrated, the distribution of the power across the light modulating cell may be substantially uniform or may vary across the light modulating cell. In some embodiments of the toric/astigmatic light modulating cells, the meridional axes may be vertical/horizontal or oblique in orientation. In some embodiments of the toric/astigmatic light modulating cells, the power along the sagittal and tangential meridians may not be uniform. In some embodiments, the light modulating cells may be substantially positively powered, may be substantially negatively powered and/or maybe a combination of positive and negative powers. In some embodiments, the substantially positively powered light modulating cells may have an uniform power to direct light to a single focus or may have variable power (multifocal) to direct light to focus at multiple planes. In some embodiments, the substantially negatively powered light modulating cells may have an uniform (e.g., substantially uniform) power to direct light to a single focus or may have variable power (multifocal) to direct light to focus at multiple planes. In some embodiments, the light modulating cells may be arranged such that either one of the principal meridians or axes or the longest meridian of the light modulating cells may be aligned parallel to one another or may be aligned radially or may be aligned circumferentially or in any suitable geometric arrangement , such as for example a triangular arrangement or a square or a rectangle or a hexagon. In some embodiments, the light modulating cell may have one or combinations of more than one higher-order aberrations such as spherical aberrations, coma, trefoil, tetrafoil, etc. to create an extended depth of focus. In some embodiments, the extended depth of focus light modulating cell may incorporate at least two primary and at least two secondary aberrations. In some embodiments, the image quality of the points of the extended focus may be about 0.4 or more (e.g., 0.35, 0.4, 0.45, etc.). or may be less than the image quality difference for two focal points defocused by 0.50D.

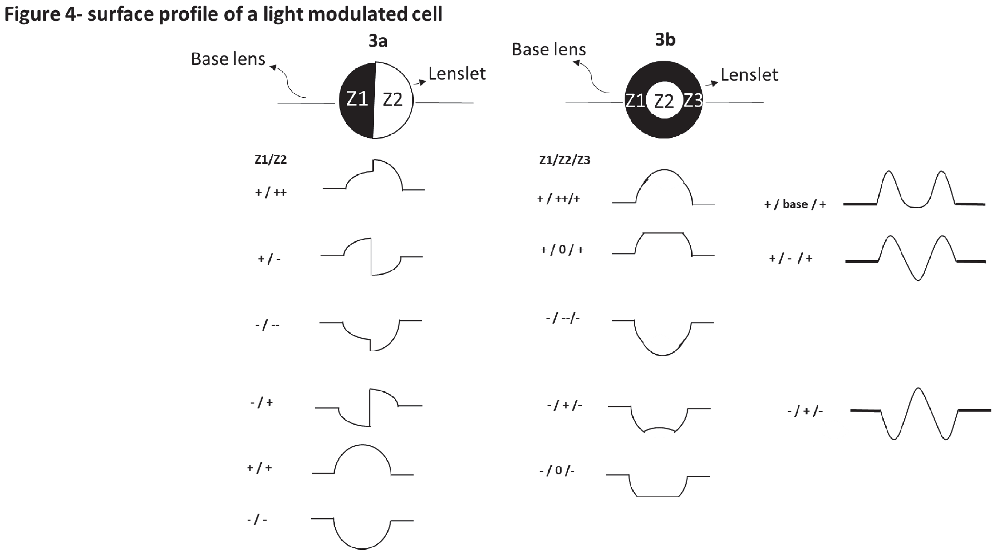

FIG 4 illustrates some of the possible surface profiles for light modulating cells 3a and 3b illustrated in FIG. 3.

In some embodiments, the power of one or more light modulating cells on the base lens may vary from about -3D to about +3D (e.g., about -3D, -2.5D, -2D, -1.5D, -1D, - 0.5D, +0.5D, +1D, +1.5D, +2D, +2.5D, +3D) in the central optical zone. In some embodiments, the power of one or more light modulating cells on the ophthalmic lens may vary from about -3D to +5D (e.g., about -3D, -2.5D, -2D, -1.5D, -1D, -0.5D, +0.5D, +1D, +1.5D, +2D, +2.5D, +3D, +3.5D, +4D, +4.5D, +5D) in the mid-peripheral optical zone. In some embodiments, the power of one or more light modulating cells on the base lens may vary from about -3D to about +5D (e.g., about -3D, -2.5D, -2D, -1.5D, -1D, -0.5D, +0.5D, +1D, +1.5D, +2D, +2.5D, +3D, +3.5D, +4D, +4.5D, +5D) in the peripheral optical zone. In some embodiments, the power of one of more multifocal light modulating cells may include more than one power ranging from about -3D to about +5D (e.g., about -3D, -2.5D, -2D, - 1.5D, -1D, -0.5D, 0.00, +0.5D, +1D, +1.5D, +2D, +2.5D, +3D, +3.5D, +4D, +4.5D, +5D).

In some embodiments, the power of one or more light modulating cells on the base lens may range from about -3D to about +3D (e.g., about -3D, -2.5D, -2D, -1.5D, -1D, - 0.5D, +0.5D, +1D, +1.5D, +2D, +2.5D, +3D) in the central optical zone. In some embodiments, the power of one or more light modulating cells on the base lens may range from about -3D to +5D (e.g., about -3D, -2.5D, -2D, -1.5D, -1D, -0.5D, +0.5D, +1D, +1.5D, +2D, +2.5D, +3D, +3.5D, +4D, +4.5D, +5D) in the mid-peripheral optical zone. In some embodiments, the power of one or more light modulating cells on the base lens may range from about -3D to about +5D (e.g., about -3D, -2.5D, -2D, -1.5D, -1D, -0.5D, +0.5D, +1D, +1.5D, +2D, +2.5D, +3D, +3.5D, +4D, +4.5D, +5D) in the peripheral optical zone. In some embodiments, the power of one of more multifocal light modulating cells may include more than one power ranging from about -3D to about +5D (e.g., about -3D, -2.5D, -2D, -1.5D, - 1D, -0.5D, 0.00, +0.5D, +1D, +1.5D, +2D, +2.5D, +3D, +3.5D, +4D, +4.5D, +5D).

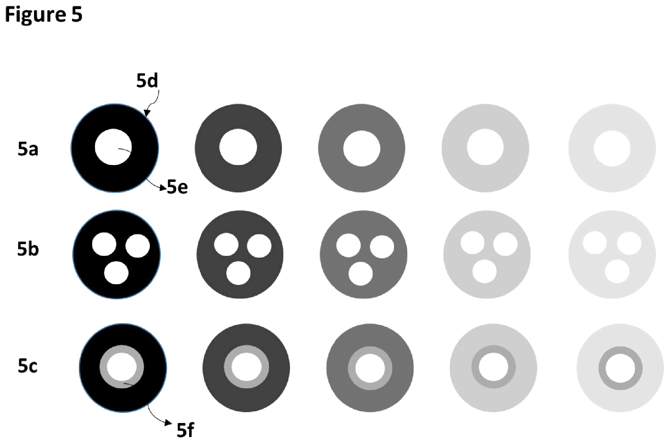

In some embodiments, the light modulating cells may comprise a phase-modifying mask such as an amplitude mask, binary amplitude mask, phase-mask, or kinoform, or binary phase-mask, or phase-modifying surfaces such as meta-surface or nanostructures. FIG 5 illustrates some examples of light modulated cells where the light phase has been modulated. Considering for example a light modulating cell, the outer region of the light modulating cell (5d) represents the region where the light phase has been modulated for example, by pi/2, pi, 3.pi/2, or between 0 and pi/2, between pi/2 and pi, between pi and 3.pi/2 or between 3.pi/2 and 2.pi; the inner white circle (5e) represents a second region of the light modulating cell for which the light phase has been modulated to be different from the phase of the first region; the intermediate grey circle (5f) represents a third region of the light modulating cell for which the light phase has been modulated to be different from the phase of the first or the second region.

In some embodiments, depending on the orientation on the base lens, and incorporation of other features comprising one or more of filters, phase-modifying masks etc., the light modulating cell that incorporates a refractive power may selectively transmit incident light that may range from about 100% to about 30%, from about 100% to about 40%, from about 100% to about 50%, from about 100% to about 60%, from about 100% to about 70%, from about 100% to about 80%, from about 100% to about 90%, from about 90% to about 50%, to greater than about 50%, greater than about 60%, greater than about 70%, greater than about 80%, greater than about 90%. In some embodiments, the light transmitting region of the light modulating cell may be the entire light modulating cell, or select portions or regions of the light modulating cell.

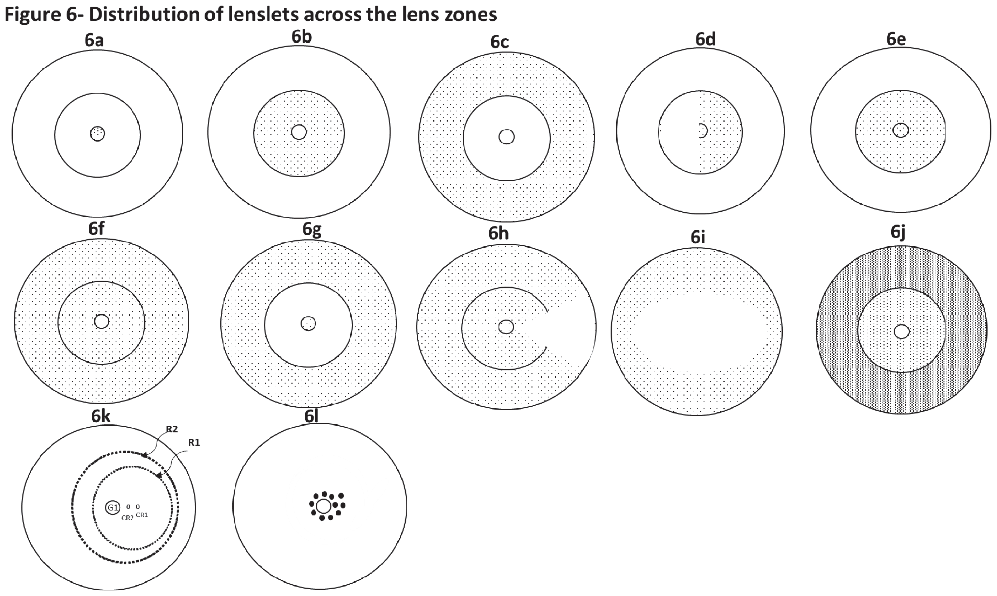

In some embodiments, the light modulating cells described herein and as illustrated in FIG 6, may be distributed across all the zones of the base lens described herein, or may be distributed across one or more zones of the base lens (light modulating zones or treatment zones). In some embodiments, the light modulating cells may be distributed across the central zone only (6a), across the mid-peripheral zone only (6b), across the peripheral zone only (6c), across the central and mid-peripheral zone only (6e), across the mid-peripheral and peripheral zone only (6f) or across the central and peripheral zone only (6g). In some embodiments, the light modulating cells may be distributed across all of one or more zones or may be limited to a quadrant or a region of the zone(s) (for example, as illustrated in FIG 6d and 6h) or may be asymmetrical in distribution (6i). The size, density per square mm and the packing arrangement of the light modulating cells may be uniform across the zones or vary across the zones. FIG 6j illustrates an example where the density of the light modulating cells is greater in the peripheral zone compared to the mid-peripheral zone. FIG. 6k illustrates an example where the light modulating cells are arranged in concentric zones but the geometric center (CR1 and CR2 ) of the rings (R1 and R2) do not align with one another or the geometric center (G1) of the base lens. FIG. 6l illustrates an example where the light modulating cells are arranged in a spiral arrangement where the last light modulating cells of the first circle is not aligned with the first modulating cell of the first loop. In other embodiments, the light modulating may be arranged in a spiral arrangement with multiple loops where the last modulating cell of the first circle may not be aligned with the first cell of the first loop, first cell of the second loop, first cell of the third loop and so on.

In some embodiments, the light modulating cells that are distributed across all the surface area of the base lens or across one or more zones of the base lens may be refractive in power and may comprise substantially negative powered light modulating cells only, substantially positive powered light modulating cells only, substantially negative powered light modulating cells only with one or more powers, substantially positive powered light modulating cells with one or more powers, substantially multifocal light modulating cells only, a combination of substantially negative powered light modulating cells with one or more powers and multifocal light modulating cells, a combination of substantially positive powered light modulating cells with one or more powers and multifocal light modulating cells, a combination of substantially positive powered light modulating cells with one or more powers and substantially negative powered light modulating cells with one or more powers, or a combination of substantially positive powered light modulating cells, negative powered light modulating cells and multifocal light modulating cells.

In some embodiments, the distribution of the substantially negative powered light modulating cells with one or more powers and substantially positive powered light modulating cells with one or more powers for each of the one or more zones of the base lens (e.g., the ratio of the number of negative power light modulating cells to positive power light modulating cells) may be about 100/0, 95/5; 90/10/, 85/15, 80/20, 75/25, 70/30, 65/35, 60/40, 55/45, 50/50, 45/55, 40/60, 35/65, 30/70, 25/75, 20/80, 15/85, 10/90, 5/95, or 0/100. In some embodiments, the distribution of the substantially negative powered light modulating cells and multifocal light modulating cells across one or more zones of the base lens (e.g., the ratio of the number of negative powered light modulating cells to multifocal light modulating cells) may be about 100/0, 95/5; 90/10/, 85/15, 80/20, 75/25, 70/30, 65/35, 60/40, 55/45, 50/50, 45/55, 40/60, 35/65, 30/70, 25/75, 20/80, 15/85, 10/90, 5/95, or 0/100. In some embodiments, the distribution of the substantially positive powered and multifocal light modulating cells across one or more zones of the base lens (e.g., the ratio of the number of positive powered light modulating cells to multifocal light modulating cells) may be about 95/5; 90/10/, 85/15, 80/20, 75/25, 70/30, 65/35, 60/40, 55/45, 50/50, 45/55, 40/60, 35/65, 30/70, 25/75, 20/80, 15/85, 10/90, 5/95, 0/100). In some embodiments, the distribution of the substantially positive powered, substantially negative powered and multifocal light modulating cells across one or more zones of the base lens (e.g., the ratio of the number of positive powered light modulating cells to negative powered to multifocal light modulating cells) may vary in equal proportions or may be unequal. In some embodiments, the distribution of the substantially positive powered, substantially negative powered, multifocal light modulating cells and light modulating cells with phase modifying masks across one or more zones of the base lens (e.g., the ratio of the number of positive powered light modulating cells to negative powered to multifocal light modulating cells) may vary in equal proportions or may be unequal.

In some embodiments, the distribution of the negative power light modulating cells across one or more zones of the base lens may be limited to quadrants, zones, regions, randomly interspersed, arranged in clusters, stacks, aggregates, arrays of 2 or more light modulating cells or regularly arranged on the base lens. In some embodiments, the distribution of the positive power light modulating cells across one or more zones of the base lens may be limited to quadrants, zones, regions, randomly interspersed, arranged in clusters, stacks, aggregates, arrays of 2 or more light modulating cells or regularly arranged on the base lens. In some embodiments, the distribution of the multifocal light modulating cells across one or more zones of the base lens may be limited to quadrants, zones, regions, randomly interspersed, arranged in clusters of 2 or more light modulating cells or regularly arranged on the ophthalmic lens.

### Geometrical Fill Ratio/Through Focus Light Distribution:

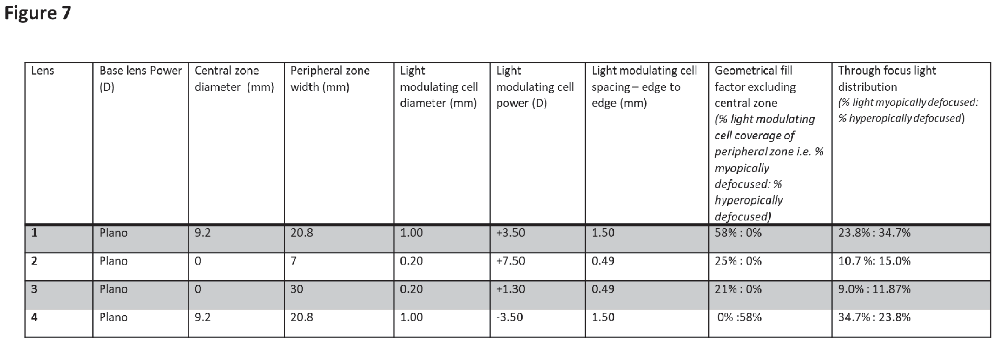

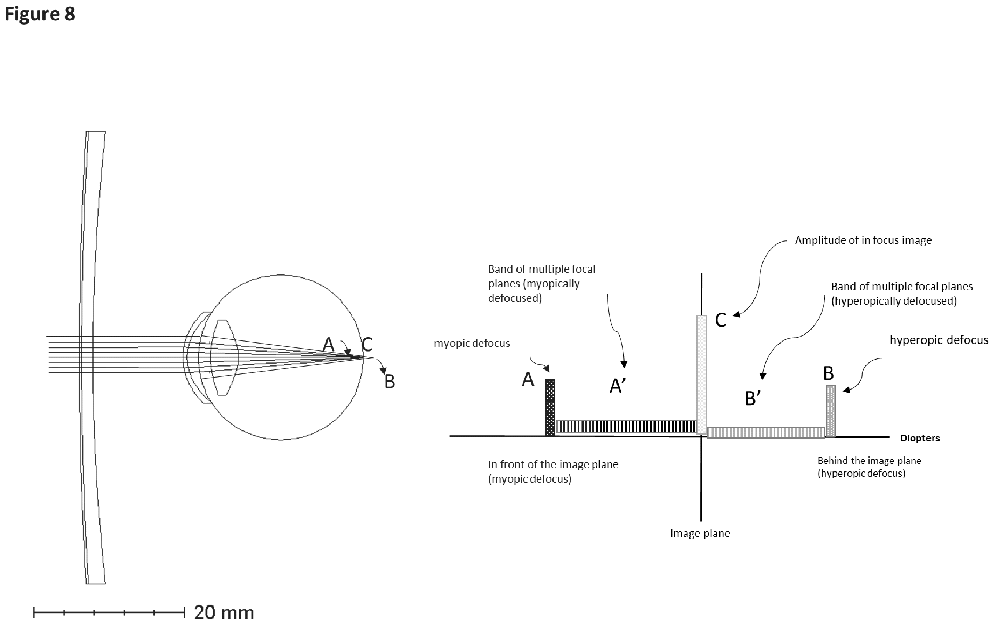

In some embodiments, an ophthalmic lens may be characterized as having a fill ratio. The fill ratio (or fill factor ratio) may be defined as the ratio of the area occupied by the light modulating cell to the total area of the region of the base lens devoted to the light modulating cells. This region is also referred to as light modulating cell zone (e.g., excluding any specific central zones/ regions that are devoid of light modulating cells). In some embodiments, lens designers and/or clinicians may use the light modulating cell geometrical distribution or fill ratio as a guide to clinical performance of the ophthalmic lens including myopia control efficacy, vision and/or wearability. For example, an ophthalmic lens incorporating a base lens with a power and positive powered light modulating cells in a peripheral annular optical zone having a geometrical fill factor of 25%, may result in the clinician concluding that 25% of the light passing through the peripheral zone is focused in front of the retinal plane for slowing axial eye growth whereas 75% of the light passing through the peripheral part of the lens may be focused at the retinal plane for providing refractive error correction and good vision. In this situation, if myopia progression is faster than expected, a clinician may consider increasing the geometrical fill factor of the positive powered light modulating cells, to about 35%. However, the through focus light distribution (TFLD) of incident light that passes through peripheral zone of the ophthalmic lens and into the eye may not match the TFLD represented by the geometrical fill factor. FIG. 7 is a table that provides the geometrical fill factor for a range of embodiments and the corresponding TFLD in the eye. As seen from the table, when incident light is directed through the ophthalmic lens 1 (FIG 7), although it is expected that the positive powered light modulating cell results in light directed to a plane that is in myopic defocus (i.e., relatively anterior to the retinal plane or image plane corresponding to the base lens power ), interactions that may result from the geometrical characteristics of the base lens and the light modulating cell including, for example, the spacing between cells, diameter or size of cells, sagittal depth, curvature or surface profile of the cells, power or focal length of the cells and/or other light modulating effects of the arrangement, may result in the light that emerges from this arrangement to be directed to multiple planes, e.g., at the retinal or image plane as well as in one or both of myopic (anterior to the retinal or image plane ) and hyperopic defocus (relatively posterior to the image plane). For Lens 1 in FIG 7, the resultant light distribution in the peripheral zone is about 23.8% in myopic defocus (anterior to the image plane) whereas a greater amount of light 34.7% is in hyperopic defocus (posterior to the image plane). This is further illustrated in FIG 8, where it is seen that the light emerging from the arrangement from the light modulating zone on the ophthalmic lens is directed to the retinal image plane (C) (or in the case of the lens alone, to an image plane corresponding to the base lens power), as well to multiple planes in myopic defocus (A and A') as well as to multiple planes in hyperopic defocus (B and B').

Some embodiments described herein may provide a method for a TFLD extending across one or more image planes comprising an ophthalmic lens comprising a base lens, and one or more light modulating zones with a plurality of light modulating cells wherein light passing through the light modulating zone that may be tailored to provide a TFLD that is directed to one or more image planes, a greater proportion of light in myopic defocus relative to the image plane, greater proportion of light in hyperopic defocus relative to the image plane, equally distributed amongst myopic and hyperopic defocus, all light directed anterior to the image plane, all light directed posterior to the image plane and so on. Some embodiments, may provide a method wherein the surface geometrical characteristics of the ophthalmic lens includes the geometrical fill factor of the light modulating cells. Some embodiments described herein are for an ophthalmic lens with a base lens with a base power that directs light to a first image plane, one or more light modulating zones with a plurality of light modulating cells wherein a portion of the base power adjacent to (but not underlying) the light modulating cells interacts to direct light to an image plane that is not on the first image plane. In some embodiments, the image plane that is not on the first image plane is in similar direction to that of light directed by the light modulating cells, in other embodiments it is in an opposite direction to that of light directed by the light modulating cells.

In some embodiments, it may be desirable for an ophthalmic lens with light modulating zones incorporating one or more light modulating cells to provide a TFLD for light passing through the light modulating zone wherein the ratio of light that is distributed in myopic defocus compared to hyperopic defocus may be about < 1.0, about <0.9, about <0.8, about <0.7, about <0.6, about <0.5, about <0.4, about <0.3, about <0.2, about <0.1.

In some embodiments, it may be desirable for an ophthalmic lens with light modulating zones incorporating one or more light modulating cells to provide a TFLD for light passing through the light modulating zone wherein the ratio of light that is distributed in myopic defocus compared to hyperopic defocus may be about > 1.0, about >1.1, about >1.2, about >1.3, about >1.4, about >1.5, about >1.6, about >1.7, about >1.8, about >1.9.

In some embodiments, it may be desirable for an ophthalmic lens with light modulating zones incorporating one or more light modulating cells to provide a TFLD for light passing through the light modulating zone with no substantial hyperopic defocus. In some embodiments, it may be desirable for an ophthalmic lens with light modulating zones incorporating one or more light modulating cells to provide a TFLD for light passing through the light modulating zone with no substantial myopic defocus.

In some embodiments, it may be desirable for an ophthalmic lens with light modulating zones incorporating one or more light modulating cells to provide a TFLD for light passing through the light modulating zone wherein the proportion of light directed to image planes in myopic defocus is about 15% to about 80%, 15% to about 75%, 15% to about 70%, 15% to 60%, about 20% to 50% , about 25% to 50%, about 30% to about 50%, about 35% to about 50%, about 25% to 30%, about 30% to 40%, preferably >25%, preferably >30% and preferably >35%.

In some embodiments, it may be desirable for an ophthalmic lens with light modulating zones incorporating one or more light modulating cells to provide a TFLD for light passing through the light modulating zone wherein the proportion of light directed to image planes in hyperopic defocus is about 15% to about 80%, 15% to about 75%, 15% to about 70%, 15% to 60%, about 20% to 50% , about 25% to 50%, about 30% to about 50%, about 35% to about 50%, about 25% to 30%, about 30% to 40%, preferably >25%, preferably >30% and preferably >35%.

In some embodiments, it may be desirable for an ophthalmic lens with light modulating zones incorporating one or more light modulating cells to provide a TFLD for light passing through the light modulating zone wherein the difference in the proportion of light directed to image planes for myopic defocus and image planes for hyperopic defocus is about 20-80% of the entire TFLD, about 20% -75%, about 20%-70%, about 20% to 65%, about 20% to 60%, about 20% to 55%, about 20% to 50%, about 20% to 45%, about 20% to 40%.

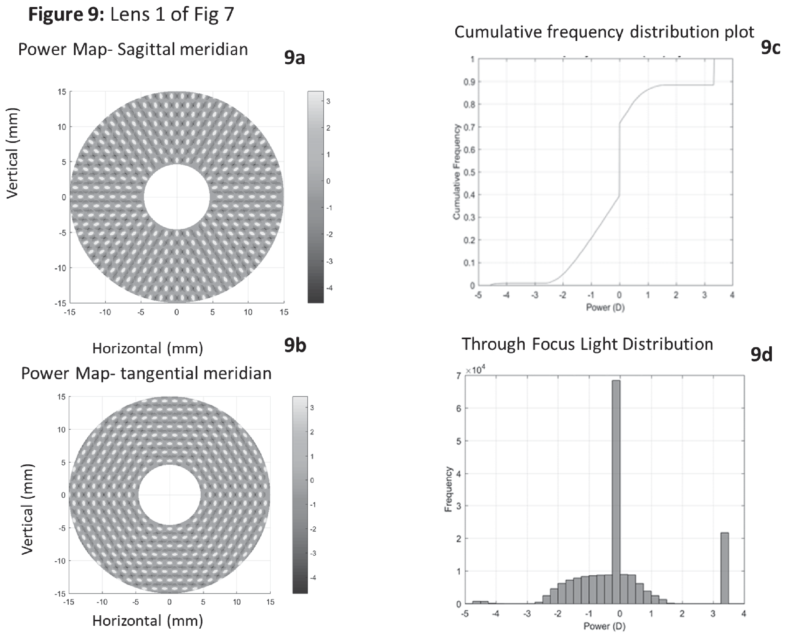

FIG 9 illustrates the sagittal and tangential power distribution across an ophthalmic lens (Lens 1 of FIG 7) with a base lens of plano power with a clear central zone. In the peripheral zone, there are a plurality of light modulating cells that are positive in power (+3.50D), with a geometrical fill ratio of 58% in the peripheral zone. Due to the interactions resulting from the geometrical characteristics of the base lens and light modulating cells, including the geometrical fill ratio, the resultant power map indicates that both positive and negative powered zones were created on the lens. As seen from the cumulative light distribution, the through focus light distribution indicates that for light rays passing through the peripheral zone, 23.8% of light is anterior to the image plane or in myopic defocus whereas 34.7% of light is posterior to the image plane or in hyperopic defocus and the remaining 41.5% is at the image plane. Furthermore, it is observed that there is a peak amplitude of myopic defocus at approximately 3.5D and the peak amplitude is greater for myopic defocus compared to hyperopic defocus. The light modulating cell has a diameter of 1 mm and is spaced 1.5mm apart.

Thus in some embodiments, to achieve a desirable TFLD, the geometrical fill ratio of the light modulating cells to the total surface area of the light modulating zone on the base lens of the ophthalmic lens (e.g., ratio of the total surface area of the light modulating cells to the total surface area of the ophthalmic lens) may be about 5%, about 10%, about 15%, about 20%, about 25%, about 30%, about 35%, about 40%, about 45%, about 50%, about 55%, about 60%, about 65%, about 70%, about 75%, about 80% or about 85% , at least 5%, at least 10%, at least 15%, at least 20%, at least 25%, at least 30%, at least 35%, at least 40%, at least 45%, at least 50%, at least 55%, at least 60%, at least 65%, at least 70%, at least 75%, at least 80% or at least 85% or between 5-15%, 20-30%, 35-45%, 40-50%, 45-55%, 60-70%, 70-75%, 70-80% or 75-85%. In some embodiments , the light modulating zone may be present only in the central region of the lens, only in the mid-peripheral annular region, only peripheral annual region, in both mid-peripheral and peripheral regions, may be present across the entire lens surface area, may be limited to only certain quadrants (e.g., one or more of the nasal, temporal, inferior, and/or superior quadrants), may be limited to certain segments or may be limited to certain regions.

In some embodiments, to achieve a desirable TFLD, the cell- to- cell spacing (i.e. spacing in between the light modulating cells) may be larger than, equal to, smaller than the diameter of the light modulating cells or variable across the spacing. In some embodiments , the cell-to-cell spacing may contain masks, opaque areas or other means of reduced transmission. In some embodiments, to achieve a desirable TFLD, the light modulating cells in a particular array or arrangement or cluster or a stack or an aggregate may be positioned such that the cell-to-cell spacing may be constant between all cells, may be variable between all cells, constant for some cells and variable for some cells.

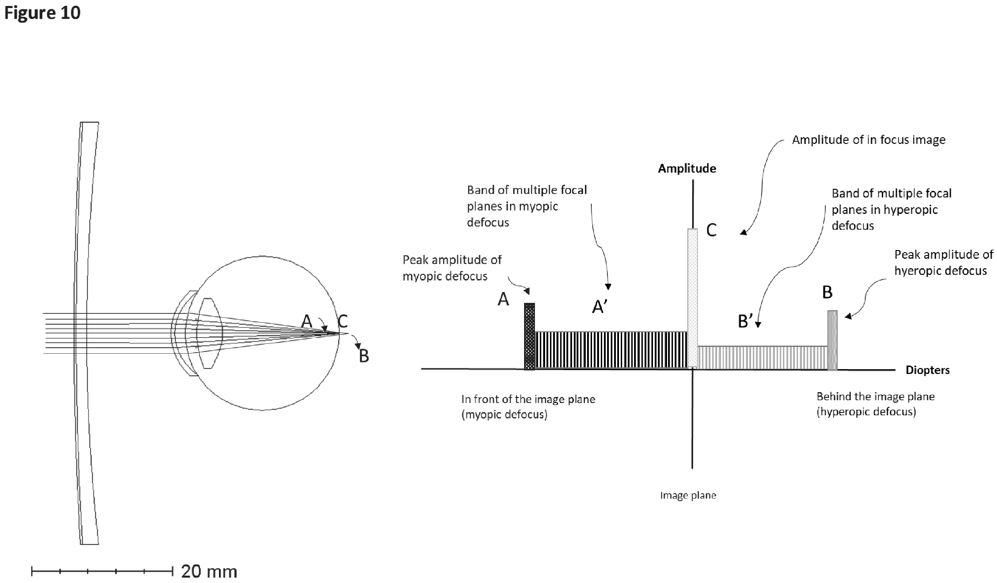

FIG 10 illustrates an embodiment of an ophthalmic lens with a geometrical fill factor of the light modulating cell zone is such that about 50% of light is directed to the retinal image plane, about 25% of the light is directed to the plane anterior to the retinal image plane (myopic defocus) and about 25% of the light is directed to the plane posterior to the retinal image plane (hyperopic defocus) by the light modulating cells. Considering the TFLD, it is observed there is a peak of amplitude for light at the image plane C, a peak of amplitude for light in myopic defocus (anterior to the image plane) at A and similarly, a peak of amplitude of light for light in hyperopic defocus (posterior to the image plane) at B. In addition, the light is also directed to multiple focal planes falling over a range of diopters A' between C and A and multiple focal planes falling over a range of diopters B' between C and B.

In some embodiments, the ophthalmic lens comprising light modulating cells has a geometrical fill factor in the light modulating zone that is designed so the peak amplitude of defocused light anterior to the image plane at A is substantially greater, somewhat greater, substantially similar to, somewhat less, substantially less than the amplitude of defocused light posterior to the image plane at B.

In some embodiments, the distance of the peak amplitude A of the light directed to in front of the image plane may be positioned substantially closer to the image plane than the distance of the peak amplitude B of the light directed to posterior to the image plane.

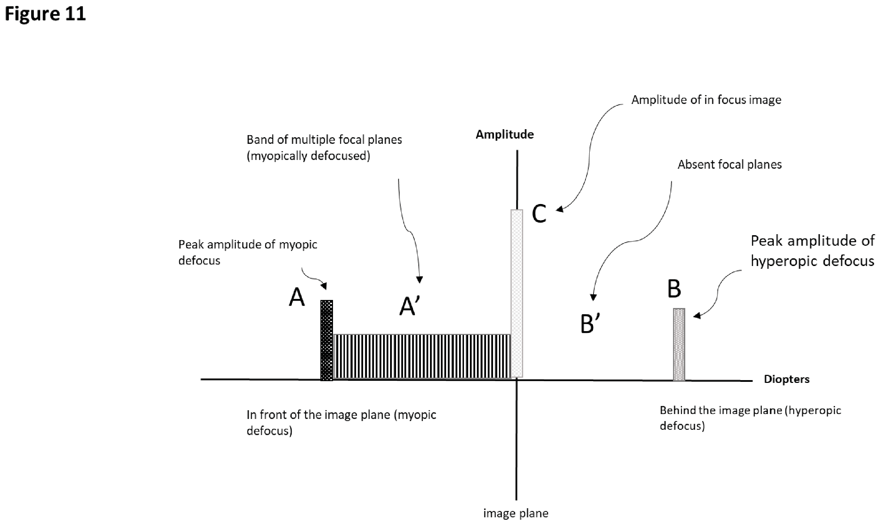

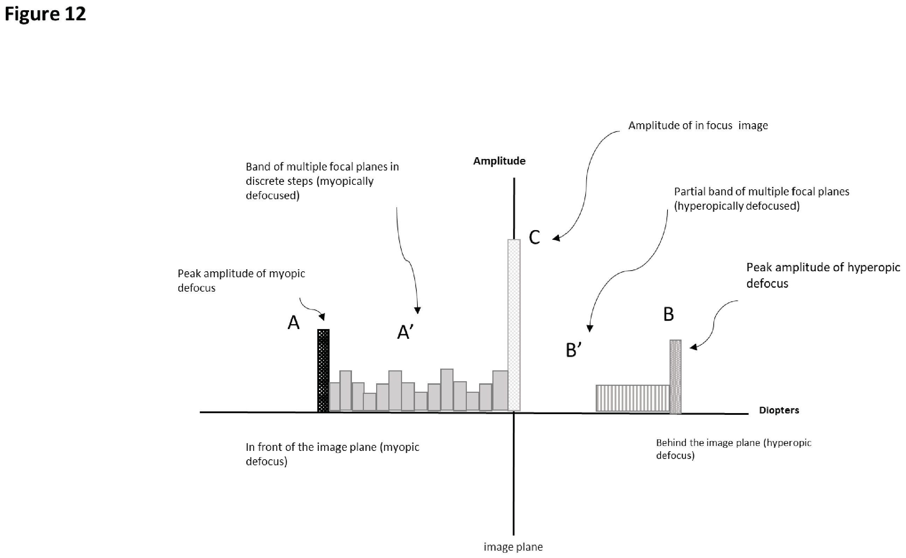

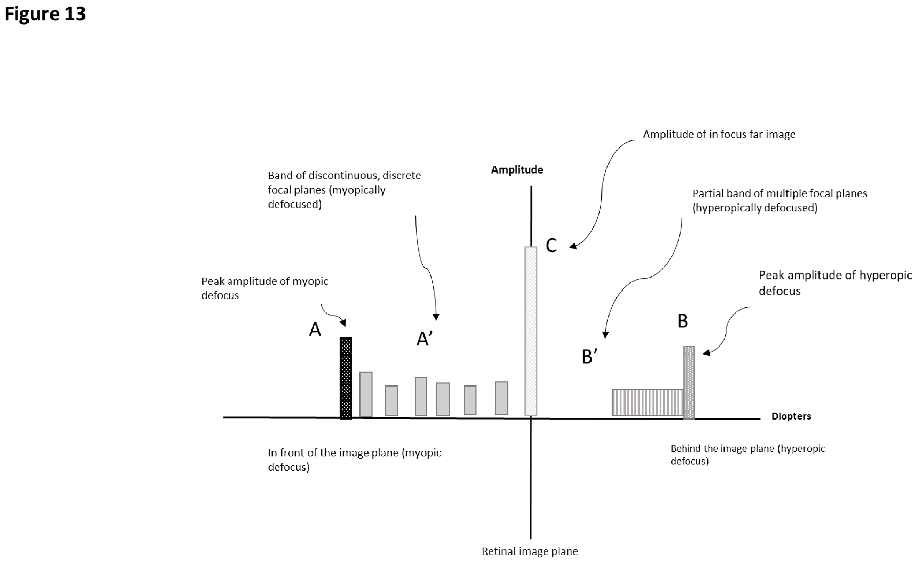

In some embodiments, the ophthalmic lens comprising light modulating cells has a geometrical fill factor in the light modulating zone that is designed such that the resultant TFLD has a peak of amplitude for light in myopic defocus A (anterior to the image plane), and in addition, there may be light directed to a range of planes (A') in between A and the image plane C wherein the amplitude of light at one or more image planes of A' is substantially less or somewhat less than the amplitude at A. Similarly, in some embodiments, the ophthalmic lens comprising light modulating cells in the light modulating zone has a geometrical fill factor that is designed such that the TFLD has a peak of amplitude for light in hyperopic defocus B (posterior to retina), in addition, there may be light directed to a range of planes (B') in between B and C wherein the amplitude at one or more image planes at B' is substantially less or somewhat less than the amplitude at B. In some embodiments, light is directed to provide a peak amplitude of defocus at A and B and in addition, to a band of multiple focal planes providing myopic defocus only at A' whereas there are no focal planes at B'. (FIG 11). In some embodiments, the amplitude of defocus in the TFLD at A' or B' may form a band of multiple focal planes in discrete steps, for example, every 0.05D or greater, or every 0.125D or greater, or every 0.25D or greater at A' whereas there is only a band of multiple focal planes only for a portion at B' (FIG 12). In some embodiments , the amplitude of defoci in the TFLD at A' or B' or both may, at least in part, form a discontinuous distribution of defoci separated by at least about 0.05D or more, about 0.125D or more, about 0.25D or more, about 0.37D or more, about 0.50D or more (A' in FIG 13).

In some embodiments, the TFLD may at least in part form an aperiodic and non-monotonic amplitude of myopically defocused light, hyperopically defocused light or both.

In some embodiments, the light amplitude of any continuous band of defocused light at A' or B' may be at least about 20% of the TFLD, may be about 25%, may be about 30%, about 40 % , about 50%, about 60%, about 70%, about 80%, about 10% to 50%, about 10% to 40%, about 10% to 30% or about 10% to 20% . In some embodiments, the peak amplitude of the TFLD anterior to the image plane (or in front or in myopic defocus) may be about 50% of all light directed anterior to the retinal plane, may be substantially >50%, somewhat >50%, or <50%. In some embodiments, peak amplitude of the TFLD posterior to the retinal plane (or behind or in hyperopic defocus) may be about 50% of the light directed posterior to the retinal plane, may be substantially >50%, somewhat >50%, or <50%.

In some embodiments, the amplitude of the TFLD anterior to the retinal plane (or in front or in myopic defocus) and within 1.00D of the retinal plane may be about < 10%, or about < 20%, or about <30% or about < 50% of the total light in front of the retinal plane. In some embodiments, the amplitude of the TFLD posterior to the retinal plane (or behind or in hyperopic defocus) and within 1.00D of the retinal plane may be about < 10%, or about < 20%, or about <30% or about < 50% of the total light behind the retinal plane. In some embodiments, the amplitude of the TFLD may be such that the amplitude at B and B' may be about zero amplitude when within 1.00D, or within 1.50D of the retinal image plane, whereas amplitude at A and A' may be greater than zero when within 1.00D , or within 1.50D of the retinal image plane. In some embodiments, the amplitude of the TFLD may be such that the amplitude at A and A' is about zero amplitude when within 1.00D, or within 1.50D of the retinal image plane, whereas amplitude at B and B' may be greater than zero when within 1.00D , or within 1.50D of the retinal image plane.

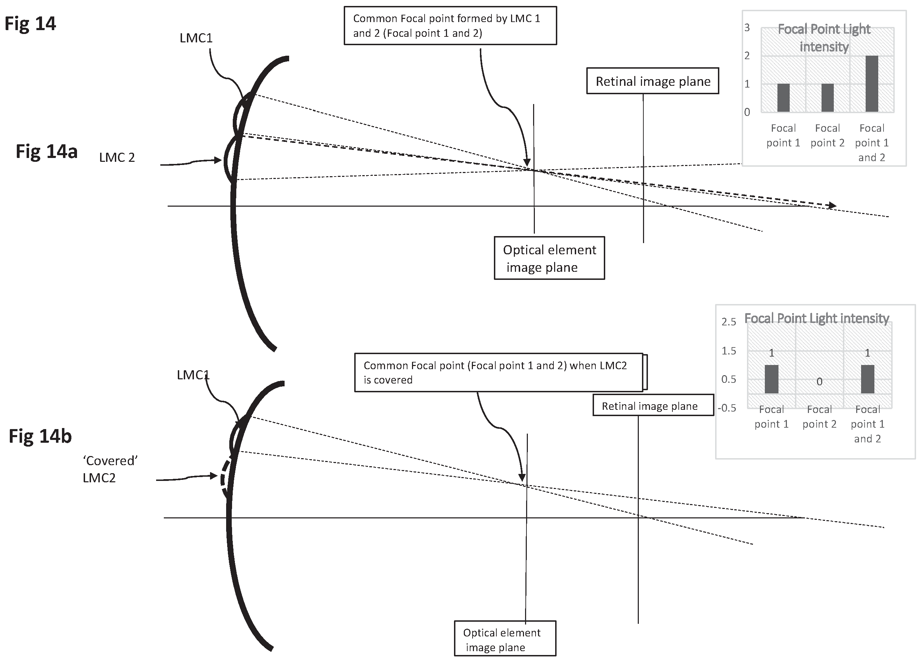

In some embodiments, the amplitude of the TFLD at a certain focus may be modified by the arrangement of the light modulating cells on the base lens. In certain embodiments, two or more light modulating cells may be arranged in a dependent manner to modify the amplitude of the TFLD at a given focal point or focal plane. For example, in FIG 14a two light modulating cells are arranged in a dependent manner such that they share a common focal point and therefore providing a certain amplitude of focus. The sum of light intensity at the common focal point (focal point 1 and 2) is greater than the light intensity at focal point 1 alone or focal point 2 alone. When one of the pair of the light modulating cells is modified or covered (FIG 14b) then the amplitude or the light intensity at the common focal point is reduced. In some embodiments, an ophthalmic lens incorporating light modulating cells used for myopia control may provide a TFLD with light directed to image planes in both myopic and hyperopic defocus wherein the geometrical fill factor contains no negative powered refractive elements. In some embodiments, an ophthalmic lens incorporating light modulating cells used for myopia control may provide a TFLD with light directed to image planes in both myopic and hyperopic defocus wherein the geometrical fill factor contains no positive powered refractive cells. In some embodiments, an ophthalmic lens incorporating light modulating cells used for myopia control may provide a TFLD with light directed to image planes in both myopic and hyperopic defocus wherein the geometrical fill factor contains substantially no positive or negative powered light modulating cells, or contains only positive powered refractive light modulating cells, contains only negative powered refractive light modulating cells or contains both positive and negative powered refractive light modulating cells or contains only substantially zero powered light modulating cells or contains only diffractive cells or light modulating cells with phase shifting masks. In some embodiments, an ophthalmic lens incorporating light modulating cells used for myopia control may provide a TFLD with light directed to image planes in substantially myopic defocus only, substantially hyperopic defocus only, both myopic and hyperopic defocus wherein the geometrical fill factor contains light modulating cells with zero refractive power. In some embodiments, an ophthalmic lens incorporating light modulating cells used for myopia control may provide a TFLD wherein the image contrast at the retinal plane is reduced by about approximately 10% or more, by about approximately 20% or more, by about approximately 30% or more. In some embodiments, an ophthalmic lens incorporating light modulating cells used for myopia control may provide a TFLD wherein the light modulating cells may cause diffusive blur (difference between low contrast VA and high contrast VA) when viewed through the portion of the lens comprising the light modulating cells. In some embodiments, an ophthalmic lens incorporating light modulating cells used for myopia control may provide a TFLD wherein the diffusive blur with the lens may be about 0.07 logMAR or greater, about 0.10 logMAR or greater, about 0.15 logMAR or greater, about 0.20 logMAR or greater or about 0.25 logMAR or greater.

While the examples and descriptions have generally been confined to ophthalmic lenses for myopia control, the manipulation of optical defocus may readily be applied to produce desirable TFPD for any other vision correction application or vision assistance application or to improve vision and vision quality in general including presbyopia, myopia, hyperopia, astigmatism, visual fatigue, night vision and the like.

### Exemplary Ophthalmic Lenses

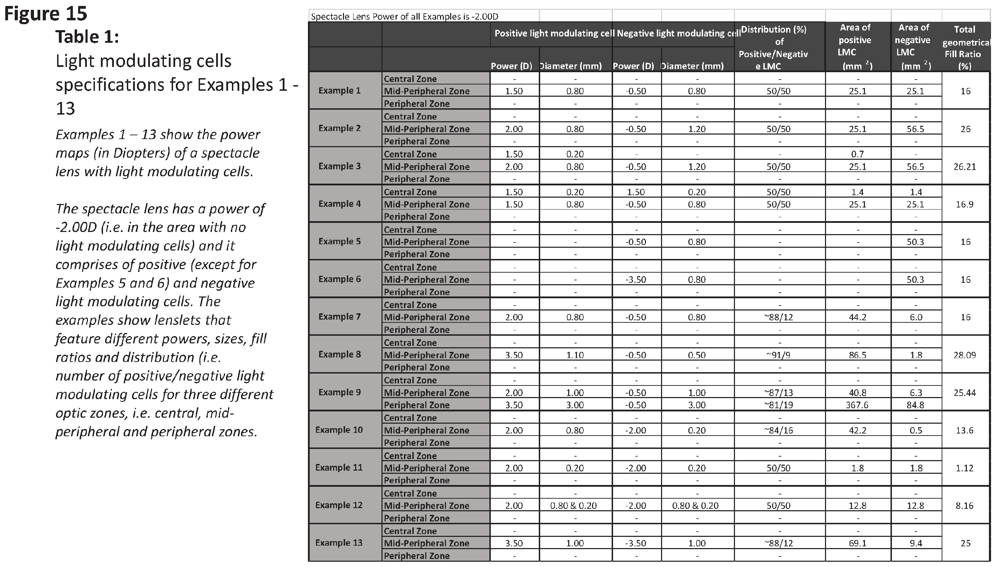

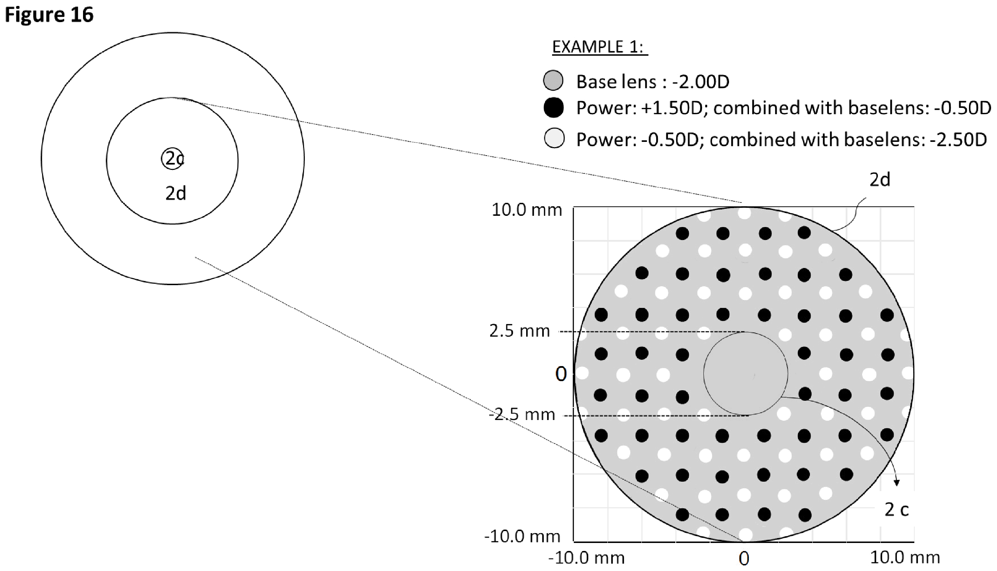

FIG 15 is a table detailing the distribution of the exemplary refractive light modulating cells described in FIGS 16-30 (Examples 1-13), the power of the light modulating cells, percent distribution of light modulating cells, the area of the zone devoted to the light modulating cells and the total fill ratio for the light modulating cells.

FIG. 16 is a power map of an exemplary ophthalmic lens for a myopic eye in accordance with some embodiments described herein. As illustrated, FIG. 16 provides the power map of the central zone and mid-peripheral zone of an ophthalmic lens (e.g., a spectacle lens) of FIG. 2 which comprises a base or carrier lens and a plurality of light modulating cells incorporated into or on the base lens. The central optical (e.g., pupillary) zone 2c of the ophthalmic lens is about 5.0 mm in diameter and has a uniform (or substantially uniform) power of about -2.00D to correct for the distance refractive error of a - 2.00D myopic eye. Surrounding the central zone, is the mid-peripheral optical zone 2d of about 20 mm in diameter. The mid-peripheral optical zone also has a base optical power of about -2.00D. Interspersed throughout the mid-peripheral optical zone 2d (light modulating cell zone) are a plurality of light modulating cells. As illustrated, the light modulating cells are circular in shape and have a diameter of about 0.8 mm. Optically, a first subset of the plurality of the light modulating cells have an optical power of +1.50D (when combined with base lens, the resultant power is -0.50D). Optically, a second subset of the plurality of light modulating cells have an optical power of -0.50D (when combined with base lens, the resultant power is -2.50D). Light rays passing through the +1.50D light modulating cells focus more anteriorly to light rays passing through the -2.00D base lens power and light rays passing through the -0.50D light modulating cells are focused more posteriorly compared to light rays directed through the base optical power (as well as the +2.50D light modulating cells). As a result, the lens design illustrated in FIG. 16 causes the light rays to be directed to at least three different images planes. As further illustrated, the subsets of light modulating cells are positioned in a substantially squared arrangement that is repeated. The distribution of the first subset of light modulating cells to the second subset of light modulating cells is about 50/50. The peripheral optical zone beyond the mid-peripheral zone may be uniform in power or may be interspersed with light modulating cells in substantially the same (or different) manner to that described herein.

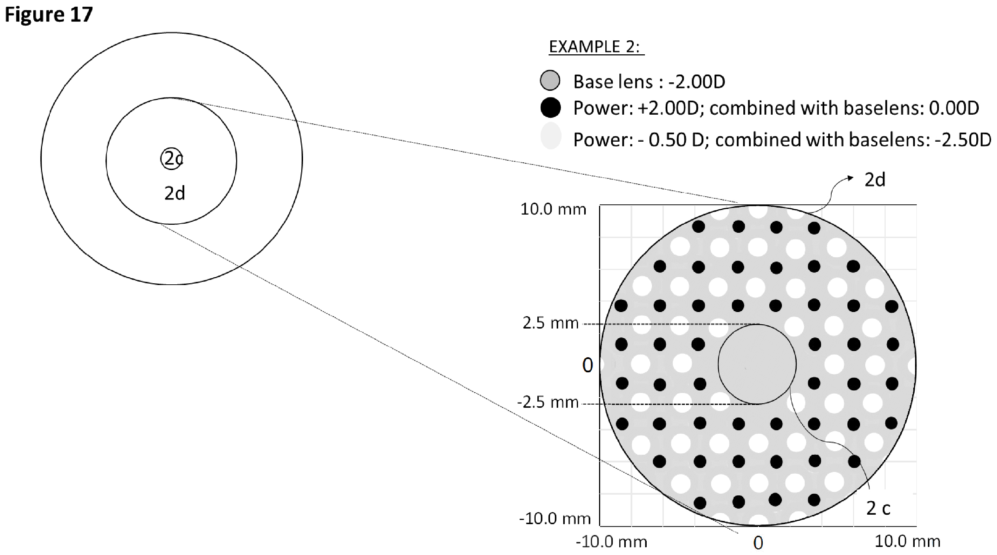

FIG. 17 is a power map of an exemplary ophthalmic lens for a myopic eye in accordance with some embodiments described herein. As illustrated, FIG. 17 provides the power map of the central zone and mid-peripheral zone of an ophthalmic lens (e.g., a spectacle lens) of FIG. 2 which comprises a base or carrier lens and a plurality of light modulating cells incorporated into or on the base lens. The central optical (e.g., pupillary) zone 2c of the ophthalmic lens is about 5.0 mm in diameter and has a uniform (or substantially uniform) power of about -2.00D to correct for the distance refractive error of a - 2.00D myopic eye. Surrounding the central zone, is the mid-peripheral optical zone 2d of about 20 mm in diameter. The mid-peripheral optical zone also has a base optical power of about -2.00D. Interspersed throughout the mid-peripheral optical zone 2d are a plurality of light modulating cells (light modulating cell zone). As illustrated, the light modulating cells are circular in shape. Optically, a first subset of the plurality of the light modulating cells have an optical power of about +2.00D (when combined with base lens, the resultant power is 0.00D). The first subset of the plurality of the light modulating cells have a diameter of about 0.8 mm. Optically, a second subset of the plurality of light modulating cells have an optical power of -0.50D (when combined with base lens, the resultant power is -2.50D). The second subset of the plurality of the light modulating cells have a diameter of about 1.2 mm. Light rays passing through the +2.00D powered light modulating cells focus more anteriorly to light rays passing through the -2.00D base power and light rays passing through the -0.50D powered light modulating cells are focused more posteriorly compared to light rays directed through the base optical power (as well as the +2.00D light modulating cells). As a result, the lens design illustrated in FIG. 17 causes the light rays to be directed to at least three different images planes. As further illustrated, the subsets of light modulating cells are positioned in a substantially squared arrangement that is repeated. The distribution of the first subset of light modulating cells to the second subset of light modulating cells is about 50/50. The peripheral optical zone beyond the mid-peripheral zone may be uniform in power or may be interspersed with light modulating cells in substantially the same (or different) manner to that described herein.

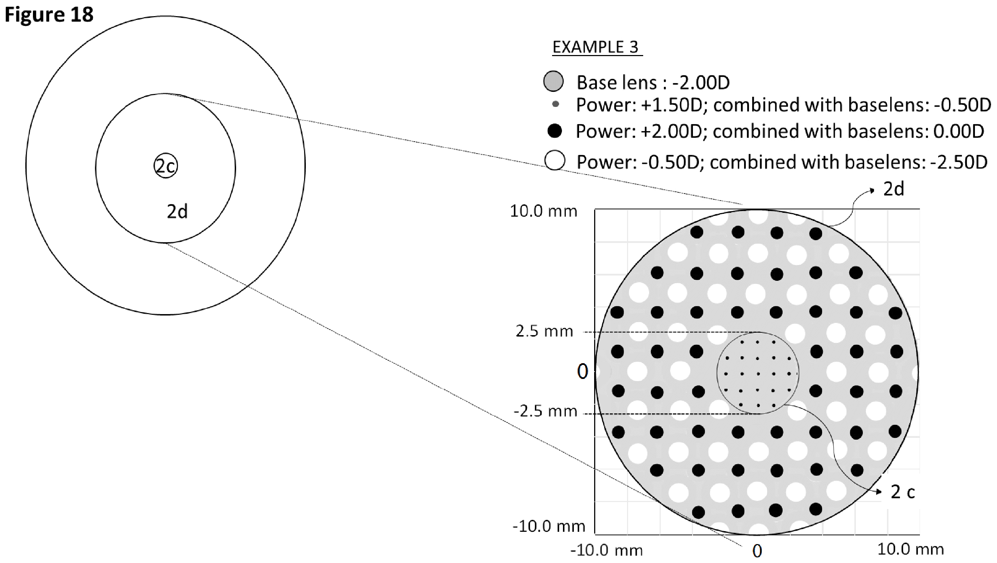

FIG. 18 is a power map of an exemplary ophthalmic lens for a myopic eye in accordance with some embodiments described herein. As illustrated, FIG. 18 provides the power map of the central zone and mid-peripheral zone of an ophthalmic lens (e.g., a spectacle lens) of FIG. 2 which comprises a base or carrier lens and a plurality of light modulating cells incorporated into or on the base lens. The central optical (e.g., pupillary) zone 2c of the ophthalmic lens is about 5.0 mm in diameter and has a uniform (or substantially uniform) power of about -2.00D to correct for the distance refractive error of a - 2.00D myopic eye. Interspersed throughout the central optical zone 2c are a plurality of light modulating cells (light modulating cell zone). As illustrated, the light modulating cells are circular in shape. Optically, the plurality of the light modulating cells in the central optical zone have an optical power of +1.50D (when combined with base lens, power is -0.50D). The plurality of the light modulating cells have a diameter of about 0.2 mm. Surrounding the central zone, is the mid-peripheral optical zone 2d of about 20 mm in diameter. The mid-peripheral optical zone also has a base optical power of about -2.00D. Interspersed throughout the mid-peripheral optical zone 2d are a plurality of light modulating cells (light modulating cell zone). As illustrated, the light modulating cells are circular in shape. Optically, a first subset of the plurality of the light modulating cells in the mid-peripheral optical zone have an optical power of about +2.00D (when combined with base lens, power is 0.00D). The first subset of the plurality of the light modulating cells in the mid-peripheral zone have a diameter of about 0.8 mm. Optically, a second subset of the plurality of light modulating cells in the mid-peripheral optical zone have an optical power of about -0.50D (when combined with base lens, -2.50D in power) and a diameter of about 1.2 mm. Light rays passing through the +2.00D powered light modulating cells in the mid-peripheral zone and the +1.50D powered light modulating cells in the central zone focus more anteriorly compared to light rays passing through the -2.00D base power. Light rays passing through the -0.50D light modulating cells in mid-peripheral zone focus more posteriorly compared to light rays directed through the base optical power as well as light rays directed through the +2.00D and the +1.50D light modulating cells. As a result, the lens design illustrated in FIG. 18 causes the light rays to be directed to at least four different images planes. As further illustrated, the subset of light modulating cells are positioned in a substantially squared arrangement that repeats. In the mid-peripheral optical zone 2d, the distribution of the number of the first subset of light modulating cells to the second subset of light modulating cells is about 50/50. The peripheral optical zone beyond the mid-peripheral zone may be uniform in power or may be interspersed with light modulating cells in substantially the same (or different) manner to that described herein.

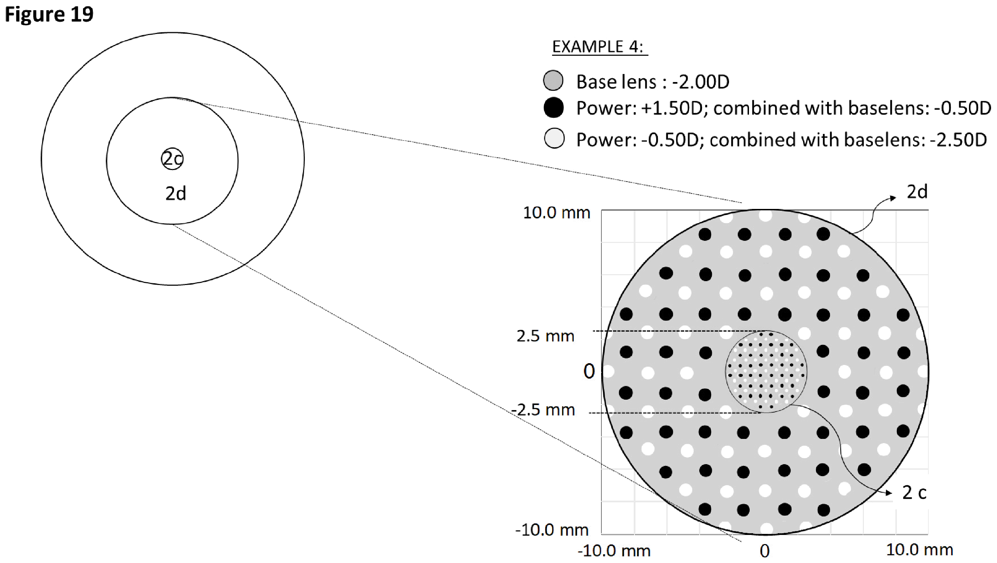

FIG. 19 is a power map of an exemplary ophthalmic lens for a myopic eye in accordance with some embodiments described herein. As illustrated, FIG. 19 provides the power map of the central zone and mid-peripheral zone of an ophthalmic lens (e.g., a spectacle lens) of FIG. 2 which comprises a base or carrier lens and a plurality of light modulating cells incorporated into or on the base lens. The central optical (e.g., pupillary) zone 2c of the ophthalmic lens is about 5.0 mm in diameter and has a uniform (or substantially uniform) power of about -2.00D to correct for the distance refractive error of a - 2.00D myopic eye. As illustrated, the light modulating cells are circular in shape. Optically, a first subset of the plurality of the light modulating cells in the central optical zone have an optical power of about +1.50D (when combined with base lens, -0.50D in power) and a diameter of about 0.2 mm. Optically, a second subset of the plurality of the light modulating cells in the central optical zone have an optical power of about -0.50D (when combined with base lens, -2.50D in power) and a diameter of about 0.2 mm. Surrounding the central zone, is the mid-peripheral optical zone 2d of about 20 mm in diameter. The mid-peripheral optical zone also has a base optical power of about -2.00D. Interspersed throughout the mid-peripheral optical zone 2d are a plurality of light modulating cells. As illustrated, the light modulating cells are circular in shape. Optically, a first subset of the plurality of the light modulating cells in the mid-peripheral optical zone have an optical power of about +1.50D (when combined with base lens, power is -0.50D ) and a diameter of about 0.8 mm. Optically, a second subset of the plurality of light modulating cells in the mid-peripheral optical zone have an optical power of about -0.50D when combined with base lens, -2.50D in power) and a diameter of about 0.8mm. Light rays passing through the +1.50D light modulating cells in both the central and the mid-peripheral optical zone focus more anteriorly compared to light rays passing through the -2.00D base power as well as light rays passing through the -0.50D powered light modulating cells. Similarly light rays passing through the - 0.50D powered light modulating cells in both the central and the mid-peripheral optical zone focus more posteriorly compared to light rays directed through the base optical power as well as the +1.50D light modulating cells. As a result, the lens design illustrated in FIG. 19 causes the light rays to be directed to at least three different images planes. As further illustrated, the subset of light modulating cells are positioned in a substantially squared arrangement that is repeated. In the central optical zone and the mid-peripheral optical zone, the distribution of the number of first subset of light modulating cells to the second subset of light modulating cells is about 50/50. The peripheral optical zone beyond the mid-peripheral zone may be uniform in power or may be interspersed with light modulating cells in substantially the same (or different) manner to that described herein.

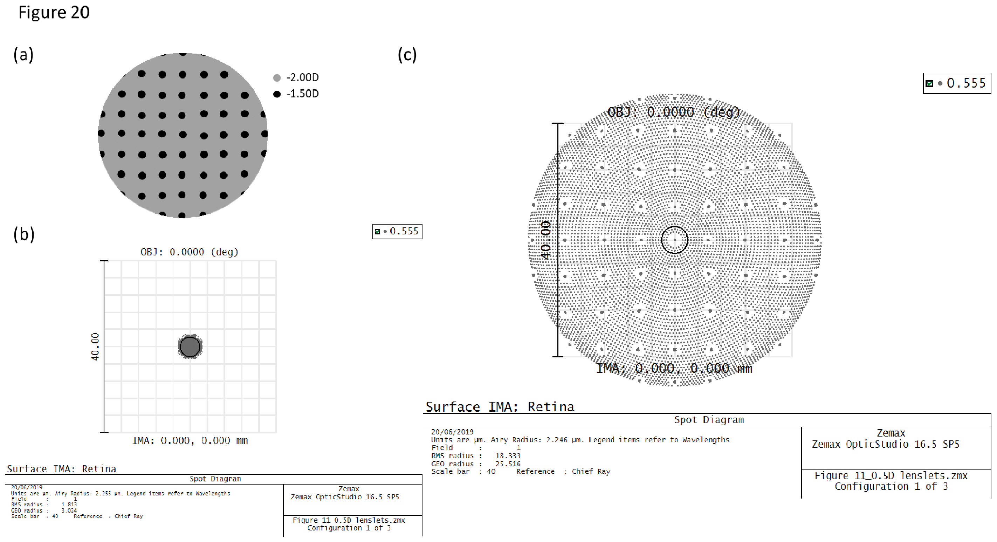

FIG 20a shows the power map of a -2.00 D myopic lens with positive light modulating cells (light modulating cell power of +0.50D; combined with base lens, lens power is -1.50D). Figure 20b shows the geometric blur circle for an optical performance simulation at a wavelength of 555 nm when a -2.00 D myopic eye was corrected with a spectacle lens having a power map as shown in Figure 20a. In Figure 20b it can be seen that light is well focused, i.e. the geometrical blur circle is comparable to the Airy disk, which indicates good visual performance. If the retinal plane of the same eye was now moved anteriorly by 0.2 mm, which corresponds to a refractive error change of 0.50D, the geometrical blur circle increases, however light passing through the positive light modulating cells is now in focus - as can be seen in Figure 20c.

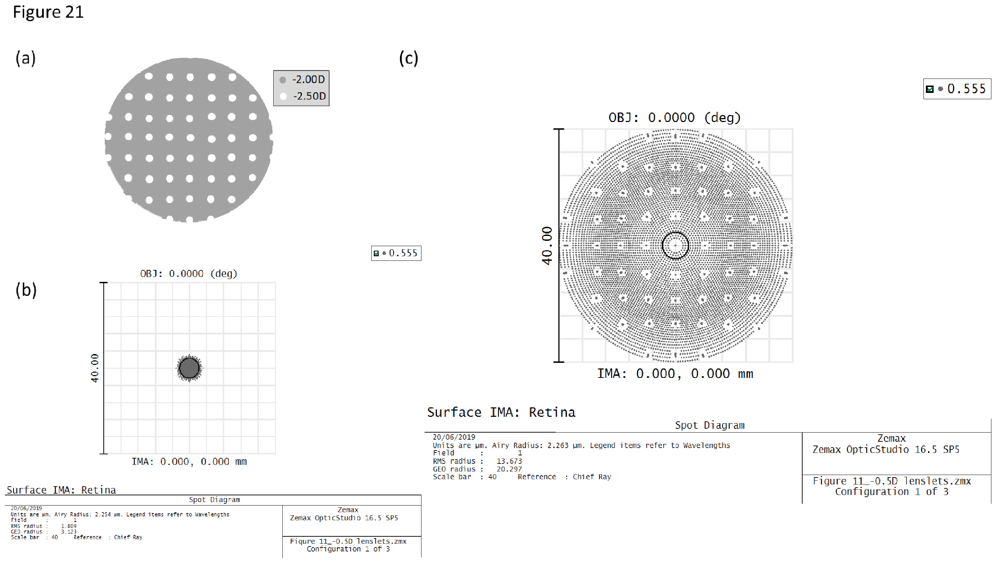

Figure 21a shows the power map of a -2.00 D myopic lens with negative light modulating cells (light modulating cell power of -0.50D). Figure 21b shows the geometric blur circle for an optical performance simulation at a wavelength of 555 nm when a -2.00 D myopic eye was corrected with a spectacle lens having a power map as shown in Figure 21a. In Figure 21b it can be seen that light is well focused, i.e. the geometrical blur circle is comparable to the Airy disk, which again indicates good visual performance. If the retinal plane of the same eye was now moved posteriorly by 0.2 mm, which corresponds to a refractive error change of 0.50D, the geometrical blur circle increases, however light passing through the negative light modulating cells is now in focus - as can be seen in Figure 21c.

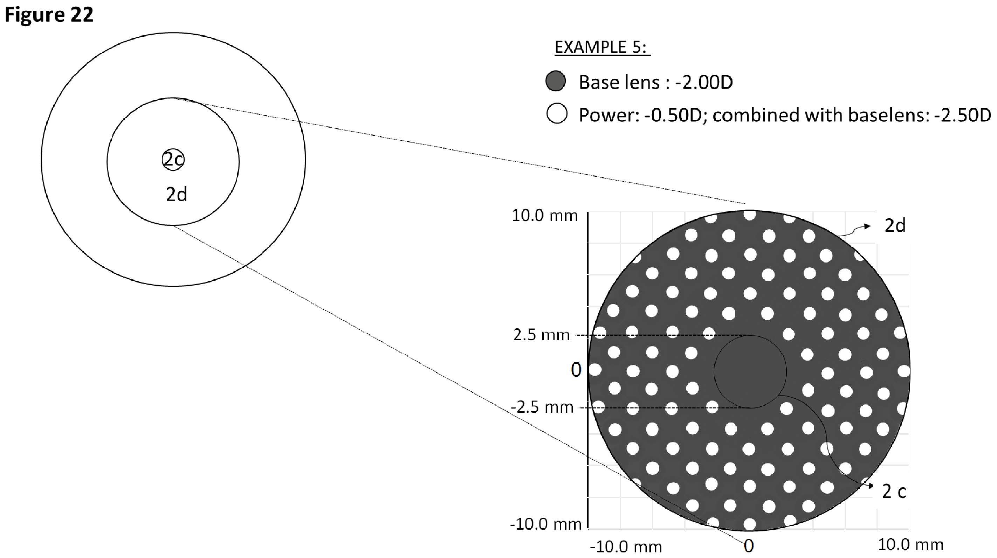

FIG. 22 is a power map of an exemplary ophthalmic lens for a myopic eye in accordance with some embodiments described herein. As illustrated, FIG. 22 provides the power map of an ophthalmic lens (e.g., a spectacle lens) of FIG. 2 which comprises a base lens and a plurality of light modulating cells incorporated into or on the base lens. The central optical (e.g., pupillary) zone 2c of the ophthalmic lens is about 5.0 mm in diameter and has a uniform (or substantially uniform) power of about -2.00D to correct for the distance refractive error of a -2.00D myopic eye. Surrounding the central zone, is the mid-peripheral optical zone 2d of about 20 mm in diameter. The mid-peripheral optical zone also has a base power of about -2.00D. Interspersed throughout the mid-peripheral optical zone 2d are a plurality of light modulating cells. As illustrated, the light modulating cells are circular in shape. Optically, the plurality of light modulating cells have an optical power of about -0.50D (when combined with base lens, -2.50D in power). The light modulating cells have a diameter of about 0.8 mm. Light rays passing through the -0.50D powered light modulating cells are focused more posteriorly compared to light rays directed through the base optical power. As a result, the lens design illustrated in FIG.22 causes the light rays to be focused on at least two different images planes. The peripheral optical zone beyond the mid-peripheral zone may be uniform in power or may be interspersed with light modulating cells in substantially the same (or different) manner to that described herein.

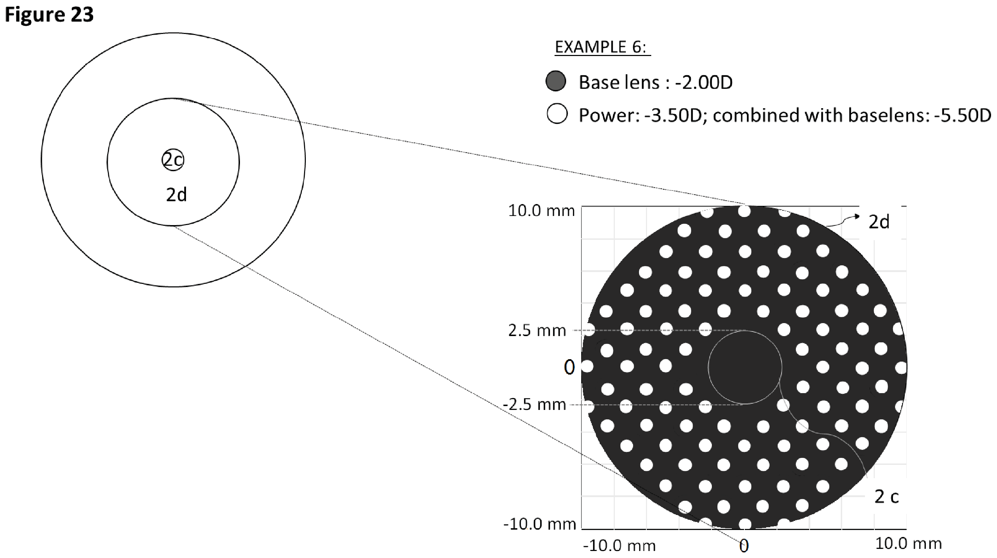

FIG. 23 is a power map of an exemplary ophthalmic lens for a myopic eye in accordance with some embodiments described herein. As illustrated, FIG. 23 provides the power map of an ophthalmic lens (e.g., a spectacle lens) of FIG. 2 which comprises a base lens and a plurality of light modulating cells incorporated into or on the base lens. The central optical (e.g., pupillary) zone 2c of the ophthalmic lens is about 5.0 mm in diameter and has a uniform (or substantially uniform) power of about -2.00D to correct for the distance refractive error of a -2.00D myopic eye. Surrounding the central zone, is the mid-peripheral optical zone 2d of about 20 mm in diameter. The mid-peripheral optical zone also has a base power of about -2.00D. Interspersed throughout the mid-peripheral optical zone 2d are a plurality of light modulating cells. As illustrated, the light modulating cells are circular in shape. Optically, the plurality of light modulating cells have an optical power of -3.50D (when combined with base lens, -5.50D in power). The light modulating cells have a diameter of about 0.8 mm. Light rays passing through the -3.50D powered light modulating cells are focused more posteriorly compared to light rays directed through the base power. As a result, the lens design illustrated in FIG. 23 causes the light rays to be focused on at least two different images planes. The peripheral optical zone beyond the mid-peripheral zone may be uniform in power or may be interspersed with light modulating cells in substantially the same (or different) manner to that described herein.

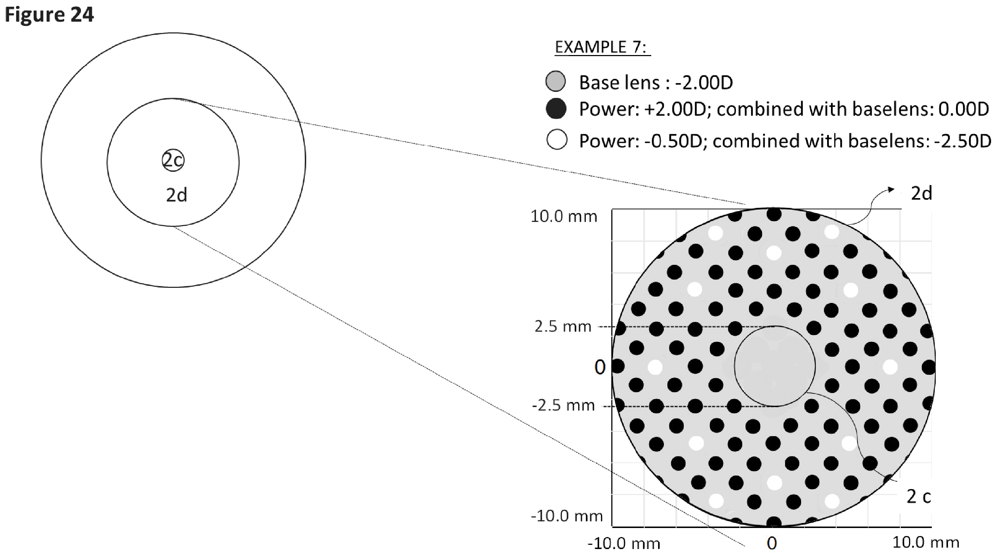

FIG. 24 is a power map of an exemplary ophthalmic lens for a myopic eye in accordance with some embodiments described herein. As illustrated, FIG. 24 provides the power map of an ophthalmic lens (e.g., a spectacle lens) of FIG. 2 which comprises a base lens and a plurality of light modulating cells incorporated into or on the base lens. The central optical (e.g., pupillary) zone 2c of the ophthalmic lens is about 5.0 mm in diameter and has a uniform (or substantially uniform) power of about -2.00D to correct for the distance refractive error of a -2.00D myopic eye. Surrounding the central zone, is the mid-peripheral optical zone 2d of about 20 mm in diameter. The mid-peripheral optical zone also has a base power of about -2.00D. Interspersed throughout the mid-peripheral optical zone 2d are a plurality of light modulating cells. As illustrated, the light modulating cells are circular in shape. Optically, a first subset of the plurality of the light modulating cells have an optical power of about +2.00D (when combined with base lens, 0.00D in power). The first subset of the plurality of the light modulating cells have a diameter of about 0.8 mm. Optically, a second subset of the plurality of light modulating cells have an optical power of about -0.50D (when combined with base lens, -2.50D in power). The second subset of the plurality of the light modulating cells have a diameter of about 0.8 mm. Light rays passing through the +2.00D powered light modulating cells focus more anteriorly to light rays passing through the -2.00D base power and light rays passing through the -0.50D light modulating cells are focused more posteriorly compared to light rays directed through the base optical power (as well as the +2.00D light modulating cells). As a result, the lens design illustrated in FIG. 24 causes the light rays to be focused on at least three different images planes. As further illustrated, the light modulating cells are positioned in a substantially squared arrangement that is repeated. The distribution of the number of first subset of light modulating cells to the second subset of light modulating cells is about 90/10. The peripheral optical zone beyond the mid-peripheral zone may be uniform in power or may be interspersed with light modulating cells in substantially the same (or different) manner to that described herein.

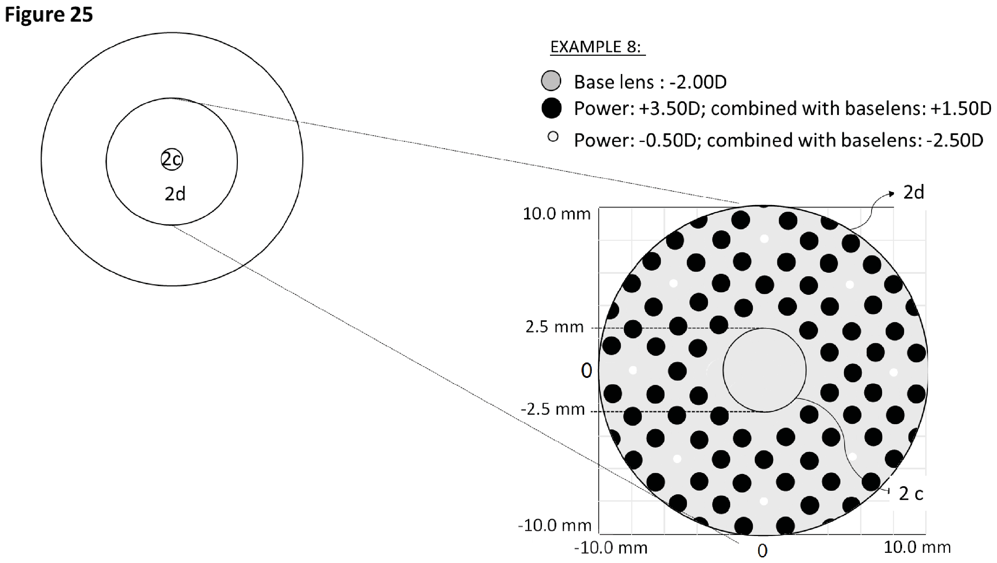

FIG. 25 is a power map of an exemplary ophthalmic lens for a myopic eye in accordance with some embodiments described herein. As illustrated, FIG. 25 provides the power map of an ophthalmic lens (e.g., a spectacle lens) of FIG. 2 which comprises a base lens and a plurality of light modulating cells incorporated into or on the base lens. The central optical (e.g., pupillary) zone 2c of the ophthalmic lens is about 5.0 mm in diameter and has a uniform (or substantially uniform) power of about -2.00D to correct for the distance refractive error of a -2.00D myopic eye. Surrounding the central zone, is the mid-peripheral optical zone 2d of about 20 mm in diameter. The mid-peripheral optical zone also has a base power of about -2.00D. Interspersed throughout the mid-peripheral optical zone 2d are a plurality of light modulating cells. As illustrated, the light modulating cells are circular in shape. Optically, a first subset of the plurality of the light modulating cells have an optical power of about +3.50D (when combined with base lens, +1.50D in power). The first subset of the plurality of the light modulating cells have a diameter of about 1.1 mm. Optically, a second subset of the plurality of light modulating cells have an optical power of about -0.50D (when combined with base lens, -2.50D in power). The second subset of the plurality of the light modulating cells have a diameter of about 0.5 mm. Light rays passing through the +3.50D light modulating cells focus more anteriorly to light rays passing through the -2.00D base power and light rays passing through the -0.50D light modulating cells are focused more posteriorly compared to light rays directed through the base optical power (as well as the +3.50D light modulating cells). As a result, the lens design illustrated in FIG. 25 causes the light rays to be focused on at least three different images planes. As further illustrated, the subset of light modulating cells are positioned in a substantially squared arrangement that repeats. The distribution of the number of first subset of light modulating cells to the second subset of light modulating cells is about 90/10. The peripheral optical zone beyond the mid-peripheral zone may be uniform in power or may be interspersed with light modulating cells in substantially the same (or different) manner to that described herein.

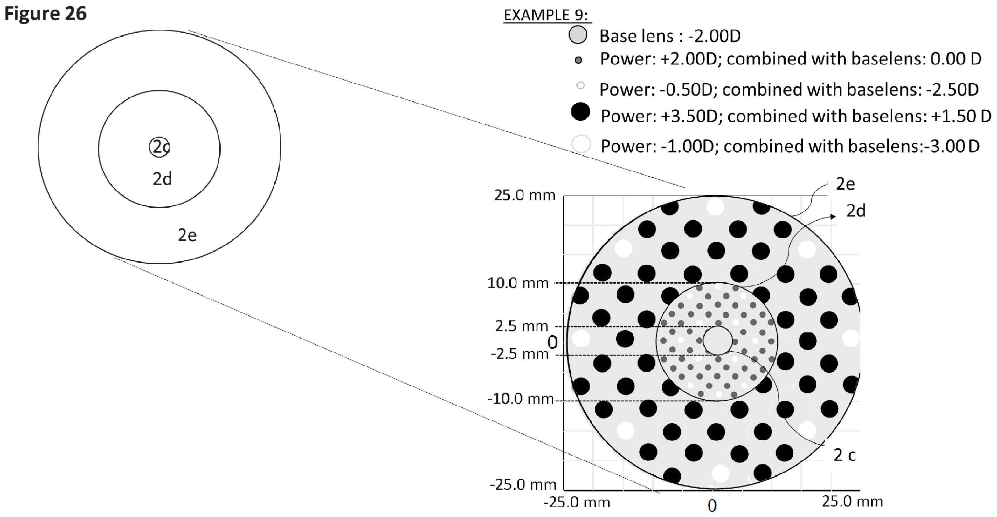

FIG. 26 is a power map of an exemplary ophthalmic lens for a myopic eye in accordance with some embodiments described herein. As illustrated, FIG. 26 provides the power map of an ophthalmic lens (e.g., a spectacle lens) of FIG. 2 which comprises a base lens and a plurality of light modulating cells incorporated into or on the base lens. The central optical (e.g., pupillary) zone 2c of the ophthalmic lens is about 5.0 mm in diameter and has a uniform (or substantially uniform) power of about -2.00D to correct for the distance refractive error of a -2.00D myopic eye. Surrounding the central zone, is the mid-peripheral optical zone 2d of about 20 mm in diameter. The mid-peripheral optical zone also has a base power of about -2.00D. Interspersed throughout the mid-peripheral optical zone 2d are a plurality of light modulating cells. As illustrated, the light modulating cells are circular in shape. Optically, a first subset of the plurality of the light modulating cells in the mid-peripheral zone have an optical power of about +2.00D (when combined with base lens, 0.00D in power). The first subset of the plurality of the light modulating cells have a diameter of about 0.8 mm. Optically, a second subset of the plurality of light modulating cells in the mid-peripheral optical zone have an optical power of about -0.50D (when combined with base lens, -2.50D in power). The second subset of the plurality of the light modulating cells have a diameter of about 0.8 mm. Surrounding the mid-peripheral optical zone 2d, is the peripheral optical zone 2e of about 50 mm in diameter. The peripheral optical zone also has a base optical power of about -2.00D. Interspersed throughout the peripheral optical zone 2e are a plurality of light modulating cells. As illustrated, the light modulating cells are circular in shape. Optically, a first subset of the plurality of the light modulating cells have an optical power of about +3.50D (when combined with base lens, +1.50D in power). The first subset of the plurality of the light modulating cells have a diameter of about 3 mm. Optically, a second subset of the plurality of light modulating cells have an optical power of about -1.00D resulting in relatively more negative power than the base power by about -1.00D (when combined with base lens, -3.00D in power). The second subset of the plurality of the light modulating cells have a diameter of about 2 mm. Light rays passing through the +2.00D light modulating cells and the +3.50D light modulating cells focus more anteriorly to light rays passing through the -2.00D base power and light rays passing through the -0.50D light modulating cells and the -1.00D light modulating cells are focused more posteriorly compared to light rays directed through the base optical power (as well as the +2.00D and the +3.50D light modulating cells). As a result, the lens design illustrated in FIG. 26 causes the light rays to be focused on at least five different image planes. As further illustrated, the subset of light modulating cells are positioned in a substantially squared arrangement that repeats. The distribution of the number of first subset of light modulating cells to the second subset of light modulating cells in the mid-peripheral optical zone and the peripheral optical zone is about 90/10.

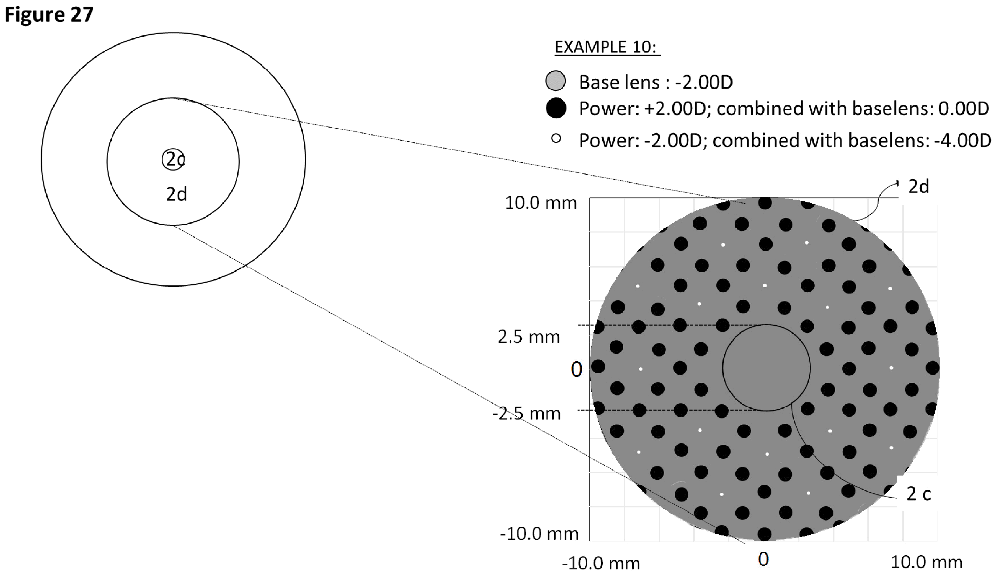

FIG. 27 is a power map of an exemplary ophthalmic lens for a myopic eye in accordance with some embodiments described herein. As illustrated, FIG. 27 provides the power map of an ophthalmic lens (e.g., a spectacle lens) of FIG. 2 which comprises a base lens and a plurality of light modulating cells incorporated into or on the base lens. The central optical (e.g., pupillary) zone 2c of the ophthalmic lens is about 5.0 mm in diameter and has a uniform (or substantially uniform) power of about -2.00D to correct for the distance refractive error of a -2.00D myopic eye. Surrounding the central zone, is the mid-peripheral optical zone 2d of about 20 mm in diameter. The mid-peripheral optical zone also has a base power of about -2.00D. Interspersed throughout the mid-peripheral optical zone 2d are a plurality of light modulating cells. As illustrated, the light modulating cells are circular in shape. Optically, a first subset of the plurality of the light modulating cells have an optical power of about +2.00D (when combined with base lens, 0.00D in power). The first subset of the plurality of the light modulating cells have a diameter of about 0.8 mm. Optically, a second subset of the plurality of light modulating cells have an optical power of about -2.00D (when combined with base lens, -4.00D in power). The second subset of the plurality of the light modulating cells have a diameter of about 0.2 mm. Light rays passing through the +2.00D powered light modulating cells focus more anteriorly to light rays passing through the -2.00D base power and light rays passing through the -2.00D light modulating cells are focused more posteriorly compared to light rays directed through the base optical power (as well as the +2.00D light modulating cells). As a result, the lens design illustrated in FIG. 27 causes the light rays to be focused on at least three different images planes. As further illustrated, all the subset of light modulating cells are positioned in a substantially squared arrangement that repeats. The distribution of the number of the first subset of light modulating cells to the second subset of light modulating cells is about 90/10. The peripheral optical zone beyond the mid-peripheral zone may be uniform in power or may be interspersed with light modulating cells in substantially the same (or different) manner to that described herein.

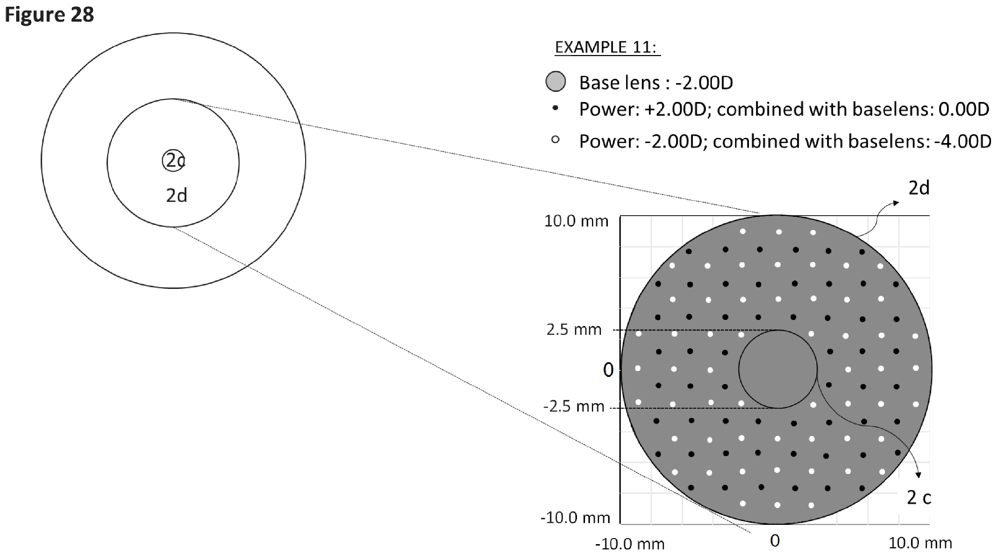

FIG. 28 is a power map of an exemplary ophthalmic lens for a myopic eye in accordance with some embodiments described herein. As illustrated, FIG. 28 provides the power map of an ophthalmic lens (e.g., a spectacle lens) of FIG. 2 which comprises a base lens and a plurality of light modulating cells incorporated into or on the base lens. The central optical (e.g., pupillary) zone 2c of the ophthalmic lens is about 5.0 mm in diameter and has a uniform (or substantially uniform) power of about -2.00D to correct for the distance refractive error of a -2.00D myopic eye. Surrounding the central zone, is the mid-peripheral optical zone 2d of about 20 mm in diameter. The mid-peripheral optical zone also has a base power of about -2.00D. Interspersed throughout the mid-peripheral optical zone 2d are a plurality of light modulating cells. As illustrated, the light modulating cells are circular in shape. Optically, a first subset of the plurality of the light modulating cells have a positive power by of about +2.00D (power in combination with base power is plano). The first subset of the plurality of the light modulating cells have a diameter of about 0.2 mm. Optically, a second subset of the plurality of light modulating cells have a relatively more negative power than the base power by about -2.00D (in combination with base lens the power is -4.00D). The second subset of the plurality of the light modulating cells have a diameter of about 0.2 mm. Light rays passing through the +2.00D light modulating cells focus more anteriorly to light rays passing through the -2.00D base power and light rays passing through the -2.00D light modulating cells are focused more posteriorly compared to light rays directed through the base optical power (as well as the +2.00D light modulating cells). As a result, the lens design illustrated in FIG. 28 causes the light rays to be focused on at least three different images planes. As further illustrated, all the subset of light modulating cells are positioned in a substantially squared arrangement that repeats. The distribution of the number of first subset of light modulating cells to the second subset of light modulating cells is about 50/50. The peripheral optical zone beyond the mid-peripheral zone may be uniform in power or may be interspersed with light modulating cells in substantially the same (or different) manner to that described herein.

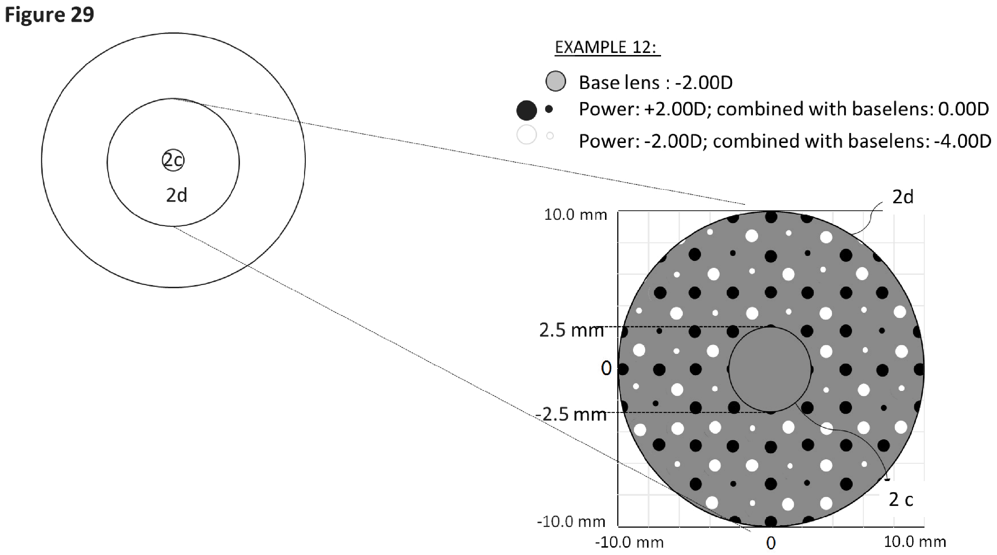

FIG. 29 is a power map of an exemplary ophthalmic lens for a myopic eye in accordance with some embodiments described herein. As illustrated, FIG. 29 provides the power map of an ophthalmic lens (e.g., a spectacle lens) of FIG. 2 which comprises a base lens and a plurality of light modulating cells incorporated into or on the base lens. The central optical (e.g., pupillary) zone 2c of the ophthalmic lens is about 5.0 mm in diameter and has a uniform (or substantially uniform) power of about -2.00D to correct for the distance refractive error of a -2.00D myopic eye. Surrounding the central zone, is the mid-peripheral optical zone 2d of about 20 mm in diameter. The mid-peripheral optical zone also has a base optical power of about -2.00D. Interspersed throughout the mid-peripheral optical zone 2d are a plurality of light modulating cells. As illustrated, the light modulating cells are circular in shape. Optically, a first subset of the plurality of the light modulating cells have a positive power by about +2.00D (in combination with base lens, power is plano). Some of the first subset of the plurality of the light modulating cells have a diameter of about 0.2 mm and some of the first subset of the plurality of the light modulating cells have a diameter of about 0.8 mm. Optically, a second subset of the plurality of light modulating cells have a relatively more negative power than the base lens power by about -2.00D (in combination with base lens, power is -4.00D) . Some of the second subset of the plurality of the light modulating cells have a diameter of about 0.2 mm and some of the second subset of the plurality of the light modulating cells have a diameter of about 0.8 mm. Light rays passing through the +2.00D light modulating cells focus more anteriorly to light rays passing through the -2.00D base lens power and light rays passing through the -2.00D light modulating cells are focused more posteriorly compared to light rays directed through the base lens power (as well as the +2.00D light modulating cells). As a result, the lens design illustrated in FIG. 29 causes the light rays to be focused on at least three different images planes. As further illustrated, all the subset of light modulating cells are positioned in a substantially squared arrangement that repeats. The distribution of the number of first subset of light modulating cells to the second subset of light modulating cells is about 50/50. The peripheral optical zone beyond the mid-peripheral zone may be uniform in power or may be interspersed with light modulating cells in substantially the same (or different) manner to that described herein.

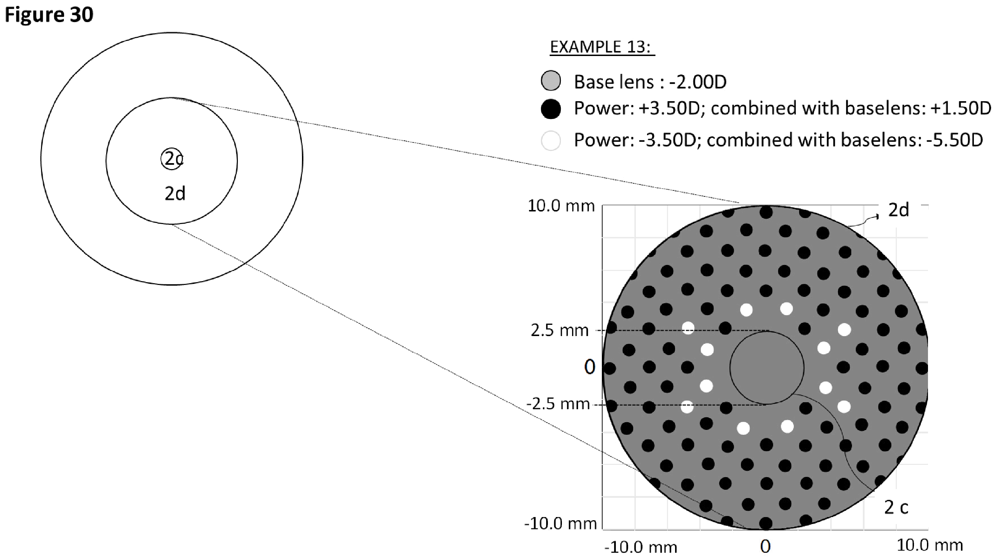

FIG. 30 is a power map of an exemplary ophthalmic lens with both concave and convex light modulating cells for a myopic eye in accordance with some embodiments described herein. As illustrated, FIG. 30 provides the power map of an ophthalmic lens (e.g., a spectacle lens) of FIG. 2 which comprises a base lens and a plurality of light modulating cells incorporated into or on the base lens. The central optical (e.g., pupillary) zone 2c of the ophthalmic lens is about 5.0 mm in diameter and has a uniform (or substantially uniform) power of about -2.00D to correct for the distance refractive error of a -2.00D myopic eye. Surrounding the central zone, is the mid-peripheral optical zone 2d of about 20 mm in diameter. The mid-peripheral optical zone also has a base power of about -2.00D. Interspersed throughout the mid-peripheral optical zone 2d are a plurality of light modulating cells. As illustrated, the light modulating cells are circular in shape. Optically, a first subset of the plurality of the light modulating cells have a positive power by about +3.50D (in combination with base lens, power is +1.50D). The first subset of the plurality of the light modulating cells have a diameter of about 0.8 mm. Optically, a second subset of the plurality of light modulating cells have a negative power by about -3.50D (in combination with base lens, power is -5.50D). The second subset of the plurality of the light modulating cells have a diameter of about 0.8 mm. Light rays passing through the +3.50D light modulating cells focus more anteriorly to light rays passing through the -2.00D base lens power and light rays passing through the -3.50D light modulating cells are focused more posteriorly compared to light rays directed through the base lens power (as well as the +3.50D light modulating cells). As a result, the lens design illustrated in FIG. 30 causes the light rays to be focused on at least three different images planes. As further illustrated, all the subset of light modulating cells are positioned in a substantially squared arrangement that repeats. The distribution of the number of first subset of light modulating cells to the second subset of light modulating cells is about 10/90. The peripheral optical zone beyond the mid-peripheral zone may be uniform in power or may be interspersed with light modulating cells in substantially the same (or different) manner to that described herein.

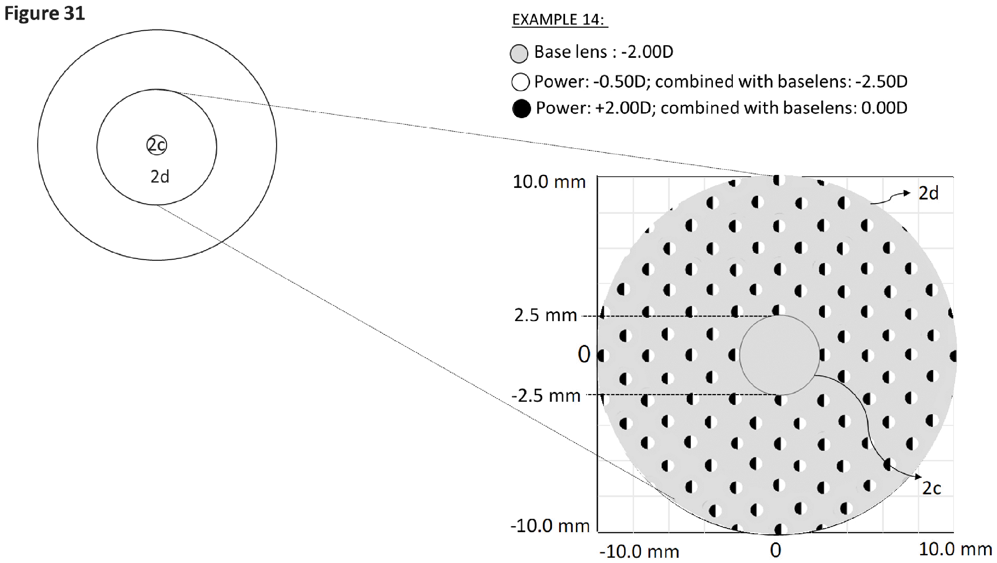

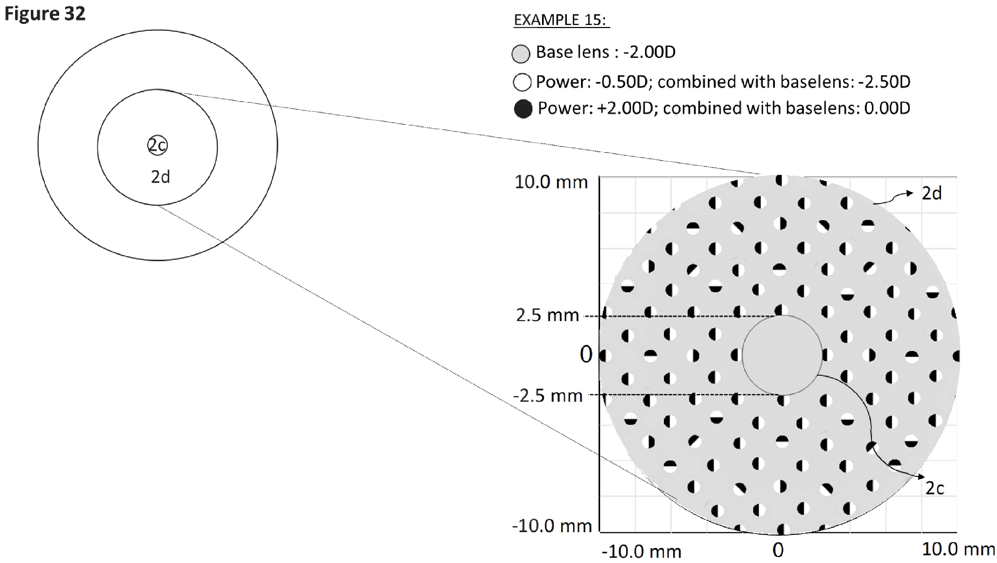

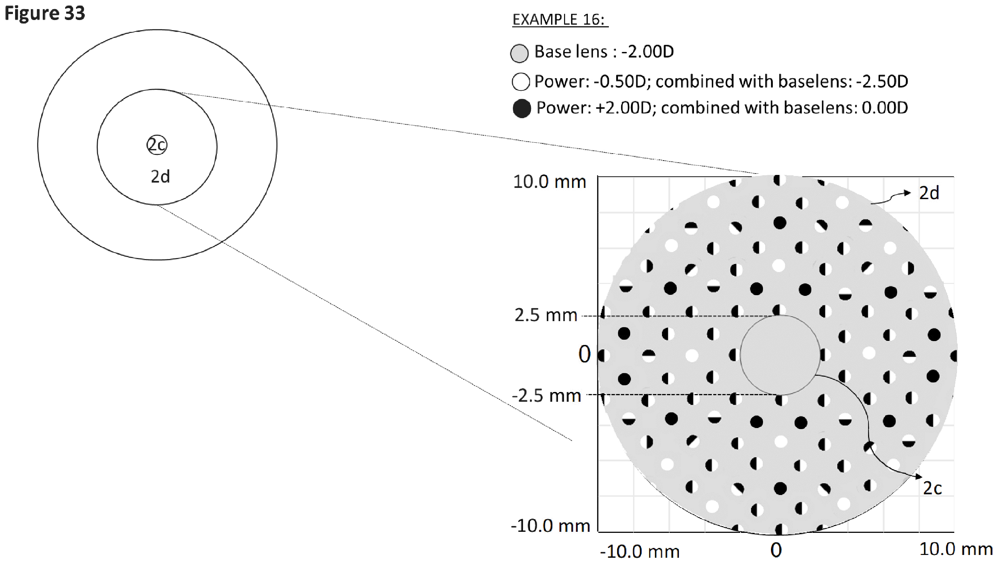

FIG. 31 is a power map of an exemplary ophthalmic lens for a myopic eye with multifocal light modulating cells in accordance with some embodiments described herein. As illustrated, FIG. 31 provides the power map of an ophthalmic lens (e.g., a spectacle lens) of FIG. 2 which comprises a base lens and a plurality of multifocal light modulating cells incorporated into or on the base lens. The central optical (e.g., pupillary) zone 2c of the ophthalmic lens is about 5.0 mm in diameter and has a uniform (or substantially uniform) power of about -2.00D to correct for the distance refractive error of a -2.00D myopic eye. Surrounding the central zone, is the mid-peripheral optical zone 2d of about 20 mm in diameter. The mid-peripheral optical zone also has a base power of about -2.00D. Interspersed throughout the mid-peripheral optical zone 2d are a plurality of multifocal light modulating cells. As illustrated, the light modulating cells are circular in shape. The multifocal light modulating cells have a variable power, with a portion of the multifocal light modulating cells having a negative power of about -0.50D (in combination with base lens, power is -2.50D) and a portion of the multifocal light modulating cells having a positive power of about +2.00D (in combination with base lens, power is 0.00D). As a result, the lens design illustrated in FIG. 31 causes the light rays to be focused on at least three different images planes. As further illustrated, the light modulating cells are positioned in a substantially squared arrangement that repeats. In some embodiments, the multifocal light modulating cells may be oriented in the same manner (as shown in FIG. 31) and in some embodiments, the multifocal light modulating cells may be oriented in different orientations (see, e.g., FIG 32) and in some embodiments, in addition to the multifocal light modulating cells there may be positive and/or negative powered light modulating cells (see, e.g., FIG 33). In some embodiments, the multifocal light modulating cells on one portion of the lens may be a mirror image of the multifocal light modulating cells on the opposite portion of the lens. The peripheral optical zone beyond the mid-peripheral zone may be uniform in power or may be interspersed with light modulating cells in substantially the same (or different) manner to that described herein.

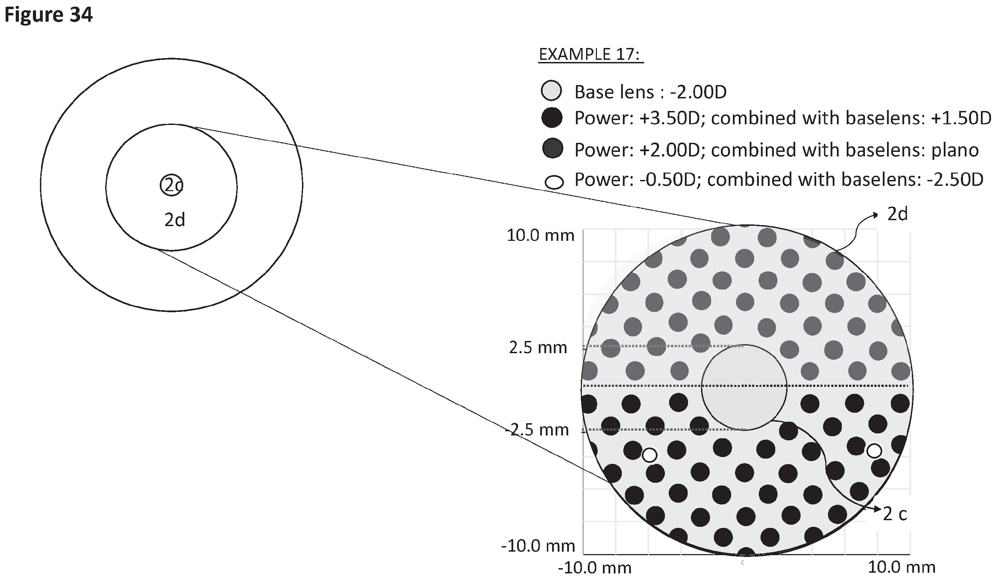

FIG. 34 is a power map of an exemplary ophthalmic lens for a myopic eye in accordance with some embodiments described herein. As illustrated, FIG. 34 provides the power map of an ophthalmic lens (e.g., a spectacle lens) of FIG. 2 which comprises a base lens and a plurality of light modulating cells incorporated into or on the base lens. The central optical (e.g., pupillary) zone 2c of the ophthalmic lens is about 5.0 mm in diameter and has a uniform (or substantially uniform) power of about -2.00D to correct for the distance refractive error of a -2.00D myopic eye. Surrounding the central zone, is the mid-peripheral optical zone 2d of about 20 mm in diameter. The mid-peripheral optical zone also has a base power of about -2.00D. Interspersed throughout the mid-peripheral optical zone 2d are a plurality of light modulating cells. As illustrated, the light modulating cells are circular in shape. Optically, a first subset of the plurality of the light modulating cells in the inferior half of the mid-peripheral zone on the front surface of the ophthalmic lens have a positive power by about +3.50D (in combination with base lens, power is +1.50D). The first subset of the plurality of the light modulating cells have a diameter of about 0.8 mm. Optically, a second subset of the plurality of light modulating cells in the superior half of the mid-peripheral zone on the back surface of the ophthalmic lens have a positive power by about +2.00D (in combination with base lens, power is planoD) and negative light modulating cells by about - 0.50D (in combination with base lens power is -2.50D). The second subset of the plurality of the light modulating cells vary in diameter with about 0.8 mm for positive and plano light modulating cells and 0.5mm for negative light modulating cells. Light rays passing through the +3.50D light modulating cells focus more anteriorly to light rays passing through the +2.00D light modulating cells and -2.00D base lens power and light rays passing through the -0.50D light modulating cells are focused more posteriorly compared to light rays directed through the base lens power (as well as the +3.50D and +2.00DD light modulating cells). As a result, the lens design illustrated in FIG. 34 causes the light rays to be focused on at least four different images planes. As further illustrated, all the subset of light modulating cells are positioned in a substantially squared arrangement that repeats. The distribution of the number of first subset of light modulating cells to the second subset of light modulating cells is about 50/50. The peripheral optical zone beyond the mid-peripheral zone may be uniform in power or may be interspersed with light modulating cells in substantially the same (or different) manner to that described herein.

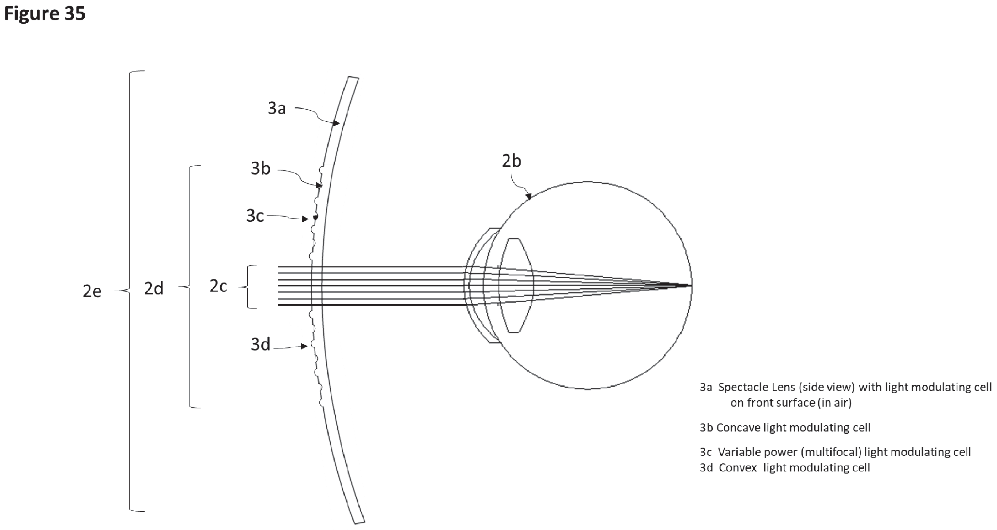

FIG. 35 is a schematic of an exemplary ophthalmic lens with both concave and convex light modulating cells on the front surface of the ophthalmic lens in accordance with some embodiments described herein. As illustrated in FIG. 35, the light modulating cells are positioned on the surface of the ophthalmic lens (e.g. spectacle lens 2e). The central optical (e.g., pupillary) zone 2c of the ophthalmic lens is about 5.0 mm in diameter and has a uniform (or substantially uniform) power of about -2.00D to correct for the distance refractive error of a -2.00D myopic eye. Surrounding the central zone, is the mid-peripheral optical zone 2d of about 20 mm in diameter. The mid-peripheral optical zone also has a base power of about -2.00D. Interspersed throughout the mid-peripheral optical zone 2d are a plurality of light modulating cells. In some embodiments, the concave light modulating cells 3b may have a relatively more negative power than the base lens power of the lens 3a. In some embodiments, the light modulating cells may be a multifocal light modulating cell (3c) with a portion of the light modulating cell relatively more positive than the base lens power and other portion of the light modulating cell that is relatively more negative than the base lens power. In some embodiments, the convex light modulating cells 3d may have a relatively more positive power than the base lens power of the lens 3a.

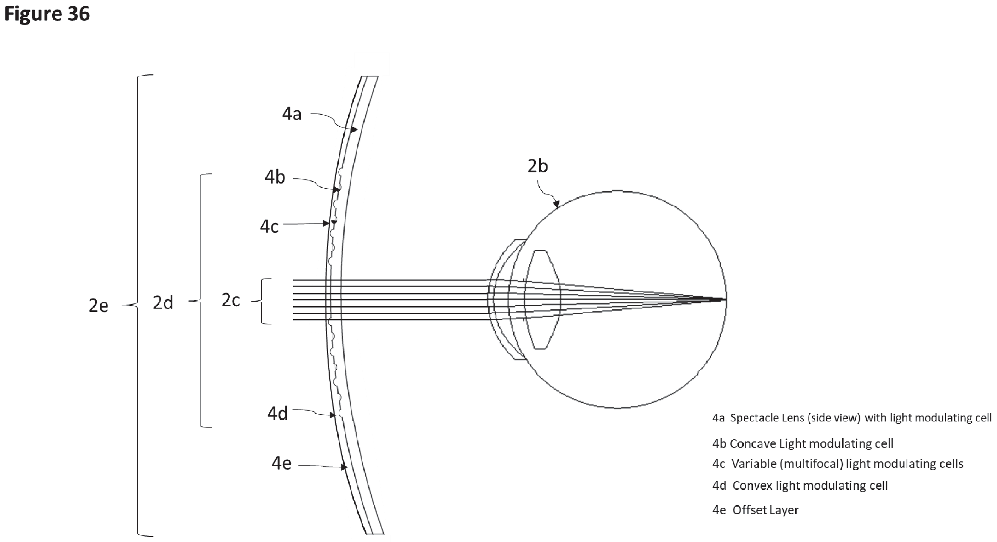

FIG. 36 is a schematic of an exemplary ophthalmic lens with concave, multifocal and convex light modulating cells embedded in the lens matrix of the ophthalmic lens in accordance with some embodiments described herein. As illustrated in FIG. 36, the light modulating cells are embedded in the lens matrix of the ophthalmic lens (e.g. spectacle lens 2e). The central optical (e.g., pupillary) zone 2c of the ophthalmic lens is about 5.0 mm in diameter and has a uniform (or substantially uniform) power of about -2.00D to correct for the distance refractive error of a -2.00D myopic eye. Surrounding the central zone, is the mid-peripheral optical zone 2d of about 20 mm in diameter. The mid-peripheral optical zone also has a base power of about -2.00D. Interspersed throughout the mid-peripheral optical zone 2d are a plurality of light modulating cells. In some embodiments, the light modulating cells may be positioned between the ophthalmic lens 4a and an offset layer 4e. In some embodiments, the light modulating cells may be positioned between the ophthalmic lens and a coating. In some embodiments, the coating may be an anti-scratch coating, anti-reflective coating or a light wavelength absorbing coating. In some embodiments, the concave light modulating cells 4b may have a relatively more negative power than the base power of the lens 4a. In some embodiments, the light modulating cells may have a variable (multifocal) power (4c) with a portion of the light modulating cell relatively more positive than the base lens power and other portion of the light modulating cell that is relatively more negative than the base lens power In some embodiments, the convex light modulating cells 4d may have a relatively more positive power than the base power of the lens 4a.

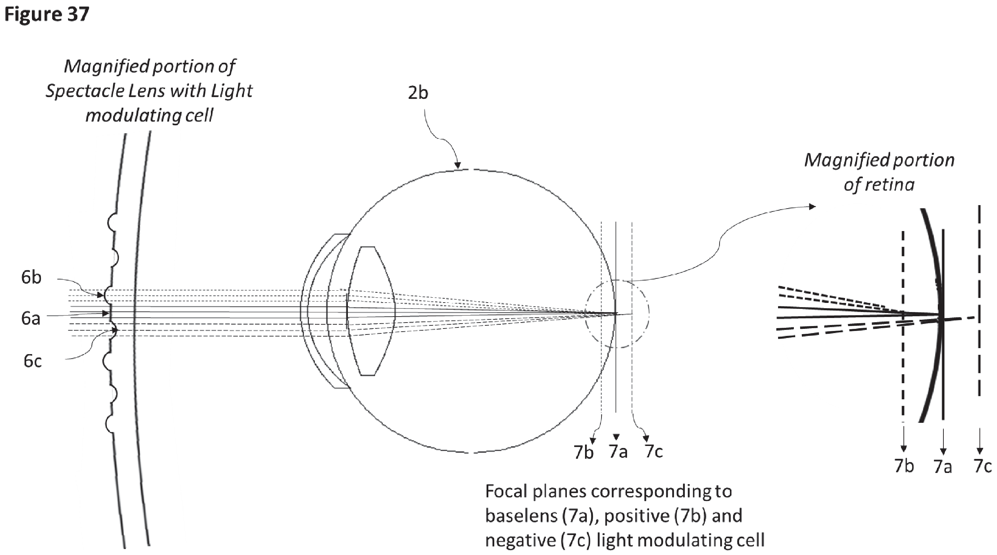

FIG. 37 is a magnified schematic of an exemplary ophthalmic lens with both concave and convex light modulating cells on the front surface of the ophthalmic lens to illustrate light directed through the spectacle lens focused at multiple planes at the retina in accordance with some embodiments described herein. As illustrated in FIG. 37, the light modulating cells are positioned on the surface of the ophthalmic lens (e.g. spectacle lens) but may also be embedded in the ophthalmic lens. In some embodiments, light may pass through the lens in one or more of (or all of) a portion of the ophthalmic lens with a base power 6a, a portion of the ophthalmic lens with a concave light modulating cell 6c, and a portion of the ophthalmic lens with a convex light modulating cell 6b. As illustrated, in some embodiments, light rays passing through the different portions of the ophthalmic lens 6a, 6b, and 6c may be focused on corresponding image planes 7a, 7b, and 7c. The base power portion of the ophthalmic lens 6a may cause light to focus on the image plane 7a. As illustrated, in some embodiments, the image plane 7b in front of (anterior to) the image plane 7a may correspond to the light passing through the convex (relatively more positive power than the base power) light modulating cells of the ophthalmic lens. As illustrated, in some embodiments, the image plane 7c behind (posterior to) the image plane 7a may correspond to the light passing through the concave (relatively more negative power than the base power) light modulating cells of the ophthalmic lens.

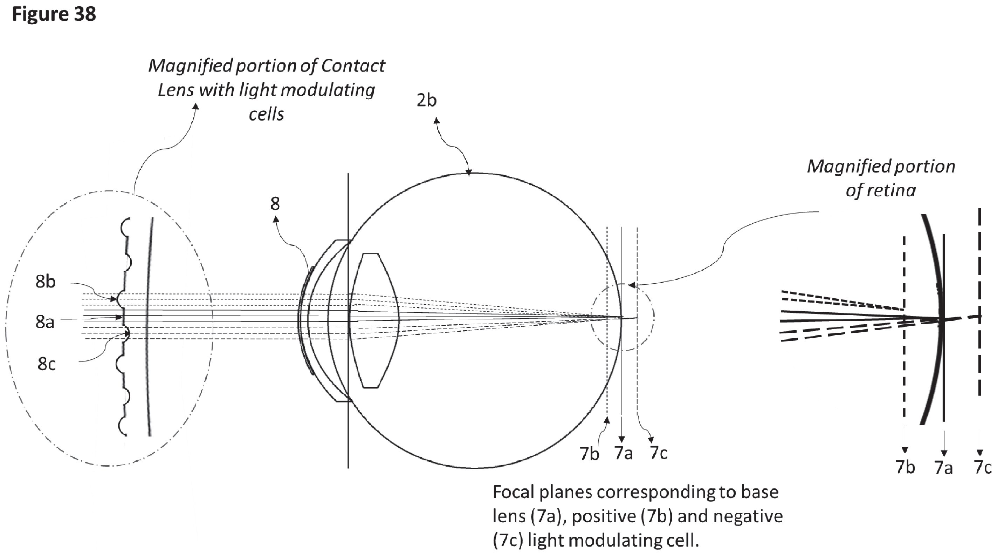

FIG 38 is a magnified schematic of an exemplary ophthalmic lens with both concave and convex light modulating cells on the front surface of the ophthalmic lens, i.e. a contact lens(8) to illustrate light directed through the contact lens focused at multiple planes at the retina in accordance with some embodiments described herein. As illustrated in FIG. 38, the light modulating cells are positioned on the surface of the ophthalmic lens (e.g. contact lens) but may also be embedded in the contact lens. In some embodiments, light may pass through the lens in one or more of (or all of) a portion of the ophthalmic lens with a base power 8a, a portion of the ophthalmic lens with a concave light modulating cell 8c, and a portion of the ophthalmic lens with a convex light modulating cell 8b. As illustrated, in some embodiments, light rays passing through the different portions of the ophthalmic lens 8a, 8b, and 8c may be focused on corresponding image planes 7a, 7b, and 7c. The base power portion of the ophthalmic lens 8a may cause light to focus on the image plane 7a. As illustrated, in some embodiments, the image plane 7b in front of (anterior to) the image plane 7a may correspond to the light passing through the convex (relatively more positive power than the base power) light modulating cells of the contact lens. As illustrated, in some embodiments, the image plane 7c behind (posterior to) the image plane 7a may correspond to the light passing through the concave (relatively more negative power than the base power) light modulating cells of the contact lens.

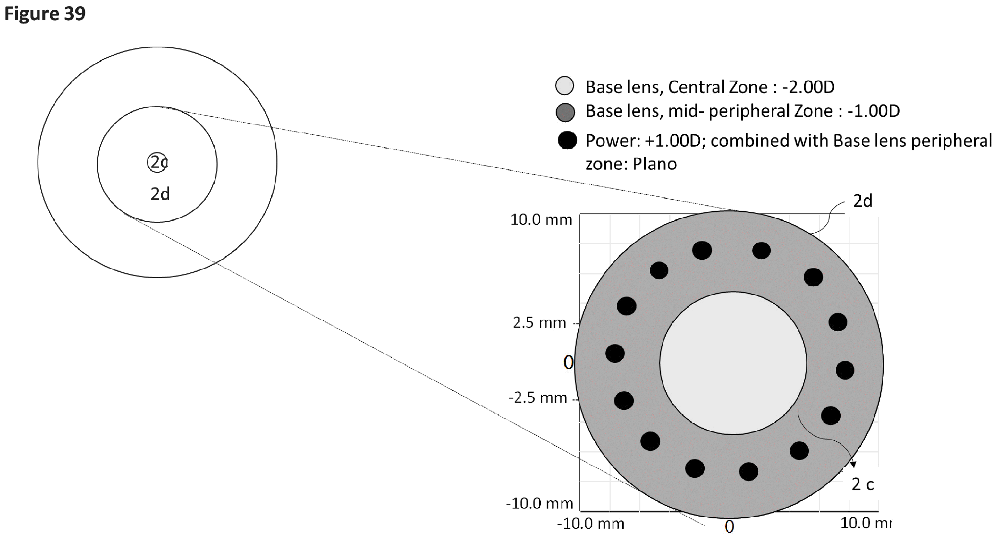

FIG. 39 is a power map of an exemplary ophthalmic lens for a myopic eye in accordance with some embodiments described herein. As illustrated, FIG. 39 provides the power map of an ophthalmic lens (e.g., a spectacle lens) of FIG. 2 which comprises a base lens and a plurality of light modulating cells incorporated into or on the base lens. The central optical (e.g., pupillary) zone 2c of the ophthalmic lens is about 5.0 mm in diameter and has a uniform (or substantially uniform) power of about -2.00D to correct for the distance refractive error of a -2.00D myopic eye. Surrounding the central zone, is the mid-peripheral optical zone 2d of about 20 mm in diameter. The mid-peripheral optical zone has a base power of about -1.00D. Interspersed throughout the mid-peripheral optical zone 2d are a plurality of light modulating cells. As illustrated, the light modulating cells are circular in shape. Optically, the plurality of the light modulating cells have a positive power by about +1.00D (in combination with base lens peripheral zone, power is plano D). The plurality of the light modulating cells have a diameter of about 0.8 mm. Light rays passing through the +1.00D light modulating cells focus more anteriorly to light rays passing through the -1.00D mid-peripheral zone and -2.00D base lens power. As a result, the lens design illustrated in FIG. 39 causes the light rays to be focused on at least three different images planes. The peripheral optical zone beyond the mid-peripheral zone may be uniform in power and may be similar in power to the mid-peripheral zone and may be interspersed with light modulating cells in substantially the same (or different) manner to that described herein.

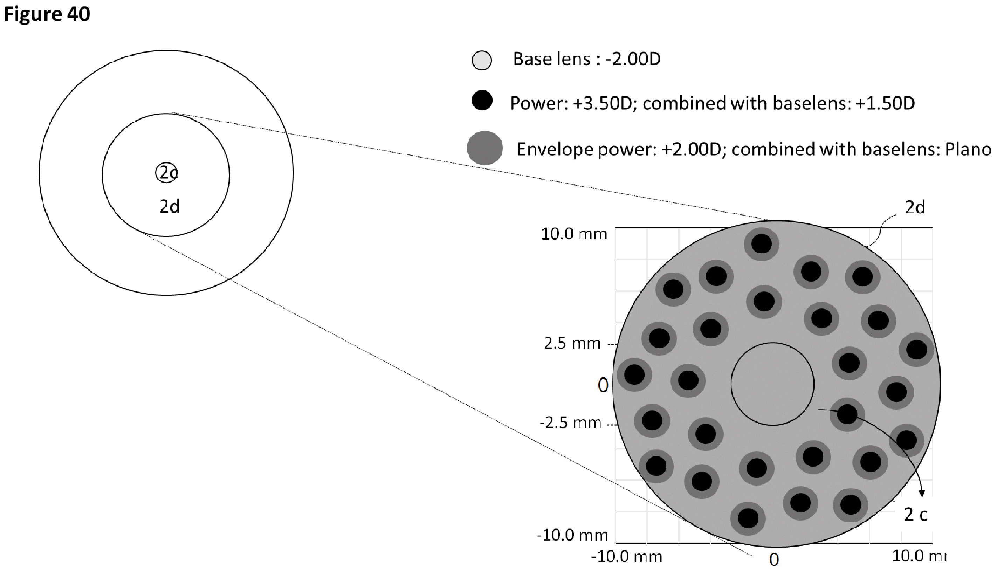

FIG. 40 is a power map of an exemplary ophthalmic lens for a myopic eye in accordance with some embodiments described herein. As illustrated, FIG. 40 provides the power map of an ophthalmic lens (e.g., a spectacle lens) of FIG. 2 which comprises a base lens and a plurality of light modulating cells incorporated into or on the base lens. The central optical (e.g., pupillary) zone 2c of the ophthalmic lens is about 5.0 mm in diameter and has a uniform (or substantially uniform) power of about -2.00D to correct for the distance refractive error of a -2.00D myopic eye. Surrounding the central zone, is the mid-peripheral optical zone 2d of about 20 mm in diameter. The mid-peripheral optical zone has a base power of about -2.00D similar to that of the central zone. Interspersed throughout the mid-peripheral optical zone 2d are a plurality of light modulating cells. As illustrated, the light modulating cells are circular in shape. Optically, the plurality of the light modulating cells have a positive power by about +3.50D (in combination with base lens, power is +1.50D). The plurality of the light modulating cells have a diameter of about 0.8 mm. Light rays passing through the +3.50D light modulating cells focus more anteriorly to light rays passing through the -2.00D base lens power. The plurality of light modulating cells are surrounded or enveloped by a zone (envelope zone), the power of which is different to that of the base power or the power of the light modulating cell. In FIG 40, the envelope zones are circular in shape and have a power of +2.00D (in combination with the base lens, power is plano). As a result, the lens design illustrated in FIG. 30 causes the light rays to be focused on at least three different images planes. The peripheral optical zone beyond the mid-peripheral zone may be uniform in power and may be similar in power to the mid-peripheral zone and may be interspersed with light modulating cells in substantially the same (or different) manner to that described herein.

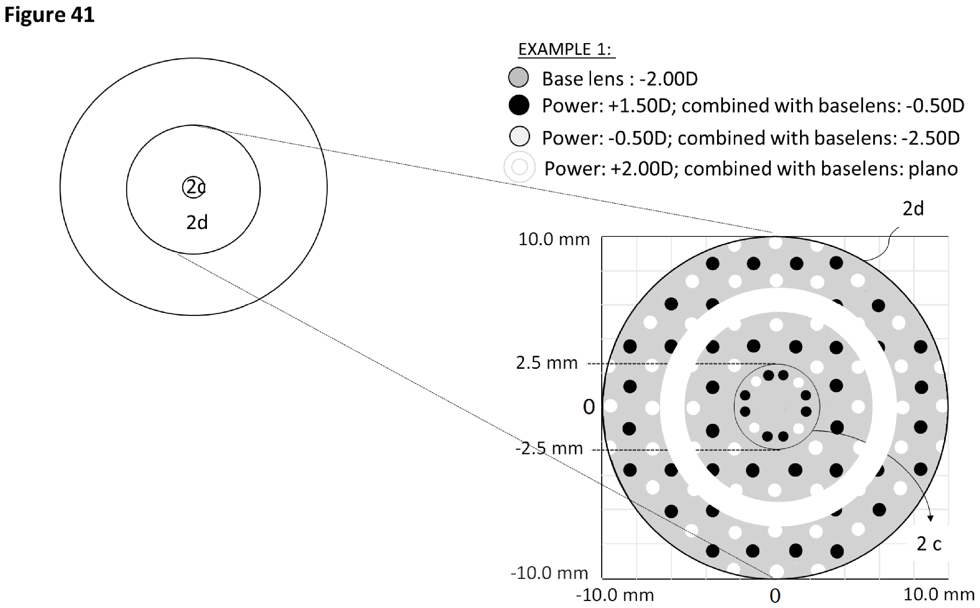

FIG. 41 is a power map of an exemplary ophthalmic lens for a myopic eye in accordance with some embodiments described herein. As illustrated, FIG. 41 provides the power map of an ophthalmic lens (e.g., a spectacle lens) of FIG. 2 which comprises a base lens and a plurality of light modulating cells incorporated into or on the base lens. The central optical (e.g., pupillary) zone 2c of the ophthalmic lens is about 5.0 mm in diameter and has a uniform (or substantially uniform) power of about -2.00D to correct for the distance refractive error of a -2.00D myopic eye. Surrounding the central zone, is the mid-peripheral optical zone 2d of about 20 mm in diameter. The mid-peripheral optical zone has a base power of about -2.00D similar to that of the central zone. Interspersed throughout the central and mid-peripheral optical zone 2d are a plurality of light modulating cells. As illustrated, the light modulating cells are circular in shape. Optically, a first subset of the plurality of the light modulating cells have an optical power of +1.50D (when combined with base lens, the resultant power is -0.50D). Optically, a second subset of the plurality of light modulating cells have an optical power of -0.50D (when combined with base lens, the resultant power is - 2.50D). Light rays passing through the +1.50D light modulating cells focus more anteriorly to light rays passing through the -2.00D base lens power and light rays passing through the - 0.50D light modulating cells are focused more posteriorly compared to light rays directed through the base optical power (as well as the +1.50D light modulating cells). As a result, the lens design illustrated in FIG. 41 causes the light rays to be focused on at least three different images planes. As further illustrated, the subsets of light modulating cells are positioned in a substantially squared arrangement that is repeated. The distribution of the first subset of light modulating cells to the second subset of light modulating cells is about 50/50. Furthermore, the mid-peripheral optical zone comprises a ring with a power of about +2.00D (combined with base power: plano). Thus some of the light modulating cells may be surrounded or overlapped or conjoined to a side by the concentric zone. The peripheral optical zone beyond the mid-peripheral zone may be uniform in power and may be similar in power to the mid-peripheral zone and may be interspersed with light modulating cells in substantially the same (or different) manner to that described herein.

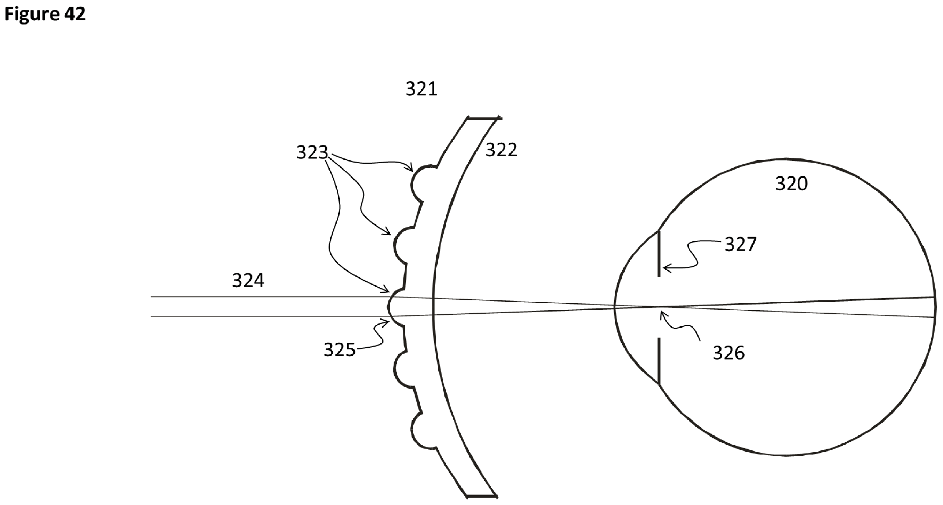

FIG. 42 is a schematic of an exemplary ophthalmic lens with a base lens and light modulating cells incorporated on the lens and an eye corrected with the ophthalmic lens in accordance with some embodiments described herein. In some embodiments, the ophthalmic lenses and/or method described herein may utilize light modulating cells whereby one or more of the focal lengths, or focal powers of the light modulating cells may be selected to place their corresponding focal plane(s) near to, about, or in the vicinity of an entrance pupil of an eye to deliver reduced contrast. In FIG. 42, a schematic of an exemplary ophthalmic lens 321 with a base lens 322 and light modulating cells 323 incorporated on the lens and an eye 320 corrected with the ophthalmic lens is shown in accordance with some embodiments described herein. FIG. 42 shows light rays 324 incident on and refracted by one light modulating cell 325. The focal length of light modulating cell 325 is selected to place its focal plane 326 near to the entrance pupil 327 of eye 320. The entrance pupil of the eye is the pupil (formed by the aperture opening of the iris) of the eye as seen by observers looking into the eye. That is, it is the apparent pupil as seen by the observer due to the optical component (for example, the cornea) of the eye in front of the iris/pupil.

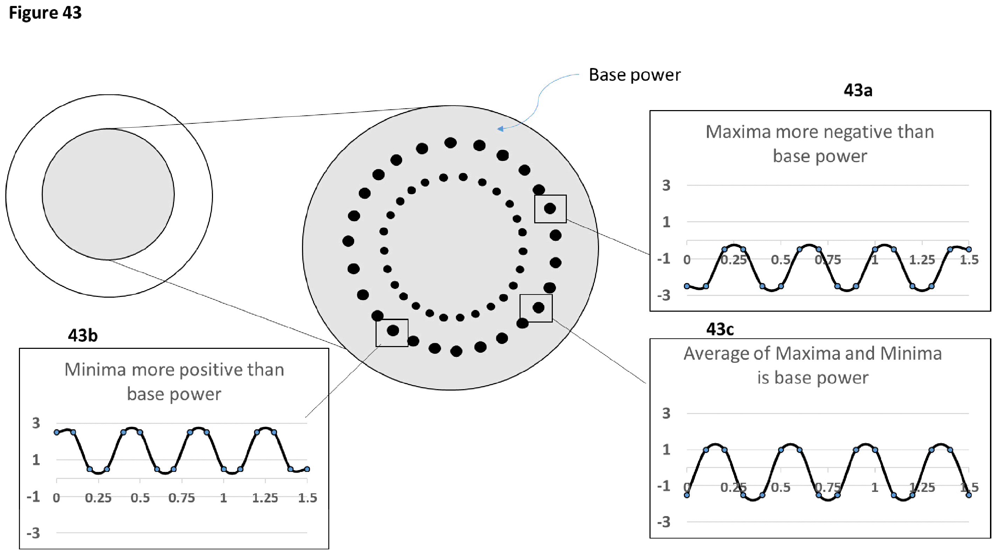

FIG. 43 is a schematic of an exemplary ophthalmic lens with a base lens and light modulating cells in accordance with some embodiments described herein. In some embodiments, the ophthalmic lenses and/or method described herein may utilize light modulating cells, wherein the substantially positive or negative or zero powered cell may have a power profile that is constantly variable and non-monotonic across the light modulating cell. In some embodiments, the maxima of the power profile may be more negative in refractive power than the base power (FIG 43a) or the minima of the power profile may be more positive than the base power (FIG 43b) or the average of the maxima and minima may be about the same as the base power.(FIG 43c) In some embodiments, the continuously varying power profile may vary in a periodic or aperiodic fashion. The continuously varying power profile may be formed by a series of changing curvatures or may be formed by incorporation of one or more higher order aberrations or a combination of the above.

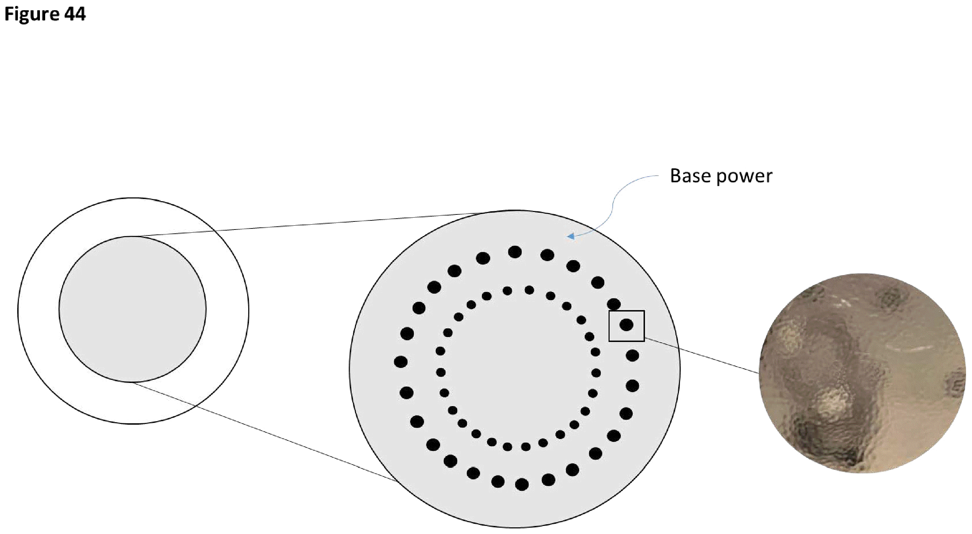

FIG. 44 is a schematic of an exemplary ophthalmic lens with a base lens and light modulating cells in accordance with some embodiments described herein. In some embodiments, the ophthalmic lenses and/or method described herein may utilize light modulating cells, wherein the light modulating cell may also diffuse light in addition to directing light to one or more planes. The light modulating cell may be refractive and formed by one or more higher order aberrations or may be formed by light scattering features or a combination of both.

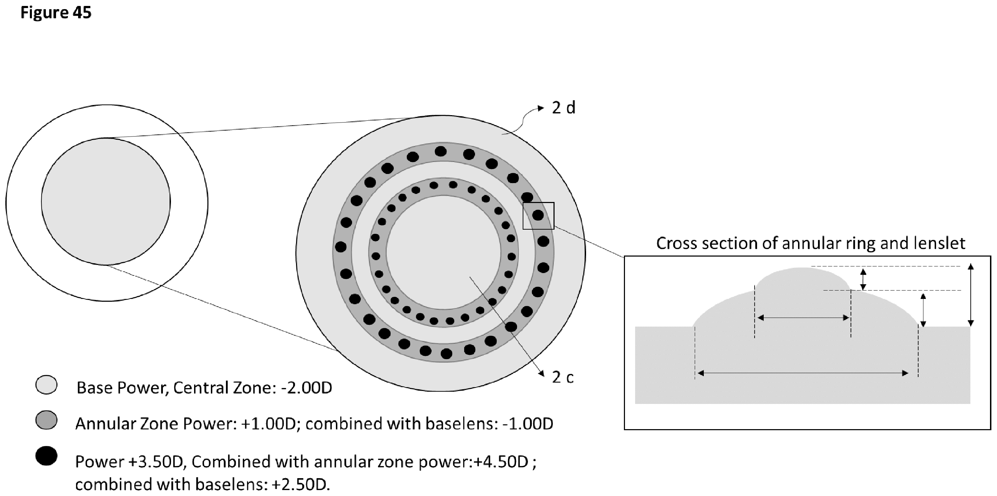

FIG. 45 is a schematic of an exemplary ophthalmic lens for a myopic eye in accordance with some embodiments described herein. As illustrated, FIG. 45 provides the power map of an ophthalmic lens (e.g., a spectacle lens) of FIG. 2 which comprises a base lens and a plurality of light modulating cells incorporated into or on the base lens. The central optical (e.g., pupillary) zone 2c of the ophthalmic lens is about 5.0 mm in diameter and has a uniform (or substantially uniform) power of about -2.00D to correct for the distance refractive error of a -2.00D myopic eye. The mid-peripheral optical zone 2d of the ophthalmic lens incorporates two rings with a power of about +1.00D (combined with base power : -1.0D). Interspersed throughout the rings are a plurality of light modulating cells. As illustrated, the light modulating cells are circular in shape. Optically, the plurality of the light modulating cells have an optical power of +3.50D (when combined with base lens, the resultant power is +2.50D). As a result, the lens design illustrated in FIG. 45 causes the light rays to be focused on at least three different images planes.

Further advantages of the claimed subject matter will become apparent from the following examples describing some embodiments of the claimed subject matter. In some embodiments , one or more than one (including for instance all) of the following further embodiments may comprise each of the other embodiments or parts thereof.

### Examples:

A1. An ophthalmic lens comprising: a base lens; and a plurality of multifocal light modulating cells.

A2. An ophthalmic lens comprising: a base lens configured to direct light to a first image plane; and a plurality of multifocal light modulating cells, wherein one or more of the plurality of multifocal light modulating cells refract light to at least two image planes, different from the first image plane.

A3. An ophthalmic lens comprising: a base lens configured to direct light to a first and a second image plane; and a plurality of multifocal light modulating cells, wherein one or more of the plurality of multifocal light modulating cells refract light to at least two image planes, different from the first and second image plane.

A4. An ophthalmic lens comprising: a base lens configured to direct light to a first image plane; a plurality of positively powered light modulating cells having a power that varies from 0.5D to 5D to refract light to one or more image planes located anteriorly relative to the first image plane; and a plurality of negatively powered light modulating cells having a power that varies from -0.5D to -5D to refract light to one or more image planes located posteriorly relative to the first image plane.

A5. An ophthalmic lens comprising: a base lens configured to direct light to a first image plane; and a plurality of light modulating cells, wherein one or more of the plurality of light modulating cells refract light to one or more image planes, different from the first image plane.

A6. The ophthalmic lens of any of the A examples, wherein one or more of the plurality of light modulating cells refract light to a second image plane different from the first image plane and/or one or more of a plurality of light modulating cells refract light to a third image plane different from the first and second image planes.

A7. The ophthalmic lens of any of the A examples, wherein the plurality of light modulating cells are configured to refract light to at least two (e.g., 2, 3, 4, 5, or 6) image planes, different from the first image plane.

A8. The ophthalmic lens of any of the A examples, wherein at least one of the plurality of light modulating cells is configured to refract light to at least two (e.g., 2, 3, or 4) image planes, different from the first image plane.

A9. The ophthalmic lens of any of examples A6-A8, wherein at least one of the second image plane and the third image plane is located anterior to first image plane.

A10. The ophthalmic lens of any of examples A6-A9, wherein at least one of the second image plane and the third image plane is located posterior to first image plane.

A11. The ophthalmic lens of any of the A examples, wherein one or more of the plurality of light modulating cells have a diameter that ranges from about 20 microns to about 3 mm.

A12. The ophthalmic lens of any of the A examples, wherein one or more of the plurality of light modulating cells have a power that is relatively more positive (e.g., convex in surface shape) relative to a power of the base surface.

A13. The ophthalmic lens of any of the A examples, wherein at least a portion of the plurality of light modulating cells have a power that is relatively more negative (e.g., concave in surface shape) as compared to the surrounding surface area.

A14. The ophthalmic lens of any of the A examples, wherein the plurality of light modulating cells are located in any combination of one or more of a central optical portion, a mid-peripheral optical zone, and a peripheral optical zone.

A15. The ophthalmic lens of any of the A examples, wherein a fill ratio of the light modulating cells to the total surface area of the ophthalmic lens (e.g., ratio of the total surface area of the light modulating cells to the total surface area of the ophthalmic lens) is about 5%, 10%, 15%, 20%, 25%, 30%, 35%, 40%, 45%, 50%, 55%, 60%, 65%, 70%, 75%, 80% or 85% (e.g., at least 5%, 10%, 15%, 20%, 25%, 30%, 35%, 40%, 45%, 50%, 55%, 60%, 65%, 70%, 75%, 80% or 85% or between 5-15%, 20-30%, 35-45%, 40-50%, 45-55%, 60-70%, 70-75%, 70-80% or 75-85%).

A16. The ophthalmic lens of any of the A examples, wherein fill ratio of the light modulating cells to the surface area corresponding to any of a central optical zone, a mid-peripheral optical zone, or a peripheral optical zone (e.g., ratio of the total surface area of the light modulating cells to the total surface area of the relevant zone) is about 5%, 10%, 15%, 20%, 25%, 30%, 35%, 40%, 45%, 50%, 55%, 60%, 65%, 70%, 75%, 80% or 85% (e.g., at least 5%, 10%, 15%, 20%, 25%, 30%, 35%, 40%, 45%, 50%, 55%, 60%, 65%, 70%, 75%, 80% or 85% or between 5-15%, 20-30%, 35-45%, 40-50%, 45-55%, 60-70%, 70-75%, 70-80% or 75-85%).

A17. The ophthalmic lens of any of the A examples, wherein the diameter of the plurality of light modulating cells varies between about 20 microns and about 3 mms e.g., between about 20-100 microns, 100-200 microns,. 200-300 microns, 300-400 microns, 400-500 microns, 500-600 microns, 600-700 microns, 700-800 microns, 800-900 microns, 900 microns - 1 mm, 1-1.1 mm, 1.1-1.2 mm, 1.2-1.3 mm, 1.3-1.4 mm, 1.4-1.5 mm, 1.5-1.6 mm, 1.6-1.7 mm, 1.7-1.8 mm, 1.8-1.9 mm, 1.9-2 mm, 2-2.1 mm, 2.1-2.2 mm, 2.2-2.3 mm, 2.3-2.4 mm, 2.4-2.5 mm, 2.5-2.6 mm, 2.6-2.7 mm, 2.7-2.8 mm, 2.8-2.9 mm, 2.9-3 mm).

A18. The ophthalmic lens of any of the A examples, wherein the diameter of one or more light modulating cells in the central optical zone is between about 20 microns and about 1000 microns (e.g., between about 20-60 microns, 40-80 microns,. 60-100 microns, 80-120 microns, 100-140 microns, 120-160 microns, 140-180 microns, 160-200 microns, 180-220 microns, 200-240 microns, 220-260 microns, 240-280 microns, 260-300 microns, 280-320 microns, 300-340 microns, 320-360 microns, 340-380 microns, 360-400 microns, 20-100 microns, 100-200 microns,. 200-300 microns, 300-400 microns, 400-500 microns, 500-600 microns, 600-700 microns, 700-800 microns, 800-900 microns, 900-1000 microns).

A19. The ophthalmic lens of any of the A examples, wherein the diameter of one or more light modulating cells in the mid-peripheral optical zone is between about 20 microns and about 2 mm (e.g., between about 20-100 microns, 100-200 microns,. 200-300 microns, 300-400 microns, 400-500 microns, 500-600 microns, 600-700 microns, 700-800 microns, 800-900 microns, 900 microns - 1 mm, 1-1.1 mm, 1.1-1.2 mm, 1.2-1.3 mm, 1.3-1.4 mm, 1.4-1.5 mm, 1.5-1.6 mm, 1.6-1.7 mm, 1.7-1.8 mm, 1.8-1.9 mm, 1.9-2 mm, 1-1.5 mm, 1.5-2 mm, 500 microns -1 mm, 100-500 microns).

A20. The ophthalmic lens of any of the A examples, wherein the diameter of one or more light modulating cells in the peripheral optical zone is between about 20 microns and about 3 mms (e.g., between about 20-100 microns, 100-200 microns,. 200-300 microns, 300-400 microns, 400-500 microns, 500-600 microns, 600-700 microns, 700-800 microns, 800-900 microns, 900 microns - 1 mm, 1-1.1 mm, 1.1-1.2 mm, 1.2-1.3 mm, 1.3-1.4 mm, 1.4-1.5 mm, 1.5-1.6 mm, 1.6-1.7 mm, 1.7-1.8 mm, 1.8-1.9 mm, 1.9-2 mm, 2-2.1 mm, 2.1-2.2 mm, 2.2-2.3 mm, 2.3-2.4 mm, 2.4-2.5 mm, 2.5-2.6 mm, 2.6-2.7 mm, 2.7-2.8 mm, 2.8-2.9 mm, 2.9-3 mm).

A21. The ophthalmic lens of any of the A examples, wherein the diameter of the plurality of light modulating cells in a particular optical zone may vary between the ranges described above (e.g., a first one or more of the plurality of light modulating cells has a first diameter and a second one or more of the plurality of light modulating cells has a second diameter).

A22. The ophthalmic lens of any of the A examples, wherein the plurality of light modulating cells are separated from one another (or abut one another).

A23. The ophthalmic lens of any of the A examples, wherein one or more of the plurality of light modulating cells (e.g., a first one or more of the plurality of light modulating cells and/or a second one or more of the plurality of light modulating cells) are positioned on the ophthalmic lens in a square, hexagonal or any other suitable arrangement (e.g., a repeating pattern corresponding to a square, hexagonal or any other suitable arrangement).

A24. The ophthalmic lens of any of the A examples, wherein the power of the plurality of light modulating cells varies from about -3D to +5D (e.g., about -3D, -2.5D, -2D, -1.5D, -1D, -0.5D, +0.5D, +1D, +1.5D, +2D, +2.5D, +3D, +3.5D, +4D, +4.5D, +5D) in any combination of one or more of a central optical zone, a mid-peripheral optical zone, and a peripheral optical zone.

A25. The ophthalmic lens of any of the A examples, wherein the distribution of the number of the negative power and positive power light modulating cells on the ophthalmic lens (e.g., the ratio of the number of positive power light modulating cell to negative power light modulating cells) varies from about 95/5; 90/10/, 85/15, 80/20, 75/25, 70/30, 65/35, 60/40, 55/45, 50/50, 45/55, 40/60, 35/65, 30/70, 25/75, 20/80, 15/85, 10/90, 5/95, or 0/100.

A26. The ophthalmic lens of any of the A examples, wherein one or more of the plurality of light modulating cells have a shape corresponding to at least one of a circle, oval, semi-circular, hexagonal, square or other suitable shape.

A27. The ophthalmic lens of any of the A examples, wherein the ophthalmic lens comprises a central optical zone that is substantially circular in shape, a mid-peripheral optical zone that is substantially annular in shape and located around the central optical zone, and/or a peripheral optical zone that is substantially annular in shape and located around the mid-peripheral optical zone.

A28. The ophthalmic lens of any of the A examples, wherein the plurality of light modulating cells are located in a mid-peripheral optical zone, and wherein a first one or more of the plurality of light modulating cells has a first diameter and a first power and the second one or more of the plurality of light modulating cells has a second diameter and a second power.

A29. The ophthalmic lens of example A28, wherein the first power is relatively positive than a power of the base lens and the second power is relatively negative than a power of the base lens.

A30. The ophthalmic lens of example A28, wherein the first power is relatively positive than a power of the base lens and the second power is relatively more positive than the first power and the power of the base lens.

A31. The ophthalmic lens of example A28, wherein the first power is relatively negative than a power of the base lens and the second power is relatively more negative than the first power and the power of the base lens.

A32. The ophthalmic lens of any of the A examples, wherein, the ophthalmic lens is configured to be used for correcting, slowing, reducing, and/or controlling the progression of myopia.

A33. The ophthalmic lens of any of the A examples, wherein the ophthalmic lens is a spectacle lens.

B1. An ophthalmic lens comprising: a base lens with a corresponding first image plane; and one or more light modulating zones with one or more light modulating cells; wherein light passing through the light modulating zone results in a through focus light distribution across the first image plane and one or more image planes different to the first image plane.

B2. The ophthalmic lens of example B1, wherein one or more of the plurality of light modulating cells are refractive in nature.

B3. The ophthalmic lens of example B1 to B2, wherein the one or more refractive light modulating cells have a refractive power that is zero or not different relative to the refractive power of the base lens.

B4. The ophthalmic lens of any of example B1 to B2, wherein the plurality of light modulating cells are negative in power relative to the base lens power.

B5. The ophthalmic lens of any of the example B1 to B2, wherein the plurality of light modulating cells are positive in power relative to the base lens power.

B6. The ophthalmic lens of any of the example B1 to B2, wherein one or more of the plurality of light modulating cells have more than one focal power.

B7. The ophthalmic lens of examples B1 to B6, wherein a proportion of the through focus light distribution for light transmitted through the light modulating cell zone is anterior to the first image plane.

B8. The ophthalmic lens of example B1 to B6, wherein a proportion of the through focus light distribution for light transmitted through the light modulating cell zone is posterior to the first image plane.

B9. The ophthalmic lens of examples B1 to B8, wherein a proportion of the through focus light distribution for light transmitted through the light modulating cell zone is both anterior and posterior to the first image plane.

B10. The ophthalmic lens of examples B1 to B9, wherein a proportion of the through focus light distribution that is either anterior or posterior to the first image plane is about >20%.

B11. The ophthalmic lens of examples B1 to B9, wherein a proportion of the through focus light distribution that is either anterior or posterior to the first image plane is about >30%.

B12. The ophthalmic lens of example B1, wherein one or more of the plurality of light modulating cells are diffractive in nature.

B13. An ophthalmic lens comprising: a base lens with a first power and a corresponding first image plane; one or more light modulating cell zones with a plurality of light modulating cells that are negative in power relative to first power; wherein light transmitted through the ophthalmic lens results in a through focus light distribution spread across the first image plane, one or image planes anterior to the first image plane and one or image planes posterior to the first image plane.

B14. An ophthalmic lens comprising: a base lens with a first power and a corresponding first image plane; one or more light modulating cell zones with a plurality of light modulating cells that are positive in power relative to first power wherein light transmitted through the ophthalmic lens results in a through focus light distribution spread across the first image plane, one or image planes anterior to the first image plane and one or image planes posterior to the first image plane.

B15. An ophthalmic lens for the eye of an individual comprising: a base lens comprising a first zone with a first power based on the refractive error of the eye; a second zone with a second power that is relatively positive compared to the first power; a plurality of light modulating cells on the second zone; and wherein light transmitted through the ophthalmic lens results in a through focus light distribution spread across the first image plane, one or image planes anterior to the first image plane and one or image planes posterior to the first image plane.

B16. The ophthalmic lens of example B15, wherein the second power is non-uniform across the second zone.

B17. The ophthalmic lens of example B15 to B16, wherein the non-uniform power from the inner edge to the outer edge of the second zone may comprise one or more of increasing, decreasing or non- monotonic powers.

B18. The ophthalmic lens of example B15 and B17 wherein one or more of the plurality of light modulating cells are refractive in nature.

B19. The ophthalmic lens of example B15 to B18, wherein the one or more refractive light modulating cells have a refractive power that is zero or not different relative to the refractive power of the base lens.

B20. The ophthalmic lens of any of example B15 to B19, wherein the plurality of light modulating cells are negative in power relative to the base lens power.

B21. The ophthalmic lens of any of the example B15 to B19, wherein the plurality of light modulating cells are positive in power relative to the base lens power.

C1. An ophthalmic lens configured to be used for correcting, slowing, reducing, and/or controlling the progression of myopia comprising: a base lens configured to direct light to at least a first image plane; a central optical zone that is centrally located and substantially circular in shape; a mid-peripheral optical zone that is substantially annular in shape and located around the central optical zone; a peripheral optical zone that is substantially annular in shape and located around the mid-peripheral optical zone; and a plurality of light modulating cells located in at least one or more of the central, mid-peripheral or peripheral optical zone, wherein one or more of the plurality of light modulating cells are configured to direct light to one or more image planes anterior to the first image plane; and wherein one or more of the plurality of light modulating cells are configured to direct light to one or more image planes posterior to the first image plane.

D1. An ophthalmic lens comprising: a base lens for directing light to at least a first plane; and a plurality of light modulating cells in at least one light modulating cell zone; wherein the ophthalmic lens is configured such that light transmitted through the at least one light modulating cell zone results in a through focus light distribution (TFLD) that extends to one or more additional planes in at least one of a posterior (hyperopic defocus) and/or anterior (myopic defocus) direction relative to the first plane.

D2. An ophthalmic lens comprising: a base lens; and a plurality of light modulating cells in at least one light modulating cell zone; wherein the base lens is configured to direct light to at least a first image plane and the plurality of light modulating cells are configured to direct light to one or more image planes located posteriorly (hyperopic defocus) and/or anteriorly (myopic defocus) relative to the first image plane.

D3. An ophthalmic lens comprising: a base lens; and a plurality of light modulating cells in at least one light modulating cell zone for correcting, slowing, reducing, and/or controlling the progression of eye growth by directing or shifting light to one or more planes; wherein the base lens is configured to direct light to at least a first image plane and the plurality of light modulating cells are configured to direct light to one or more image planes located posteriorly (hyperopic defocus) and/or anteriorly (myopic defocus) relative to the first image plane.

D4. The ophthalmic lens of any of the D examples, wherein the first image plane corresponds to the retinal plane.

D5. The ophthalmic lens of any of the D examples, wherein the base lens has a uniform power across the lens.

D6. The ophthalmic lens of any of the D examples, wherein the power of the base lens varies across the lens.

D7. The ophthalmic lens of any of the D examples, wherein a peripheral optical zone of the base lens is more positive in power compared to a central and/or mid-peripheral optical zone.

D8. The ophthalmic lens of any of the D examples, wherein a peripheral and a mid-peripheral optical zone of the base lens are more positive in power compared to a central optical zone.

D9. The ophthalmic lens of any of the D examples, wherein a peripheral optical zone of the base lens is more negative in power compared to the central and/or mid-peripheral optical zone.

D10. The ophthalmic lens of any of the D examples, wherein an increase in positive power from a central to mid-peripheral and/or peripheral zone is stepped or gradually increases in a monotonic or a non-monotonic manner.

D11. The ophthalmic lens of any of the D examples, wherein an increase in negative power from central to mid-peripheral and/or peripheral zone is stepped and/or gradually increases in a monotonic or a non-monotonic manner.

D12. The ophthalmic lens of any of the D examples, wherein the change in power from central to peripheral zone is across the entire base lens and/or is applied to certain regions or quadrants or sections of the lens.

D13. The ophthalmic lens of any of the D examples, wherein the base lens of the ophthalmic lens incorporates a filter and/or incorporates a phase-modifying mask (e.g., an amplitude mask).

D14. The ophthalmic lens of any of the D examples, wherein a filter is applied across the entire base lens and/or is applied to select regions or quadrants or sections of the lens.

D15. The ophthalmic lens of any of the D examples, wherein a phase-modifying mask is applied across the entire base lens and/or is applied to select regions or quadrants or sections of the lens.

D16. The ophthalmic lens of any of the D examples, wherein the ophthalmic lens further comprises one or more concentric rings or annular zones or at least a portion of a ring or annular zone or zones with one or more powers and a plurality of light modulating cells.

D17. The ophthalmic lens of any of the D examples, wherein the ophthalmic lens comprises a base lens with a phase-modifying mask and a plurality of light modulating cells.

D18. The ophthalmic lens of any of the D examples, wherein the one or more of the light modulating cells may be positioned or packed on the base lens of the ophthalmic lens either individually in arrays or arrangements, or in aggregates, arrays, stacks, clusters or other suitable packing arrangement.

D19. The ophthalmic lens of any of the D examples, wherein the individual arrangements, aggregates, arrays, stacks, or clusters of the light modulating cells is positioned on the base lens in a square, hexagonal or any other suitable arrangement (e.g., a repeating pattern corresponding to a square, hexagonal or any other suitable arrangement or any non-repeating or random arrangement) and/or centered around the geometric or optical center of the base lens and/or not centered around the geometric or optical center of the base lens.

D20. The ophthalmic lens of any of the D examples, wherein the ratio of the length of the longest (x) meridian or axis to the shortest meridian or axis (y) of at least one of the one or more light modulating cells is about 1.1, about 1.2, about 1.3, about 1.4, about 1.5, about 1.6, about 1.7, about 1.8, about 1.9 and about 2.0.

D21. The ophthalmic lens of any of the D examples, wherein the sagittal depth of the light modulating cells varies from about 20nm to about 1mm, from about 20nm to about 500µm. , from about 20nm to about 400µm, from about 20nm to about 300µm, from about 20nm to about 200µm, from about 20nm to about 100µm, from about 20nm to about 50µm.

D22. The ophthalmic lens of any of the D examples, wherein the one or more light modulating cells is arranged such that either one of the principal meridians or axes or the longest meridian of the light modulating cells is lined parallel to one another or may be aligned radially or may be lined circumferentially or in any suitable geometric arrangement (e.g., a triangular arrangement or a square or a rectangle or a hexagon).

D23. The ophthalmic lens of any of the D examples, wherein the light modulating cells comprise a phase-modifying mask such as an amplitude mask, binary amplitude mask, phase-mask, or kinoform, or binary phase-mask, or phase-modifying surfaces such as meta-surface or nanostructures.

D24. The ophthalmic lens of any of the D examples, wherein a light phase of the one or more light modulated cells is modulated (e.g., an outer region of the light modulating cell represents the region where the light phase has been modulated for example, by pi/2, pi, 3.pi/2, or between 0 and pi/2, between pi/2 and pi, between pi and 3.pi/2 or between 3.pi/2 and 2.pi; an inner white circle represents a second region of the light modulating cell for which the light phase has been modulated to be different from the phase of the first region; and/or an intermediate grey circle represents a third region of the light modulating cell for which the light phase has been modulated to be different from the phase of the first and/or the second region.

D25. The ophthalmic lens of any of the D examples, wherein the size, density per square mm and the packing arrangement of the light modulating cells may be uniform across the zones or vary across the zones (e.g., the density of the light modulating cells is greater or less in the peripheral zone compared to the mid-peripheral zone).

D26. The ophthalmic lens of any of the D examples, wherein the distribution of the substantially positive powered, substantially negative powered ,multifocal light modulating cells and light modulating cells with phase modifying masks across one or more zones of the ophthalmic lens (e.g., the ratio of the number of positive powered light modulating cells to negative powered to multifocal light modulating cells) varies in equal or unequal proportions.

D27. The ophthalmic lens of any of the D examples, wherein lens designers and clinicians may use the light modulating cell geometrical distribution and/or fill factor as a guide to clinical performance of the ophthalmic lens including myopia control efficacy, vision and wearability.

D28. The ophthalmic lens of any of the D examples, wherein the geometrical fill ratio of the light modulating cells to the total surface area of the base lens of the ophthalmic lens (e.g., ratio of the total surface area of the light modulating cells to the total surface area of the ophthalmic lens) is about 5%, about 10%, about 15%, about 20%, about 25%, about 30%, about 35%, about 40%, about 45%, about 50%, about 55%, about 60%, about 65%, about 70%, about 75%, about 80% or about 85% , at least 5%, at least 10%, at least 15%, at least 20%, at least 25%, at least 30%, at least 35%, at least 40%, at least 45%, at least 50%, at least 55%, at least 60%, at least 65%, at least 70%, at least 75%, at least 80% or at least 85% or between 5-15%, 20-30%, 35-45%, 40-50%, 45-55%, 60-70%, 70-75%, 70-80% or 75-85%.

D29. The ophthalmic lens of any of the D examples, wherein the surface area corresponding to the central optical zone does not comprise light modulating cells or does comprise a plurality of light modulating cells.

D30. The ophthalmic lens of any of the D examples, wherein the geometrical fill ratio of the light modulating cells to the surface area corresponding to the central optical zone is about 5%, about 10%, about 15%, about 20%, about 25%, about 30%, about 35%, about 40%, about 45%, about 50%, about 55%, about 60%, about 65%, about 70%, about 75%, about 80% or about 85% , at least 5%, at least 10%, at least 15%, at least 20%, at least 25%, at least 30%, at least 35%, at least 40%, at least 45%, at least 50%, at least 55%, at least 60%, at least 65%, at least 70%, at least 75%, at least 80% or at least 85% or between 5-15%, 20-30%, 35-45%, 40-50%, 45-55%, 60-70%, 70-75%, 70-80% or 75-85%.

D31. The ophthalmic lens of any of the D examples, wherein the geometrical fill ratio of the light modulating cells to the surface area corresponding to the peripheral optical zone is about 5%, about 10%, about 15%, about 20%, about 25%, about 30%, about 35%, about 40%, about 45%, about 50%, about 55%, about 60%, about 65%, about 70%, about 75%, about 80% or about 85% , at least 5%, at least 10%, at least 15%, at least 20%, at least 25%, at least 30%, at least 35%, at least 40%, at least 45%, at least 50%, at least 55%, at least 60%, at least 65%, at least 70%, at least 75%, at least 80% or at least 85% or between 5-15%, 20-30%, 35-45%, 40-50%, 45-55%, 60-70%, 70-75%, 70-80% or 75-85%.

D32. The ophthalmic lens of any of the D examples, wherein the ophthalmic lens incorporates one or more light modulating cells to provide a TFLD wherein the ratio of light that is distributed in myopic defocus compared to hyperopic defocus is about < 1.0, about <0.9, about <0.8, about <0.7, about <0.6, about <0.5, about <0.4, about <0.3, about <0.2, about <0.1.

D33. The ophthalmic lens of any of the D examples, wherein the ophthalmic lens incorporates one or more light modulating cells to provide a TFLD wherein the ratio of light that is distributed in myopic defocus compared to hyperopic defocus is about > 1.0, about >1.1, about >1.2, about >1.3, about >1.4, about >1.5, about >1.6, about >1.7, about >1.8, about >1.9.

D34. The ophthalmic lens of any of the D examples, wherein the ophthalmic lens incorporates light modulating cells to provide a TFLD with no substantial hyperopic defocus.

D35. The ophthalmic lens of any of the D examples, wherein the ophthalmic lens incorporates light modulating cells to provide to provide a TFLD with no substantial myopic defocus.

D36. The ophthalmic lens of any of the D examples, wherein the ophthalmic lens has a geometrical fill factor such that about 75% of light is directed to the retinal image plane and about 25% of the light is directed to the plane anterior to the retinal image plane (myopic defocus) by the light modulating cells.

D37. The ophthalmic lens of any of the D examples, wherein the ophthalmic lens comprises light modulating cells with a geometrical fill factor that is designed so the peak amplitude of defocused light anterior to the image plane is substantially greater, somewhat greater, substantially similar to, somewhat less, substantially less than the amplitude of defocused light posterior to the image plane.

D38. The ophthalmic lens of any of the D examples, wherein the distance of the peak amplitude of the light directed to in front of the image plane is positioned substantially closer to the image plane than the distance of the peak amplitude of the light directed posterior to the image plane.

D39. The ophthalmic lens of any of the D examples, wherein the TFLD, at least in part, forms an aperiodic and non-monotonic amplitude of myopically defocused light, hyperopically defocused light or both.

D40. The ophthalmic lens of any of the D examples, wherein the light amplitude of any continuous band of defocused light is at least about 20% of the total light amplitude, about 25%, about 30%, about 40 % , about 50%, about 60%, about 70%, about 80%, about 10% to 50%, about 10% to 40%, about 10% to 30% or about 10% to 20% .

D41. The ophthalmic lens of any of the D examples, wherein the peak amplitude of the TFLD anterior to the image plane (or in front or in myopic defocus) is about 50% of all light directed anterior to the retinal plane, is substantially >50%, somewhat >50%, or <50%.

D42. The ophthalmic lens of any of the D examples, wherein the peak amplitude of the TFLD posterior to the retinal plane (or behind or in hyperopic defocus) is about 50% of all light directed posterior to the retinal plane, is substantially >50%, somewhat >50%, or <50%.

D43. The ophthalmic lens of any of the D examples, wherein the amplitude of the TFLD anterior to the retinal plane (or in front or in myopic defocus) and within 1.00D of the retinal plane is about < 10%, or about < 20%, or about <30% or about < 50% of the total light in front of the retinal plane.

D44. The ophthalmic lens of any of the D examples, wherein the amplitude of the TFLD posterior to the retinal plane (or behind or in hyperopic defocus) and within 1.00D of the retinal plane is about < 10%, or about < 20%, or about <30% or about < 50% of the total light behind the retinal plane.

D55. An ophthalmic lens comprising: a base lens comprising at least a central optical zone and a peripheral optical zone, the base lens being configured to direct light to at least a first plane; and a plurality of light modulating cells located on the surface of at least the peripheral optical zone of the base lens and configured for correcting, slowing, reducing, and/or controlling the progression of eye growth by directing or shifting light to one or more planes; wherein the ophthalmic lens is configured such that light transmitted through the ophthalmic lens results in a through focus light distribution (TFLD) that extends in at least one of a posterior (hyperopic defocus) or anterior (myopic defocus) direction to one or more additional planes.

E1. An ophthalmic lens comprising: a base lens configured to direct light to at least a first plane; and one or more light modulating cell zones comprising a plurality of light modulating cells located in at least one of a surface or embedded in the base lens of any combination of one or more of a central optical zone, a mid-peripheral optical zone and a peripheral optical zone of the base lens and configured for directing or shifting light to one or more planes; wherein light transmitted through the one or more light modulating cell zones results in a through focus light distribution (TFLD) that extends to one or more additional planes in at least one of a posterior (hyperopic defocus) and/or anterior (myopic defocus) direction relative to the first plane.

E2. The ophthalmic lens of any of the E examples, wherein the one or more light modulating cell zones are configured to direct light to one or more planes located posteriorly (hyperopic defocus) to the first plane and one or more planes located anteriorly (myopic defocus) to the first image plane.

E3. The ophthalmic lens of any of the E examples, wherein the plurality of light modulating cells are at least one of refractive and/or diffractive in nature.

E4. The ophthalmic lens of any of the E examples, wherein the sagittal depth of the light modulating cells varies from about 20nm to about 1mm, from about 20nm to about 500µm. , from about 20nm to about 400µm, from about 20nm to about 300µm, from about 20nm to about 200µm, from about 20nm to about 100µm, and/or from about 20nm to about 50µm.

E5. The ophthalmic lens of any of the E examples, wherein the light modulating cells are at least one of plano in power, and/or positive in power, and/or negative in power and/or has a plurality of powers.

E6. The ophthalmic lens of any of the E examples, wherein the proportion of TFLD that is anterior to the first image plane is >20% of the light transmitted through the one or more light modulating cell zones.

E7. The ophthalmic lens of any of the E examples, wherein the proportion of TFLD that is posterior to the first image plane is >20% of the light transmitted through the one or more light modulating cell zones.

E8. The ophthalmic lens of any of the E examples, wherein the one or more light modulating cell zones incorporating one or more light modulating cells is configured to provide a TFLD wherein the ratio of light that is distributed in myopic defocus compared to hyperopic defocus is about < 1.0, about <0.9, about <0.8, about <0.7, about <0.6, about <0.5, about <0.4, about <0.3, about <0.2, about <0.1.

E9. The ophthalmic lens of any of the E examples, wherein the one or more light modulating cell zones incorporating one or more light modulating cells is configured to provide a TFLD wherein the ratio of light that is distributed in myopic defocus compared to hyperopic defocus is about > 1.0, about >1.1, about >1.2, about >1.3, about >1.4, about >1.5, about >1.6, about >1.7, about >1.8, about >1.9.

E10. The ophthalmic lens of any of the E examples, wherein the one or more light modulating cell zones incorporating one or more light modulating cells is configured to provide a TFLD with no substantial hyperopic defocus.

E11. The ophthalmic lens of any of the E examples, wherein one or more light modulating cell zones incorporating one or more light modulating cells is configured to provide to provide a TFLD with no substantial myopic defocus.

E12. The ophthalmic lens of any of the E examples ms, wherein the light modulating cell zones have a geometrical fill factor that is designed so the peak amplitude of defocused light anterior to the image plane is substantially greater, somewhat greater, substantially similar to, somewhat less, and/or substantially less than the amplitude of defocused light posterior to the image plane.

E13. The ophthalmic lens of any of the E examples, wherein the distance of the peak amplitude of the light directed to in front of the image plane is positioned substantially closer to the image plane than the distance of the peak amplitude of the light directed posterior to the image plane.

E14. The ophthalmic lens of any of the E examples, wherein the TFLD, at least in part, forms an aperiodic and non-monotonic amplitude of myopically defocused light, hyperopically defocused light or both.

E15. The ophthalmic lens of any of the E examples, wherein the light amplitude of any band of defocused light is at least about 20% of the total light amplitude, about 25%, about 30%, about 40 % , about 50%, about 60%, about 70%, about 80%, about 10% to 50%, about 10% to 40%, about 10% to 30% or about 10% to 20% .

E16. The ophthalmic lens of any of the E examples, wherein the peak amplitude of the TFLD anterior to the image plane (or in front or in myopic defocus) is about 50% of all light directed anterior to the retinal plane, is substantially >50%, somewhat >50%, or <50%.

E17. The ophthalmic lens of any of the E examples, wherein the peak amplitude of the TFLD posterior to the retinal plane (or behind or in hyperopic defocus) is about 50% of all light directed posterior to the retinal plane, is substantially >50%, somewhat >50%, or <50%.

E18. The ophthalmic lens of any of the E examples, wherein the amplitude of the TFLD anterior to the retinal plane (or in front or in myopic defocus) and within 1.00D of the retinal plane is about < 10%, or about < 20%, or about <30% or about < 50% of the total light in front of the retinal plane.

E19. The ophthalmic lens of any of the E examples, wherein the amplitude of the TFLD posterior to the retinal plane (or behind or in hyperopic defocus) and within 1.00D of the retinal plane is about < 10%, or about < 20%, or about <30% or about < 50% of the total light behind the retinal plane.

E20. The ophthalmic lens of any of the E examples, wherein the power of the base lens varies across the lens.

E21. The ophthalmic lens of any of the E examples, wherein a peripheral optical zone of the base lens is more positive or more negative in power compared to the central and/or a mid-peripheral optical zone.

E22. The ophthalmic lens of any of the E examples, wherein a peripheral and a mid-peripheral optical zone of the base lens are more positive in power compared to a central optical zone.

E23. The ophthalmic lens of any of the E examples, wherein the change in power from central to mid-peripheral and/or peripheral zone is stepped or gradually increases in a monotonic or a non-monotonic manner.

E24. The ophthalmic lens of any of the E examples, wherein a change in power from central to peripheral zone is across the entire base lens and/or is applied to certain regions or quadrants or sections of the lens.

E25. The ophthalmic lens of any of the E examples, wherein the base lens of the ophthalmic lens incorporates a filter and/or incorporates a phase-modifying mask (e.g., an amplitude mask).

E26. The ophthalmic lens of any of the E examples, wherein a filter is applied across the entire base lens and/or is applied to select regions or quadrants or sections of the lens.

E27. The ophthalmic lens of any of the E examples, wherein a phase-modifying mask is applied across the entire base lens and/or is applied to select regions or quadrants or sections of the lens.

E28. The ophthalmic lens of any of the E examples, wherein the ophthalmic lens further comprises one or more concentric rings or annular zones or at least a portion of a ring or annular zone or zones with one or more powers and a plurality of light modulating cells.

E29. The ophthalmic lens of any of the E examples, wherein the one or more of the light modulating cells may be positioned or packed on one or more zones of the base lens either individually or in arrays or arrangements, or in aggregates, or stacks, or clusters or other suitable packing arrangement.

E30. The ophthalmic lens of any of the E examples, wherein the individual arrangements, aggregates, arrays, stacks, or clusters of the light modulating cells is positioned on the base lens in a square, hexagonal or any other suitable arrangement (e.g., a repeating pattern corresponding to a square, hexagonal or any other suitable arrangement or any non-repeating or random arrangement) and/or centered around the geometric or optical center of the base lens and/or not centered around the geometric or optical center of the base lens.

E31. The ophthalmic lens of any of the E examples, wherein the ratio of the length of the longest (x) meridian or axis to the shortest meridian or axis (y) of at least one of the one or more light modulating cells is about 1.1, about 1.2, about 1.3, about 1.4, about 1.5, about 1.6, about 1.7, about 1.8, about 1.9 and about 2.0.

E32. The ophthalmic lens of any of the E examples, wherein the one or more light modulating cells is arranged such that either one of the principal meridians or axes or the longest meridian of the light modulating cells is lined parallel to one another or may be aligned radially or may be lined circumferentially or in any suitable geometric arrangement (e.g., a triangular arrangement or a square or a rectangle or a hexagon).

E33. The ophthalmic lens of any of the E examples, wherein the one or more light modulating cells comprise a phase-modifying mask such as an amplitude mask, binary amplitude mask, phase-mask, or kinoform, or binary phase-mask, or phase-modifying surfaces such as meta-surface or nanostructures.

E34. The ophthalmic lens of any of the E examples, wherein a light phase of the one or more light modulated cells is modulated (e.g., an outer region of the light modulating cell represents the region where the light phase has been modulated for example, by pi/2, pi, 3.pi/2, or between 0 and pi/2, between pi/2 and pi, between pi and 3.pi/2 or between 3.pi/2 and 2.pi; an inner white circle represents a second region of the light modulating cell for which the light phase has been modulated to be different from the phase of the first region; and/or an intermediate grey circle represents a third region of the light modulating cell for which the light phase has been modulated to be different from the phase of the first and/or the second region.

E35. The ophthalmic lens of any of the E examples, wherein any combination of one or more of the size, density per square mm and/or the packing arrangement of the light modulating cells is uniform across the zones or vary across the zones (e.g., the density of the light modulating cells is greater or less in the peripheral zone compared to the mid-peripheral zone).

E36. The ophthalmic lens of any of the E examples, wherein lens designers and clinicians may use the light modulating cell geometrical distribution and/or fill factor as a guide to clinical performance of the ophthalmic lens including any combination of one or more of myopia control efficacy, vision and wearability.

E37. The ophthalmic lens of any of the E examples, wherein the surface area corresponding to the central optical zone does not comprise light modulating cells or does comprise a plurality of light modulating cells.

E38. The ophthalmic lens of any of the E examples, wherein the geometrical fill ratio of the light modulating cells in the central optical zone to the surface area corresponding to the central optical zone is about 5%, about 10%, about 15%, about 20%, about 25%, about 30%, about 35%, about 40%, about 45%, about 50%, about 55%, about 60%, about 65%, about 70%, about 75%, about 80% or about 85% , at least 5%, at least 10%, at least 15%, at least 20%, at least 25%, at least 30%, at least 35%, at least 40%, at least 45%, at least 50%, at least 55%, at least 60%, at least 65%, at least 70%, at least 75%, at least 80% or at least 85% or between 5-15%, 20-30%, 35-45%, 40-50%, 45-55%, 60-70%, 70-75%, 70-80% or 75-85%.

E39. The ophthalmic lens of any of the E examples, wherein the geometrical fill ratio of the light modulating cells in the peripheral optical zone and/or the mid-peripheral optical zone to the surface area corresponding to the peripheral optical zone and/or the mid-peripheral optical zone is about 5%, about 10%, about 15%, about 20%, about 25%, about 30%, about 35%, about 40%, about 45%, about 50%, about 55%, about 60%, about 65%, about 70%, about 75%, about 80% or about 85% , at least 5%, at least 10%, at least 15%, at least 20%, at least 25%, at least 30%, at least 35%, at least 40%, at least 45%, at least 50%, at least 55%, at least 60%, at least 65%, at least 70%, at least 75%, at least 80% or at least 85% or between 5-15%, 20-30%, 35-45%, 40-50%, 45-55%, 60-70%, 70-75%, 70-80% or 75-85%.

E40. An ophthalmic lens comprising: a baselens with a front and a rear surface configured to direct light to at least a first image plane; one or more light modulating cell zones on or in the base lens, the one or more light modulating cell zones comprising a plurality of light modulating cells positioned in a specific configuration; wherein any combination of one or more of the geometrical arrangement, fill factor ratio, diameter, sagittal depth, curvature, power and cell to cell spacing of the light modulating cells are configured such light transmitted through the light modulating cell zone results in a through focus light distribution that is directed to a plurality of planes located anteriorly and/or posteriorly relative to the first image plane.

E41. A method for designing/manufacturing an ophthalmic lens comprising: selecting a base lens having a power profile and configured to direct light to at least a first plane; determining to locate one or more light modulating cell zones in any combination of one or more of a central optical zone, a mid-peripheral optical zone and/or a peripheral optical zone of the base lens, the one or more light modulating cell zone comprising a plurality of light modulating cells, the light modulating cells located in at least one of a surface or embedded in the base lens; utilizing any combination of one or more of a geometrical arrangement, fill factor ratio, light modulating cell diameter, light modulating cell sagittal depth, light modulating cell curvature, light modulating cell power and cell to cell spacing of the light modulating cells to configure the ophthalmic lens such that light transmitted through the one or more light modulating cell zones results in a through focus light distribution (TFLD) extends to one or more additional planes in at least one of a posterior (hyperopic defocus) and anterior (myopic defocus) direction relative to the first plane.

It will be understood that the embodiments disclosed and defined in this specification extends to all alternative combinations of two or more of the individual features mentioned or evident from the text or drawings. All of these different combinations constitute various alternative aspects of the present disclosure.

The foregoing outlines features of several embodiments so that those skilled in the art may better understand the aspects of the present disclosure. Those skilled in the art should appreciate that they may readily use the present disclosure as a basis for designing or modifying other processes and structures for carrying out the same purposes and/or achieving the same advantages of the embodiments introduced herein. Those skilled in the art should also realize that such equivalent constructions do not depart from the spirit and scope of the present disclosure, and that they may make various changes, substitutions, and alterations herein without departing from the spirit and scope of the present disclosure.

## Claims

1. A spectacle lens (2) for a myopic eye comprising:
a base lens (322); and
a plurality of refractive lenslets (2f) formed on or embedded or interlayered in the base lens (322),
wherein:
the base lens (322) has a refractive power to direct light to a first image plane (7a);
the plurality of refractive lenslets are one of: a) aspheric, b) multifocal, or c) aspheric and multifocal, to provide a variable power;
the plurality of refractive lenslets comprise at least a first plurality of lenslets and a second plurality of lenslets;
the first plurality of lenslets refract light to a plurality of second image planes (7b), comprising image planes that are anteriorly focused relative to the first image plane (7a); and
the second plurality of lenslets refract light to a plurality of third image planes (7b), comprising image planes that are anteriorly focused relative to the first image plane (7a) and the second image planes.

2. The spectacle lens (2) of claim 1, wherein the variable power of at least one of the lenslets (2f) is a power that varies by:
at least or more than +3 diopters, or
at least +3.5 diopters, or
+3.5 diopters up to +5 diopters, or
wherein at least one of the lenslets has a variable power comprising one or more power values selected from about +0.5 diopters, about +1 diopter, about +1.5 diopters, about +2 diopters, about +2.5 diopters, about +3 diopters, about +3.5 diopters, about +4 diopters, about +4.5 diopters and about +5 diopters, or
wherein the plurality of refractive lenslets are multifocal, or aspheric and multifocal, to provide the variable power and one or more of the lenslets includes more than one power ranging from about -3D to about +5D (e.g., about -3D, -2.5D, -2D, -1.5D,-1ID, - 0.5D, 0.00, +0.5D, +1D, +1.5D, +2 D, +2.5D, +3D, +3.5D, +4D, +4.5D, +5D).

3. The spectacle lens (2) of claim 1 or claim 2, wherein the plurality of lenslets (2f) comprise a power more positive than the base lens (322) in an annular zone of the lenslet and a power more positive in power than the annular zone in a central zone of the lenslet and wherein the central zone has a first curved surface profile and the annular zone has a second curved surface that meets the first curved surface at a transition between the central zone and the annular zone.

4. The spectacle lens (2) of any one of claims 1 to 3, wherein a combined power of the base lens (322) and a lenslet (2f) of the plurality of lenslets is 0.00 D or less or between 0.00 D and -1.50 D.

5. The spectacle lens (2) of any one of claims 1 to 4, wherein at least one lenslet (2f) within a radius of 15 mm has a power of about +3.5D or +4D and at least one lenslet (2f) outside of the radius of 15 mm and inside of a radius of 30 mm has a power of about +4.5D or +5D.

6. The spectacle lens (2) of any one of claims 1 to 5, wherein the plurality of lenslets (2f) are circular in shape and have a diameter from 20 microns to 3 mm, more preferably between 1 mm and 1.2 mm.

7. The spectacle lens (2) of any one of claims 1 to 6, wherein the plurality of lenslets (2f) are not cylindrical or toric lenslets.

8. The spectacle lens (2) of any one of claims 1 to 7, wherein the power variation of at least one of the lenslets (2f) is a power varying from about +0.0D to about +4.5D or +5D.

9. The spectacle lens (2) of any one of claims 1 to 7, wherein the power variation of at least one of the lenslets (2f) is a power varying from about +0.0D to about +3.0D or +3.5D.

10. The spectacle lens (2) of any one of claims 1 to 9, wherein a fill ratio of lenslets (2f) to the surface area of the spectacle lens (2) outside of the central optical zone (2c) to a diameter of 30 mm is 45-55%.

11. The spectacle lens (2) of any one of claims 1 to 10, wherein at least a portion of the plurality of lenslets (2f) are concave in surface shape as compared to the surrounding surface area.

12. The spectacle lens (2) of any one of claims 1 to 11, wherein at least two of the plurality of lenslets (2f) abut each other.

13. The spectacle lens (2) of any one of claims 1 to 12, wherein the spectacle lens (2) comprises a central optical zone (2c) circular in shape and having a radius from 1.5 mm to 5 mm, wherein the central optical zone (2c) is formed by the base lens (322), without any lenslets (2f).

14. A method for correcting, slowing, reducing and/or controlling the progression of myopia in a person, the method comprising use by the person of a spectacle lens (2) to direct incident light to be focussed at more than one image plane, the image planes comprising at least:
a first image plane (7a) corresponding to a retinal location of the person;
a first plurality of image planes (7b) that are anteriorly focused relative to the first image plane (7a);
a second plurality of image planes (7b) that are anteriorly focused relative to the first image plane (7a) and the first plurality of image planes;
wherein:
the direction of incident light to be focused at the first image plane (7a) is by a base lens (322) of the spectacle lens (2);
the direction of incident light to be focused at the first plurality of image planes (7b) that are anteriorly focused relative to the first image plane (7a) is by one or more first lenslets (2f) formed on or embedded in or interlayered in the base lens (322);
the direction of incident light to be focused at the second plurality of image planes (7b) that are anteriorly focused relative to the first image plane (7a) and the first plurality of image planes is by one or more second lenslets (2f) formed on or embedded in or interlayered in the base lens (322).

15. The method of claim 14 wherein the spectacle lens is a lens of any one of claims 1 to 13.
